(19) Europäisches Patentamt / European Patent Office / Office européen des brevets

(11) **EP 3 138 892 A1**

(12) **EUROPEAN PATENT APPLICATION**


(43) Date of publication:
**08.03.2017 Bulletin 2017/10**

(21) Application number: **15306358.1**

(22) Date of filing: **03.09.2015**

(51) Int Cl.:
*C10G 1/06* (2006.01)
*B01J 23/881* (2006.01)
*B01J 23/883* (2006.01)
*C10G 45/04* (2006.01)
*C10G 49/02* (2006.01)
*C10G 3/00* (2006.01)
*B01J 35/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**



(71) Applicants:
- **Synthopetrol**
  **75008 Paris (FR)**
- **Centre National de la Recherche Scientifique**
  **75794 Paris Cedex 16 (FR)**
- **Ecole Superieure De Chimie Physique Electronique De Lyon**
  **69616 Villeurbanne Cedex (FR)**
- **Université Claude Bernard Lyon 1**
  **69622 Villeurbanne, Cedex (FR)**

(72) Inventors:
- **WALTER, Jean-Jacques**
  **75006 Paris (FR)**
- **SANTINI-SCAMPUCCI, Catherine**
  **69660 Collonges au Mont d'Or (FR)**
- **LARABI, Chérif**
  **69100 Villeurbanne (FR)**
- **AL MAKSOUD, Walid**
  **69100 Villeurbanne (FR)**

(74) Representative: **Grosset-Fournier, Chantal Catherine et al**
**Grosset-Fournier & Demachy**
**54, rue Saint-Lazare**
**75009 Paris (FR)**


(54) **USE OF MULTIFUNCTIONAL MAGNETIC CATALYSTS FOR THE TRANSFORMATION OF BIOMASS**


(57) The present invention relates to the use of a heterogeneous solid catalyst comprising or consisting of a metal complex linked by covalent bonds and / or by Van der Waals type interactions on a magnetic carrier for the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel.


Figure 44

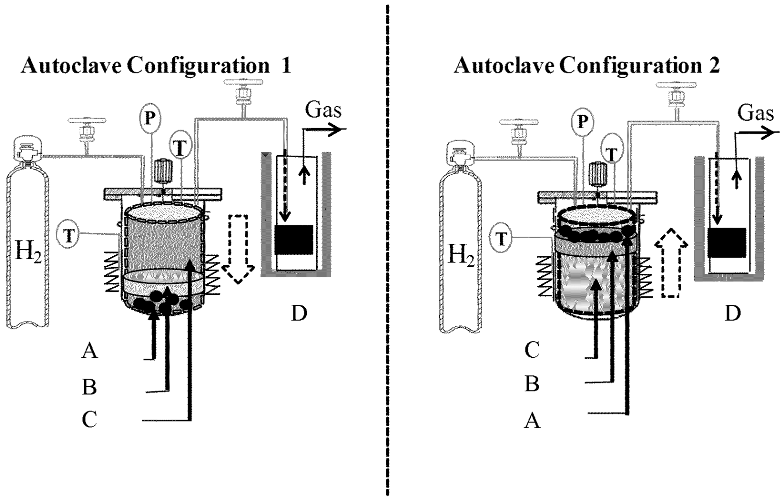


EP 3 138 892 A1

## Description

The present invention relates to the use of multifunctional magnetic catalysts for the biomass transformation.

In order to transform the matter through a catalytic reaction on an industrial scale, i.e. at a very competitive operating cost, the catalyst must be recycled at least 1000 times, which is only possible if the loss of catalyst or its activity during each cycle is lower than 0.1%. It is generally the case when a fixed bed reactor is used and the catalyst is in a form of small granulate (a few millimeters), where the reactants are fluids (gas or liquids) passing through the catalyst bed. It is quite different when the catalyst is a powder mixed with sawdust. Indeed, after the catalytic reaction, the catalyst is mixed with the tar (heavy grades of bio-oil) and charcoal (residues). The coal and tar can be removed by combustion, before the catalyst-reutilization. However, after this cleaning operation the catalyst still contains ashes. These are in the form of very fine powder of the order of micron. The separation of the catalyst from the ash particles with a high recovery rate of the catalyst ca. 99.9% is difficult to achieve.

If no further treatment is applied to the catalyst and ashes mixture and if the number of cycle is low (~ 10), the catalytic activity is poorly affected. However, for a high number of catalytic cycles, *ca.* several hundred catalytic cycles, the amount of ashes accumulate on the surface of the catalyst, becoming very important and therefore affecting the accessibility of the active species. The result is a deactivation of the catalyst.

An extraction of the ashes by washing the catalyst with distilled water or acidified water to dissolve the inorganic salts composed by the ashes results in new working procedures leading to an increase of waste and a loss of a small amount of catalyst. In addition, some of the ashes are not soluble or require basic conditions while a basic treatment can affect the activity of the catalyst. Therefore this method helps the improvement of the recyclability of the catalyst but not in a sufficient way.

A usual method to separate particles of different sizes is the sieving. To get an efficient sieving, the catalysts must be in the form of pebbles with a much greater size than the other particles to separate. The usual industrial sieving is carried out by using, as catalyst, extruded or mesh size alumina or zeolites, usually in cylindrical, cubic or spherical forms of one or two millimeters in diameter or approximately four millimeters long. These supports of the catalyst are functionalized by impregnation with MM', M = Mo, W, V, etc... M'= Ni, Co, Zn, etc..., forming particles of a pebble form. However, these pebbles do not solve the problem of recycling since the wood powder is mixed with the catalyst. Particularly, this mixture has to be stirred causing an abrasion and therefore an erosion of the brittle catalyst particles. The size of the catalyst particles is thus falling in the range of one micron, reaching the same size order than the ashes. But to use the catalyst more than 1000 times, the loss at each use must be lower than 0.1% which is not possible if the abraded catalyst particles are not recovered. The sieving method is therefore not efficient in this case.

To minimize the abrasion induced by the mechanical stirring, a fluidized bed could be considered. However, several physicochemical challenging problems are involved and need to be taken into account. A fluidized bed process under high-pressure, i. e. more than 20 bars and up to 40 bars, would not be an easy task. In practice, this approach needs to be studied, developed, constructed, tested, controlled and validated before any catalytic attempt to convert biomass could be analyzed. It seems extremely difficult to design, and will probably be very expensive. Another issue is the contact time of the gases originated from the thermal decomposition of wood and the catalyst. This would probably be too short to carry out all the catalytic reactions involved in the biofuel production from the biomass conversion (hydrogenation, hydro-oxygenation, decarbonylation, decarboxylation, etc...). Moreover, it would be very difficult to have alumina pellets or zeolites floating at the same level than the wood powder due to their large density difference.

The use of magnetic catalysts is known either to separate the catalyst from the reaction medium where it is formed, or to separate the catalyst from the substrate on which it reacts from the reaction products. In these cases, a magnet is used to carry out the aforementioned separation.

Biofuels are produced either by a biochemical (bioethanol) or thermochemical pathway. The cost of biofuels originated from biochemical pathway is much higher compared to those produced from the thermochemical conversion. Three strategies exist for the refinement of biomass, including syn-gas production by gasification, bio-oil production by pyrolysis or liquefaction and hydrolysis of biomass to produce sugar monomer units (G. Centi, P. Lanzafame, S. Perathoner, Catal. Today. 167 (2011) 14-30; H. de Lasa, E. Salaices, J. Mazumder, R. Lucky, Chem. Rev. 111 (2011) 5404-5433; F. Melligan, K. Dussan, R. Auccaise, E.H. Novotny, J.J. Leahy, M.H.B. Hayes, W. Kwapinski, Bioresour. Technol. 108 (2012) 258-263; K. Murata, Y.Y. Liu, M. Inaba, I. Takahara, J. Anal. Appl. Pyrolysis. 94 (2012) 75-82). The syn-gas production can be used to produce hydrocarbons (diesel or gasoline) *via* a Fischer Tropsch process, methanol, and other fuels (G. Centi, P. Lanzafame, S. Perathoner, Catal. Today. 167 (2011) 14-30; P. Basu, Biomass Gasification and Pyrrolysis, Pratical design and theory, 1st ed., Elsevier, Oxford, 2010; F.F. Min, M.X. Zhang, Y. Zhang, Y. Cao, W.P. Pan, J. Anal. Appl. Pyrolysis. 92 (2011) 250-257). Other routes involve a pretreatment of the biomass, with the aim of drying, separating and/or depolymerizing the lignocellulosic components to facilitate the subsequent treatments (D.A. Fort, R.C. Remsing, R.P. Swatloski, P. Moyna, G. Moyna, R.D. Rogers, Green Chem. 9 (2007) 63-69). Bio-oils must be upgraded to be used as transportation fuels. Their initial oxygen content can be as high as 50 wt%, although hydrocarbons with less than 5 wt% oxygen are needed for fuel applications and can be achieved by catalysis (G. Centi,

P. Lanzafame, S. Perathoner, Catal. Today. 167 (2011) 14-30; Y.-C. Lin, G.W. Huber, Energy Environ. Sci. 2 (2009) 68-80; R. Rinaldi, F. Schüth, Energy Environ. Sci. 2 (2009) 610-626; D. Shen, R. Xiao, S. Gu, K. Luo, RSC Adv. 1 (2012) 1641-1660). Hydrotreatment of bio-oils increases the fuel energy content and the stability (eliminating polymerisable entities) as well as the volatility of the fuel. The viscosity of the resulting liquid is also reduced due to the removal of oxygen and lowering of the molecular mass. The hydrogen needed for the hydrotreatment can be produced from the biomass itself in an integrated bio-refinery (Y. Wang, I. Nkurikiyimfura, Z. Pan, Chem. Eng. Commun. 202 (2015) 616-621).

Fast and slow pyrolysis are promising strategies to convert biomass into chemicals including aromatic compounds and biofuels. A slow biomass pyrolysis leads to the formation of a liquid phase, up to 40 wt% of biochar and more than 10 wt% of gas. Bio-oils produced from fast pyrolysis are characterized by their high oxygen and water contents, requiring therefore a further stabilization and hydro-processing before their use as biofuel (E. Alsbou, B. Helleur, Energy Fuels. 28 (2014) 3224-3235; K. Crombie, O. Masek, Bioresour. Technol. 162 (2014) 148-156; Q. Dang, C. Yu, Z. Luo, Fuel. 131 (2014) 36-42). Recent development in the field of heterogeneous catalysis aiming at upgrading the oil obtained by fast pyrolysis is well reviewed by Ruddy A. *et al.* (D.A. Ruddy, J.A. Schaidle, J.R. Ferrell, III, J. Wang, L. Moens, J.E. Hensley, Green Chem. 16 (2014) 454-490) in which various heterogeneous catalysts are reported such as transition metal oxide or sulfide, supported noble metal nanoparticles and alternatives metal carbide, nitride and phosphide. With the same aim, our group has developped a novel approach based on catalytic slow hydro-pyrolysis of solid lignocellulosic biomass. The process leads to the formation of 60 wt% of liquid phase composed of 30 wt% of organics fraction containing less than 3 wt% of oxygen and 30 wt% of aqueous fraction with only 2 wt% of carbon (W. Al Maksoud, C. Larabi, A. Garron, K.C. Szeto, J.J. Walter, C.C. Santini, Green Chem. 16 (2014) 3031-3038). The direct transformation process of lignocellulosic biomass into biofuel, involves first a controlled decomposition of the polymeric structure, followed by deoxygenation reaction through decarbonylation, decarboxylation, cracking or hydrocracking, hydrogenation and hydrodeoxygenation mechanisms. Thus, there was a need for multifunctional catalyst that contains one or more transition metal dispersed on a suitable support. And to enable the catalytic activity of the different species of the multifunctional catalyst in a synergistic way, their number, distances, physical and chemical environment had to be tuned (C. Larabi, W.A. Maksoud, K.C. Szeto, A. Garron, P.P. Arquilliere, J.J. Walter, C.C. Santini, Appl. Catal. A, 495 (2015) 162-172). However, these catalysts are not recyclable as being mixed with the ashes, coal and heavy tar at the end of the catalytic cycle.

Thus, there is a need for multifunctional catalysts providing a high rate of biofuel production from the biomass conversion.

There is also a need for a method to efficiently recover these new catalysts from the ashes produced along with the biofuel in order to reach a competitive operating cost.

That is why one of the aims of the present invention is to use a heterogeneous solid catalyst to produce biofuel from the biomass conversion with a high rate.

Another aim of the present invention is to provide a method to efficiently recycle the heterogeneous solid catalyst.

Another aim of the present invention is to provide a method to produce biofuel from the biomass conversion with a high rate and to efficiently recycle the heterogeneous solid catalyst.

Thus, in a first embodiment, the present invention relates to the use of a heterogeneous solid catalyst comprising or consisting of a metal complex linked by covalent bonds and / or by Van der Waals type interactions on a magnetic carrier for the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel.

By "substrate" is meant the biomass to be transformed.

A "heterogeneous solid catalyst" means an amorphous solid, a crystalline solid or a mixture thereof able to catalyse a reaction and being in a solid phase while the reaction mixture is not in a solid phase.

A "metal complex" means a cluster of transition metal atom.

"Covalent bonds" refer to a binding force approximately from 200 to 400 $kJ.mol^{-1}$ while a "Van der Waals type interaction" refers to a weaker binding force, usually below 8 $kJ.mol^{-1}$.

A "magnetic carrier" refers to particles responding to a magnetic field thanks to their composition.

The "pyrolysis" means a thermochemical decomposition of organic material at elevated temperatures in the absence of oxygen. It involves the simultaneous change of chemical composition and physical phase.

The "hydrotreatment reaction" refers to a transformation reaction of a substrate under a pressure of hydrogen.

A "step of cooling" means that the reaction mixture is reaching a lower temperature than the pyrolysis, especially room temperature.

The present invention allows the production of biofuel by the transformation of biomass through a hydrotreatment process. This reaction is carried out at high temperature, under a hydrogen pressure and in the presence of a heterogeneous solid catalyst. The present invention relies on the unexpected experimental results of the Inventors in obtaining high yields of biomass conversion into biofuel while enabling a high rate of catalyst recycling and keeping these high

yields of biomass conversion even after 1000 recycling.

According to an aspect of the invention, the use of a heterogeneous solid catalyst comprises or consists of a metal complex linked by covalent bonds on a magnetic carrier for the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel.

According to another aspect of the invention, the use of a heterogeneous solid catalyst comprises or consists of a metal complex bound by van der Waals bond types on a magnetic carrier to the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel.

According to another aspect of the invention, the use of a heterogeneous solid catalyst comprises or consists of a metal complex linked by covalent bonds and by Van der Waals type interactions on a magnetic carrier to the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel.

According to another aspect of the invention, the use of a heterogeneous solid catalyst comprises a metal complex linked by covalent bonds and / or by Van der Waals type interactions on a magnetic carrier to the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel.

According to another aspect of the invention, the use of a heterogeneous solid catalyst consists of a metal complex linked by covalent bonds and / or by Van der Waals type interactions on a magnetic carrier to the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel..

According to another aspect of the invention, the use of a heterogeneous solid catalyst comprises a metal complex linked by covalent bonds on a magnetic carrier to the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel.

According to another aspect of the invention, the use of a heterogeneous solid catalyst comprises a metal complex linked by Van der Waals type interactions on a magnetic carrier to the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel.

According to another aspect of the invention, the use of a heterogeneous solid catalyst comprises a metal complex linked by covalent bonds and by Van der Waals type interactions on a magnetic carrier to the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel.

According to another aspect of the invention, the use of a heterogeneous solid catalyst consists of a metal complex linked by covalent bonds on a magnetic carrier to the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel..

According to another aspect of the invention, the use of a heterogeneous solid catalyst consists of a metal complex linked by Van der Waals type interactions on a magnetic carrier to the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel.

According to another aspect of the invention, the use of a heterogeneous solid catalyst consists of a metal complex linked by covalent bonds and by Van der Waals type interactions on a magnetic carrier to the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel.

In the present invention, the pyrolysis of a substrate and the hydrotreatment reaction of the resulting gas can either be carried out simultaneously or in two separated steps.

In an embodiment of the invention, the pyrolysis of a substrate and the hydrotreatment reaction of gas derived from the pyrolysis of a substrate are carried out by the simultaneous mixing of hydrogen with the substrate in the presence of the catalyst, leading to a solid phase and to a gaseous phase, said gaseous phase leading by a step of cooling to the production of a liquid phase formed of liquid biofuel.

A "simultaneous mixing of hydrogen with the substrate" means that the pyrolysis of a substrate is carried out under a hydrogen atmosphere, in presence of the catalyst, each component being in contact with each other.

In the present invention, the catalyst recycling is particularly challenging when the steps of pyrolysis and hydrotreatment are carried out simultaneously. Surprisingly, the Inventors find out that this is also the embodiment allowing the higher rate of biomass conversion into biofuel, highlighting the importance of the catalyst recycling efficiency.

Therefore, this embodiment leads to the formation of biofuel in a high rate and a polluted catalyst which is recyclable.

In another embodiment of the invention, the pyrolysis of a substrate is first carried out to give a gas, and followed by the mixing of said gas with hydrogen, in the presence of said catalyst, leading to a gaseous phase, said gaseous phase leading by a step of cooling to the production of a liquid phase formed of liquid biofuel.

In this embodiment of the present invention, the catalyst is not polluted therefore the recycling step is facilitated.

The metal complex when impregnated and/or grafted on the magnetic carrier forms the catalyst.

According to an aspect of the invention, the metal complex is impregnated on the magnetic carrier.

The term "impregnated" means that the metal complex is linked *via* Van der Waals type interactions to the magnetic carrier. This type of linkage allow the use of cheap metal complex precursors but the low interaction force induces an increase of the leaching therefore leading to a less stable catalyst, with a loss of activity.

According to an aspect of the invention, the metal complex is grafted by means of surface chemistry on the magnetic carrier.

The term "grafted" refers to a covalent binding of the metal complex on the magnetic carrier. This type of linkage implies the use of more expensive metal complex precursors such as chloro-, alkyl- or alkoxide- salts of transition metals. However the stronger interaction between the metal complex and the magnetic carrier reduces the leaching, increasing therefore the stability of the catalyst.

By "surface chemistry" is meant modifying the chemical composition of the surface of the magnetic carrier by incorporation of the metal complex.

The substrate is chosen among lignocellulosic biomass, coal, in particular coal powder, lignin, lignite or heavy oil, particularly lignocellulosic biomass.

The hydrotreatment reaction according to an advantageous aspect of the invention allows, in the presence of hydrogen, the conversion of lignocellulosic biomass into liquid biofuel.

The catalyst is stable at high temperature, especially at a temperature of about 500 °C.

By "stable at high temperature" is meant that the catalyst keeps its shape, structure, activity and efficiency at high temperature which is a prerequisite because of the catalytic pyrolysis step and of the recycling step.

The magnetic carrier is of formula $M_xFe_{3-x}O/M'_yO_z$, where:

- M is chosen among a transition metal of group IB, IIB, VIIIB;
- $M'_yO_z$ is optional with M' chosen among a transition metal of group IVB, VB, VIB, VIIB, VIII, IB, IIIA and IVA;
- x is a real number comprised between 0 to 1;
- y is a real number comprised between 0 to 3;
- z is a real number comprised between 0 to 5.

x is either 0 or 1; y is 0, 1, 2 or 3 and z is 0, 1, 2, 3, 4 or 5.

According to an advantageous aspect of the invention, M is chosen among Fe, Ni, Co, Zn, Cu.

According to an advantageous aspect of the invention, M' is chosen among Al, Si, Ce, Nb, Zn.

According to an advantageous aspect of the invention, $M'_yO_z$ is chosen among $Al_2O_3$, $SiO_2$, $CeO_2$, $Nb_2O_5$, ZnO, or a mixture thereof such as $Al_2O_3$-$SiO_2$.

According to an advantageous aspect of the invention, $M_xFe_{3-x}O_4/M'_yO_z$ has a core/shell structure.

A "core/shell structure" refers to a particle composed of two or more materials broadly defined as comprising a core (inner material) and a shell (outer layer material).

According to another aspect of the invention, the magnetic carrier is of formula $M_xFe_{3-x}O_4$-$M'_yO_z$ or of formula $M'_yO_z$-$M_xFe_{3-x}O_4$.

"-" means "supported".

In an advantageous aspect of the invention, the $M_xFe_{3-x}O_4$ is on the surface of $M'_yO_z$.

In another advantageous aspect of the invention, the $M_xFe_{3-x}O_4$ is at the core of $M'_yO_z$.

In a preferred aspect, the magnetic carrier $M_xFe_{3-x}O_4/M'_yO_z$ having a core/shell structure is $Fe_3O_4$-$Al_2O_3$ or $Al_2O_3$-$Fe_3O_4$.

In another preferred aspect, the $Fe_3O_4$ is in the form of magnetic particles.

In another preferred aspect, the magnetic particles have a size from 1 to 1000 micrometers, preferably a size from 100 to 450 micrometers, notably a size of 200 micrometers.

This size range is a good compromise between the catalyst activity and the size ratio between the catalyst particles and the ashes (*vide intra*).

The metal complex is of formula $M1_kM2_1$, wherein:

- M1 is at least one transition metal of group VB, VIB or VIII;
- M2 is at least one transition metal of group IB, IIB or VIII;
- k ranges from 0.1 to 1 mol%;
- 1 ranges from 0.05 to 0.5 mol%.

The expression "mol%" refers to the total amount of mole of the catalyst.

According to an aspect of the invention, M1 is chosen among V, Nb, W, Mo, Ru.

According to an aspect of the invention, M2 is chosen among Cu, Zn, Ni, Co.

According to an advantageous aspect of the invention, the metal complex $M1_kM2_1$ is $Mo_kCo_l$.

According to another advantageous aspect of the invention, the metal complex $M1_kM2_l$ is $Mo_kNi_l$.

According to another advantageous aspect of the invention, the proportion of M1 in relation to the total weight of the catalyst is from 5 to 10%.

According to another advantageous aspect of the invention, the proportion of M2 in relation to the total weight of the catalyst is from 0.5 to 5%.

According to an advantageous aspect of the invention, the catalyst is therefore of the formula $M1_kM2_l@(M_xFe_{3-x}O_4/M'_yO_z)$, where

- "@" means " supported ";
- M1 is at least one transition metal of group VB, VIB or VIII, especially V, Nb, W, Mo, Ru;
- M2 is at least one transition metal of group IB, IIB or VIII, especially Cu, Zn, Ni, Co;
- M is chosen among a transition metal of group IB, IIB, VIIIB, especially Fe, Ni, Co , Zn, Cu;
- $M'_yO_z$ is optional with M' chosen among a transition metal of group IVB, VB, VIB, VIIB, VIII, IB, IIIA and IVA, especially Al, Si, Ce, Nb, Zn;
- x is a real number comprised between 0 to 1;
- y is a real number comprised between 0 to 3;
- z is a real number comprised between 0 to 5;
- k ranges from 0.1 to 1 mol%;
- 1 ranges from 0.05 to 0.5 mol%;

x is either 0 or 1; y is 0, 1, 2 or 3 and z is 0, 1, 2, 3, 4 or 5.

The expression "mol%" refers to the total amount of mole of the catalyst.

According to another advantageous aspect of the invention, the catalyst of formula $M1_kM2_1@(M_xFe_{3-x}O_4/M'_yO_z)$ is a catalyst of formula $M1_kM2_1@(M_xFe_{3-x}O_4/M'_yO_z)$ or a catalyst of formula $M1_kM2_1@(M'_yO_z-M_xFe_{3-x}O_4)$

According to another advantageous aspect of the invention, the catalyst is a catalyst of formula $Mo_k$-$Co_l@(M_xFe_{3-x}O_4-M'_yO_z)$ or a catalyst of formula $Mo_kCo_l@(M'_yO_z-M_xFe_{3-x}O_4)$

According to another advantageous aspect of the invention, the catalyst is a catalyst of formula $Mo_kNi_l@(M_xFe_{3-x}O_4-M'_yO_z)$ or a catalyst of formula $Mo_kNil@(M'_yO_cM_xFe_{3-x}O_4)$

According to another advantageous aspect of the invention, the catalyst is a catalyst of formula $Mo_k$-$Co_{l@}Fe_3O_4$-$AlO_3$

According to another advantageous aspect of the invention, the catalyst is a catalyst of formula $Mo_k$-$Co_l@Al_2O_3$-$Fe_3O_4$

According to another advantageous aspect of the invention, the catalyst is a catalyst of formula $Mo_kNi_l@Fe_3O_4$-$Al_2O_3$

According to another advantageous aspect of the invention, the catalyst is a catalyst of formula $Mo_kNi_1@Al_2O_3$-$Fe_3O_4$

According to another aspect of the invention, the catalyst is a catalyst of formula $Mo_kNi_l@Fe_3O_4$, especially wherein the proportion of Mo is 10 wt% and the proportion of Ni is 4 wt% in relation to the total weight of the catalyst.

According to another aspect of the invention, the catalyst is a catalyst of formula $Mo_kNi_{l@}Fe_3O_4$, especially wherein the proportion of Mo is 7 wt% and the proportion of Ni is 2 wt% in relation to the total weight of the catalyst.

According to the first embodiment of the invention, the hydrotreatment reaction is carried out in one step.

According to an aspect of the invention, the conversion of lignocellulosic biomass into liquid biofuel is carried

out in one step, in the presence of hydrogen.

The hydrotreatment reaction is carried out at a temperature less than or equal to 500 ° C, especially from 475 ° C to 500 ° C, preferably from 475 ° C to 485 ° C.

Below 475 °C, the yield of the produced biofuel decreases drastically while a temperature above 500 °C does not influence the yield and is too costly in energy to be competitive in an industrial process. In the range of 475 °C to 500 °C, preferably from 475 °C to 485 °C, the yield of biofuel production stays constant.

In an advantageous aspect of the invention, the hydrotreatment reaction is carried out at a temperature less than or equal to 500 °C, especially from 475 °C to 500 °C, preferably from 475 °C to 485 °C, for a period of time less than or equal to about 3 hours, especially from 1 to 3 hours.

The reaction time less or equal to about 3 hours, especially from 1 to 3 hours, allows reaching a higher yield than with a longer reaction time.

In another aspect of the invention, the conversion of lignocellulosic biomass into liquid biofuel, in the presence of hydrogen, is carried out at a temperature less than or equal to 500 ° C, especially from 475 ° C to 500 ° C, preferably from 475 ° C to 485 ° C.

In another advantageous aspect of the invention, the conversion of lignocellulosic biomass into liquid biofuel, in the presence of hydrogen, is carried out at a temperature less than or equal to 500 ° C, especially from 475 ° C to 500 ° C, preferably from 475 ° C to 485 ° C, for a period of time less than or equal to about 3 hours, especially from 1 to 3 hours.

The hydrotreatment reaction leads to a liquid biofuel having an oxygen content of less than 5wt %, especially 4 wt %, preferably 3 wt %.

This low oxygen content in the biofuel corresponds to a high grade biofuel which do not need any further stabilization before its use.

Especially, the conversion of lignocellulosic biomass into liquid biofuel, in the presence of hydrogen, leads to a liquid biofuel having an oxygen content of less than 5wt %, especially 4 wt %, preferably 3 wt %.

The hydrotreatment reaction has a yield of at least 30 wt % to 35 wt %, especially at least 32 wt % to 35 wt %.

The yield corresponds to the ratio between the weight of the obtained biofuel and the initial weight of dried lignocellulosic biomass.

The conversion of lignocellulosic biomass into liquid biofuel, in the presence of hydrogen, has a yield of at least 30 wt % to 35 wt %, especially at least 32 wt % to 35 wt %

The hydrotreatment reaction is carried out at a hydrogen pressure from 10 to 60 bars, especially from 30 bars to 50 bars, particularly 40 bars.

In a batch reaction, a hydrogen pressure between 30 bars to 50 bars, particularly 40 bars, is necessary to start the hydrotreatment process. Below 30 bars, the catalytic activity is low and the resulting reaction is slowed down, while above 50 bars the reactor is more costly without any improvement in the reaction speed and the risk of explosion is increased by the higher pressure.

However, when the hydrotreatment is carried out in a continuous fashion, which is industrially the case, a pressure of hydrogen from 10 to 60 bars is acceptable since some hydrogen is produced during the process (*vide infra*). Below 10 bars, catalytic activity is low and the resulting reaction is slower, while above 60 bars the reactor is more costly without any improvement in the reaction speed and the risk of explosion is increased by the higher pressure.

The conversion of lignocellulosic biomass into liquid biofuel, in the presence of hydrogen is carried out at a hydrogen pressure from 10 to 60 bars, especially from 30 bars to 50 bars, particularly 40 bars.

Therefore, according to an advantageous aspect of the invention the hydrotreatment reaction is carried out in one step, is carried out at a temperature less than or equal to 500 ° C, especially 475 ° C to 500 ° C, preferably from 475 ° C to 485 ° C, for a period of time less than or equal to about 3 hours, especially from 1 to 3 hours, leads to a liquid biofuel having an oxygen content of less than 5wt %, especially 4 wt %, preferably 3 wt %, is carried out at a hydrogen pressure from 10 to 60 bars, especially from 30 bars to 50 bars, particularly 40 bars, and has a yield of at least 30 wt % to 35 wt %, especially about 32 wt % to 35 wt %.

According to another advantageous aspect of the invention, the conversion of lignocellulosic biomass into liquid biofuel is carried out in one step, is carried out at a temperature less than or equal to 500 ° C, especially from 475 ° C to 500 ° C, preferably from 475 ° C to 485 ° C, for a period of time less than or equal to about 3h, especially from 1 to 3 hours, leads to a liquid biofuel having an oxygen content of less than 5 wt %, especially 4 wt %, preferably 3 wt %, is carried out at a hydrogen pressure from 10 to 60 bars, in particular from 30 bars to 50 bars, particularly 40 bars, and has a yield of at least 30 wt % to 35 wt %, especially about 32 wt % to 35 wt %.

The hydrotreatment, and especially the conversion of lignocellulosic biomass into biofuel, in the presence of hydrogen, leads to a gaseous phase containing the biofuel and a solid phase containing the catalyst. These two phases are separated and treated separately before gathering their respective by-products:

- the solid phase is subjected to a step of cleaning leading to some gaseous by-products (first group of by-products)

and a step of separating the catalyst from the ashes.

- the gaseous phase is subjected to a step of cooling leading to three phases including the liquid biofuel, a hydrophilic liquid phase and a non-condensable gaseous phase and a heating step of the hydrophilic liquid phase and the non-condensable gaseous phase generating some gaseous by-products (second group of by-products).
- the first and the second group of by-products are gathered to form the third group of by-product and subjected to a step of steamconversion.

According to an aspect of the invention, the gaseous phase is separated from the solid phase before the step of cooling of said gaseous phase.

According to an aspect of the invention, the solid phase is subjected to a step of cleaning following said separation of said gaseous phase from said solid phase.

According to an aspect of the invention, the solid phase comprises or consists of said catalyst, ashes, coal and heavy tar.

The heavy tar is coating the catalyst, ashes and coal to form some pellets. In the invention, the term "ashes" refers to wood ashes, coming from the biomass pyrolysis.

According to an aspect of the invention, the step of cleaning is carried out at a temperature of about 400 ° C to 500 ° C, especially 500 ° C, in the presence of air, or $O_2$ and $CO_2$, or $H_2O$ under atmospheric pressure.

By "atmospheric pressure" is meant a pressure of approximately 1.01 bars.

The range of 400 °C to 500 °C, especially 500 °C for this step of cleaning has the advantage of furnishing enough energy, in the presence of air, to allow the $CO_2$ reaction with the coal and heavy tar yielding CO. The presence of air is indeed imposed by the endothermic character of the $C + CO_2 \rightarrow 2\ CO$ reaction. The required energy has to be furnished by the $2\ C + O_2 \rightarrow 2\ CO$ reaction which is exothermic. Thus, this allows the production of CO which is afterward steamconverted to yield the $H_2$ for the hydrotreatment.

According to an aspect of the invention, the step of cleaning is carried out for a period of time from 2 hours to 6 hours, especially from 2 hours to 4 hours, preferably of 3 hours.

Below 2 hours, the step of cleaning is not complete, i.e. the solid phase still contains coal and heavy tar (*vide intra*). Above 4 hours, the cleaning is not improved anymore leading to a waste of time and therefore a useless increase of the cost.

According to an aspect of the invention, the step of cleaning removes the coal and the heavy tar from the solid phase.

According to another aspect of the invention, the step of cleaning removes the coal and the heavy tar present on the surface of the catalyst.

According to another aspect of the invention, the step of cleaning gives a first group of by-products containing or consisting of CO, $CO_2$, $O_2$, $H_2$, light alkanes, especially $CH_4$, and alkenes.

A part of the CO is indirectly coming from the reaction between the carbon of the coal and heavy tar and the oxygen from the air (*vide supra*). The $CO_2$ is resulting from the non-condensable gases obtained after the pyrolysis and $O_2$ is a by-product obtained by the air used as reactant. $H_2$, light alkanes, especially $CH_4$, and alkenes are produced by the hydrotreatment itself.

According to another aspect of the invention, the surface of said catalyst comprises, after the step of cleaning, a content in coal and heavy tar less than 1% and especially 0 %.

According to an aspect of the invention, the step of cleaning is followed by a step of separating said catalyst from said ashes.

According to an aspect of the invention, the step of separating enables the separation of all or part of the ashes from the catalyst.

According to another aspect of the invention, the step of separating enables the elimination of all or part of the ashes present with the catalyst, a part of said ashes being possibly present on the surface of said catalyst.

According to an aspect of the invention, the step of separating enables the elimination of most of the ashes, which have, before separation, a weight in the order of 10 wt % of the weight of catalyst.

According to an aspect of the invention, after the step of separating, the catalyst is present either with ashes, the weight of which is less than 10 wt % of the weight of the catalyst, especially less than 5 wt % of the weight of the catalyst, preferably with no ashes.

The step of cooling of the gaseous phase leads to

- a hydrophilic liquid phase,
- a hydrophobic liquid phase and
- non-condensable gases.

In an embodiment of this invention, the two liquid phases are not miscible and are separated by decantation.

According to an aspect of the invention, the hydrophilic liquid phase contains water and about 2% of organic solvents such as ethanol, methanol, formic acid and acetic acid.

According to an aspect of the invention, the hydrophobic liquid phase contains organic compounds, especially aromatic compounds, particularly aromatic compounds comprising one or two phenyl rings, optionally substituted with linear or branched alkyl chains.

This hydrophobic liquid phase is the liquid biofuel.

According to an aspect of the invention, the non-condensable gases contain or consist of CO, $CO_2$, $H_2$, $CH_4$, light alkanes and alkenes, and a saturated pressure of various components including water at the condensation temperature.

According to an aspect of the invention, the non-condensable gases and the hydrophilic liquid phase are heated to a temperature of about 450 ° C to give a second group of by-products containing or consisting of acetic acid, formic acid, ethanol, methanol, CO, $CO_2$, $CH_4$, $H_2$ and water vapour.

This step is working using an exchanger and an exchanger is working with a temperature drop. Because in the previous step the gases are at 500 °C but the following step involves a temperature of 900 °C, a drop of 50 °C is chosen as a good compromise for economical reasons.

According to an aspect of the invention, the first group of by-products is mixed with the second group of by-products to give a third group of by-products containing or consisting of CO, $CO_2$, $O_2$, acetic acid, formic acid, ethanol, methanol, light alkanes, especially $CH_4$, alkenes, $H_2$ and water vapour.

According to an aspect of the invention, the third group of by-products is heated to a temperature of about 900 °C and passed through a catalytic bed to undergo a step of steamconversion to give hydrogen contained in a gaseous mixture.

The "step of steamconversion" refers to a water vapor gasification of the carbonaceous components or thermal decomposition or cracking of organic compounds including charcoal in the presence of water. More precisely, it relates to the mixing of water in a vapor phase with a reductant, usually CO or methane, but possibly any organic products that is in a gaseous state at 900 °C. The reaction $CO + H_2O \rightarrow CO_2 + 2 H_2$ being slightly endothermic, it is enabled by the exothermic reaction $CO + ½ O_2 \rightarrow CO_2$. Some $H_2$ is therefore resulting from the steamconversion step, thanks to the decomposition of water, and to the hydrogen present in $CH_4$ and in the organic products.

According to an aspect of the invention, after the step of steamconversion, hydrogen is separated from the gaseous mixture to give a gaseous mixture depleted from hydrogen, which is cooled to give water and gaseous $CO_2$ and CO as by-products.

The partial pressure of CO should be low, close to zero bars.

In the invention, the separation of the hydrogen is enabled by a classic molecular filter: the gaseous mixture at about 900 °C resulting from the steamconversion step passes through a solid on which the $H_2$ is adsorbed. $H_2$ is afterward desorbed when the hydrogen pressure is lowered.

In a system working in a continuous fashion, as usual for an industrial production, the generated hydrogen and the cleaned catalyst can be recycled for another hydrotreatment reaction. Moreover, the unreacted hydrogen can also be recycled after separation and purification from the other gases (CO and $CO_2$) or directly, without separation.

It is noted that in a batch reaction, the cleaned catalyst can also be recycled.

According to an aspect of the invention, the hydrogen separated from the gaseous mixture is used for said hydrotreatment reaction.

According to an aspect of the invention, the catalyst can be reused in a new hydrotreatment reaction after said step of separating.

Because the catalyst has been oxidized during the step of cleaning of the solid phase, this catalyst needs to be re-activated to allow its recycling. Therefore, a reduction step has to be carried out by subjecting this catalyst to a hydrogen pressure from 10 to 60 bars, especially from 30 bars to 50 bars, particularly 40 bars, at a temperature less than or equal to 500 °C, especially 475 to 500 °C, preferably 475 to 485 °C, for a period of time less than or equal to 3 hours, especially from 1 to 3 h. This step can be either subsequent to the separating step, before recycling the catalyst, or simultaneous to the hydrotreatment process. Indeed the conditions to re-activate the catalyst by its reduction are similar to the hydrotreatment step conditions. This reduction step simultaneous to the hydrotreatment step is preferred in an industrial continuous process.

The step of separating is particularly efficient because, according to an aspect of the invention, the ashes have a size in the order of microns, especially about or under 20 $\mu m$.

According to an aspect of the invention, the ratio between the size of the catalyst and the size of the ashes is therefore about 10 to about 1000.

The catalyst allows a production of at least 30 wt % to 35 wt %, especially about 32 wt % to 35 wt % of biofuel.

The yield corresponds to the ratio between the weight of the obtained biofuel and the initial weight of dried lignocellulosic biomass. These obtained yields are surprisingly higher than those obtained in the literature while using alumina or zeolites supported catalysts. Indeed, because the specific area of $Fe_3O_4$ is inferior to the specific area of

alumina or zeolites (*vide infra,* Example 12) a lower yield was expected when using a $Fe_3O_4$ containing catalyst according to the present invention.

The catalyst allows a production of at least 30 wt % to 35 wt %, especially about 32 wt % to 35 wt % of biofuel after 1000 recycling.

Surprisingly, the catalyst described in the invention is more robust than the usual alumina or zeolites supported Mo-Ni catalysts known in the previous art. This robustness allows an increase of its recycling ability.

The present invention also relates in a hydrotreatment process of a substrate to produce biofuel. This hydrotreatment process can be carried out simultaneously to the pyrolysis of a substrate or in a separated step.

In an embodiment of the present invention, a hydrotreatment process of a substrate in the presence of a pressurized hydrogen atmosphere, comprises at least one step of contacting said substrate with a heterogeneous solid catalyst comprising or consisting of a metal complex linked by covalent bonds and / or by Van der Waals type interactions on a magnetic carrier, said step of contacting leading to a solid phase and a gaseous phase which leads by a step of cooling to the production of a liquid phase formed of liquid biofuel.

In another embodiment of the invention, a hydrotreatment process of a substrate comprises at least:

- one step of pyrolysis of said substrate to produce a gas and
- one step of contacting said gas derived from the pyrolysis with a heterogeneous solid catalyst in the presence of a pressurized hydrogen atmosphere, said catalyst comprising or consisting of a metal complex linked by covalent bonds and / or by Van der Waals type interactions on a magnetic carrier, said step of contacting leading to a gaseous phase which leads by a step of cooling to the production of a liquid phase formed of liquid biofuel

In this embodiment, the catalyst and the substrate are separated, by means of a porous sintered plate, leading to a cleaned catalyst at the end of the hydrotreatment. The catalyst can be either above or below this porous sintered plate, the substrate being thus respectively below or above the porous sintered plate. Therefore, the catalyst does not need to be subjected to a cleaning and a separating steps to be recyclable.

However, the gases resulting from the pyrolysis tends to react together before reaching the catalyst to give coal and heavy tar as a side-reaction. This side-reaction is responsible for the lower yields obtained in this embodiment compared to the other embodiment of the invention where the catalyst is mixed with the substrate.

According to an aspect of the invention, the catalyst is stable at high temperature, especially at a temperature of about 500 ° C.

By "stable at high temperature" is meant that the catalyst keeps its shape, structure, activity and efficiency at high temperature which is a prerequisite because of the catalytic pyrolysis step and of the recycling step.

According to another aspect of the invention, the magnetic carrier is of formula $M_xFe_{3-x}O_4/M'_yO_z$, where:

- M is chosen among a transition metal of group IB, IIB, VIIIB;
- $M'_yO_z$ is optional with M' chosen among a transition metal of group IVB, VB, VIB, VIIB, VIII, IB, IIIA and IVA;
- x is a real number comprised between 0 to 1;
- y is a real number comprised between 0 to 3;
- z is a real number comprised between 0 to 5.

x is either 0 or 1; y is 0, 1, 2 or 3 and z is 0, 1, 2, 3, 4 or 5.

According to an advantageous aspect of the invention, M is chosen among Fe, Ni, Co, Zn, Cu.

According to an advantageous aspect of the invention, M' is chosen among Al, Si, Ce, Nb, Zn.

According to an advantageous aspect of the invention, $M'_yO_z$ is chosen among $Al_2O_3$, $SiO_2$, $CeO_2$, $Nb_2O_5$, ZnO, or a mixture thereof such as $Al_2O_3$-$SiO_2$.

According to an advantageous aspect of the invention, $M_xFe_{3-x}O_4/M'_yO_z$ has a core / shell structure.

According to another aspect of the invention, the magnetic carrier is of formula $M_xFe_{3-x}O_4$-$M'_yO_z$ or of formula $M'_yO_z$-$M_xFe_{3-x}O_4$.

According to an advantageous aspect of the invention, $M_xFe_{3-x}O_4$ is on the surface of $M'_yO_z$.

According to another advantageous aspect of the invention, $M_xFe_{3-x}O_4$ is at the core of $M'_yO_z$.

According to a preferred aspect of the invention, the magnetic carrier $M_xFe_{3-x}O_4/M'_yO_z$ has a core / shell structure of $Fe_3O_4$-$Al_2O_3$ or $Al_2O_3$-$Fe_3O_4$.

According to another preferred aspect of the invention, the $Fe_3O_4$ is in the form of magnetic particles.

According to another preferred aspect of the invention, the magnetic particles have a size from 1 to 1000 micrometers, preferably a size from 100 to 450 micrometers, notably a size of 200 micrometers.

This size range is a good compromise between the catalyst activity and the size ratio between the catalyst particles and the ashes (*vide infra*).

According to another aspect of the invention, the metal complex is of formula $M1_kM2_l$, where:

- M1 is at least one transition metal of group VB, VIB or VIII;
- M2 is at least one transition metal of group IB, IIB or VIII;
- k varies from 0.1 to 1 mol%;
- 1 varies from 0.05 to 0.5 mol%.

The expression "mol%" refers to the total amount of mole of the catalyst.
According to another aspect of the invention, M1 is chosen among V, Nb, W, Mo, Ru.
According to another aspect of the invention, M2 is chosen among Cu, Zn, Ni, Co.
According to another aspect of the invention, the metal complex $M1_kM2_l$ is $Mo_kCo_l$.
According to another aspect of the invention, the metal complex $M1_kM2_l$ is $Mo_kNi_l$.
According to another aspect of the invention, the proportion of M1 in relation to the total weight of the catalyst is from 5 to 10%
According to another aspect of the invention, the proportion of M2 in relation to the total weight of the catalyst is 0.5 to 5%
Therefore, according to an advantageous aspect of the invention, the catalyst is of formula $M1_kM2_1@(M_xFe_{3-x}O_4/M'_yO_z)$, where

- "@" means " supported ";
- M1 is at least one transition metal of group VB, VIB or VIII, especially V, Nb, W, Mo, Ru;
- M2 is at least one transition metal of group IB, IIB or VIII, especially Cu, Zn, Ni, Co;
- M is chosen among a transition metal group of IB, IIB, VIIIB, especially Fe, Ni, Co, Zn, Cu;
- $M'_yO_z$ is optional with M' chosen among a transition metal of group IVB, VB, VIB, VIIB, VIII, IB, IIIA and IVA, especially Al, Si, Ce, Nb, Zn;
- x is a real number comprised between 0 to 1;
- y is a real number comprised between 0 to 3;
- z is a real number comprised between 0 to 5;
- k varies from 0.1 to 1 mol% ;
- 1 varies from 0.05 to 0.5 mol%.

x is either 0 or 1; y is 0, 1, 2 or 3 and z is 0, 1, 2, 3, 4 or 5.

The expression "mol%" refers to the total amount of mole of the catalyst.
According to a particular aspect of the invention, the catalyst is of formula $M1_kM2_1@(M_xFe_{3-x}O_4/M'_yO_z)$, where

- "@" means " supported ";
- M1 is Mo;
- M2 is Ni;
- M is Fe;
- $M'_yO_z$ is not present;
- x is 0;
- y is 0;
- z is 0;
- k is 0.3 mol%;
- 1 is 0.2 mol%.

In this particular aspect of the invention, the catalyst can thus be written $Mo_{0.3}Ni_{0.2}@Fe_3O_4$.
According to another particular aspect of the invention, the catalyst is of formula $M1_kM2_1@(M_xFe_{3-x}O_4/M'_yO_z)$, where

- "@" means " supported ";
- M1 is Mo;
- M2 is Ni;
- M is Fe;
- $M'_yO_z$ is optional with M' being Al;
- x is 0;
- y is 2;
- z is 3;
- k is 0.4 mol%;
- 1 is 0.3 mol%.

In this particular aspect of the invention, the catalyst can thus be written $Mo_{0.4}Ni_{0.3}@Fe_3O_4\text{-}Al_2O_3$.

According to another aspect of the invention, the catalyst has the formula $M1_kM2_l@(M_xFe_{3-x}O_4\text{-}M'_yO_z)$ or the formula $M1_kM2_l@(M'_yO_z\text{-}M_xFe_{3-x}O_4)$.

According to a particular aspect of the invention, the catalyst has the formula $Mo_kCo_l@(M_xFe_{3-x}O_4\text{-}M'_yO_z)$ or the formula $Mo_kCo_l@(M'_yO_c\text{-}M_xFe_{3-x}O_4)$.

According to another particular aspect of the invention, the catalyst has the formula $Mo_kNi_l@(M_xFe_{3-x}O_4\text{-}M''_yO_z)$ or the formula $Mo_kNi_l@(M''_yO_z\text{-}M_xFe_{3-x}O_4)$.

According to another particular aspect of the invention, the catalyst has the formula $Mo_kCo_l@Fe_3O_4\text{-}Al_2O_3$.

According to another particular aspect of the invention, the catalyst has the formula $Mo_kCo_l@Al_2O_3\text{-}Fe_3O_4$.

According to another particular aspect of the invention, the catalyst has the formula $Mo_kNi_l@Fe_3O_4\text{-}Al_2O_3$.

According to another particular aspect of the invention, the catalyst has the formula $Mo_kNi_l@Al_2O_3\text{-}Fe_3O_4$.

According to another particular aspect of the invention, the catalyst has the formula $Mo_kNi_l@Fe_2O_3$, especially wherein the proportion of Mo is 10 wt% and the proportion of Ni is 4 wt%.

According to another particular aspect of the invention, the catalyst has the formula $Mo_kNi_l@Fe_2O_3$, especially wherein the proportion of Mo is 7 wt% and the proportion of Ni is 2 wt%.

According to another aspect of the invention, the substrate is chosen among lignocellulosic biomass, coal, especially coal powder, lignin, lignite or heavy oil, particularly lignocellulosic biomass.

According to another particular aspect of the invention, the substrate is a lignocellulosic biomass.

According to another aspect of the invention, the lignocellulosic biomass is transformed into a liquid biofuel.

According to another aspect of the invention, the substrate is present at a ratio of 80 to 95% by weight, especially about 90%, including 4 to 25% by weight that are physisorbed water and said catalyst is present at a ratio of 5 to 20% by weight, especially 10%.

In an embodiment of the invention, the hydrotreatment, and especially the conversion of lignocellulosic biomass into biofuel, in the presence of hydrogen, leads to a gaseous phase containing the biofuel and a solid phase containing the catalyst. These two phases are separated and treated separately before gathering their respective by-products:

- the solid phase is subjected to a step of cleaning leading to some gaseous by-products (first group of by-products) and a step of separating the catalyst from the ashes.
- the gaseous phase is subjected to a step of cooling leading to three phases including the liquid biofuel, a hydrophilic liquid phase and a non-condensable gaseous phase and a heating step of the hydrophilic liquid phase and the non-condensable gaseous phase generating some gaseous by-products (second group of by-products).
- the first and the second group of by-products are gathered to form the third group of by-product and subjected to a step of steamconversion.

In another embodiment of the invention, the hydrotreatment, and especially the conversion of lignocellulosic biomass into biofuel, in the presence of hydrogen, leads to a gaseous phase containing the biofuel and a solid phase free from the catalyst. These two phases are separated and treated separately before gathering their respective by-products:

- the solid phase is subjected to air and $CO_2$ at a temperature from 400 ° C to 500 ° C, especially 500 ° C, under atmospheric pressure (i.e. similar conditions as for the step of cleaning from the first embodiment) leading to some gaseous by-products (first group of by-products).
- the gaseous phase is subjected to a step of cooling leading to three phases including the liquid biofuel, a hydrophilic liquid phase and a non-condensable gaseous phase and a heating step of the hydrophilic liquid phase and the non-condensable gaseous phase generating some gaseous by-products (second group of by-products).
- the first and the second group of by-products are gathered to form the third group of by-product and subjected to a step of steamconversion.

According to an aspect of the invention, the gaseous phase is separated from said solid phase before the step of cooling of said gaseous phase.

According to an aspect of the invention, the solid phase is subjected to a step of cleaning following said separation of said gaseous phase from said solid phase.

According to an aspect of the invention, the solid phase comprises or consists of said catalyst, ashes, coal and heavy tar.

The heavy tar is coating the catalyst, ashes, and coal to form some pellets.

According to an aspect of the invention, the step of cleaning is carried out at temperatures from 400 ° C to 500 ° C, especially 500 ° C, in the presence of air, or $O_2$, and $CO_2$, under atmospheric pressure.

By "atmospheric pressure" is meant a pressure of approximately 1.01 bars.

The range of 400 °C to 500 °C, especially 500 °C for this step of cleaning has the advantage of furnishing enough energy, in the presence of air, to allow the $CO_2$ reaction with the coal and heavy tar yielding CO. The presence of air is indeed imposed by the endothermic character of the $C + CO_2 \rightarrow 2\ CO$ reaction. The required energy has to be furnished by the $2\ C + O_2 \rightarrow 2\ CO$ reaction which is exothermic. Thus, this allows the production of CO which is afterward steamconverted to yield the $H_2$ for the hydrotreatment.

This step of cleaning leads to an oxidation of the catalyst.

According to an aspect of the invention, the step of cleaning is carried out for a period of time from 2 hours to 6 hours, especially 2 hours to 4 hours, preferably of 3 hours.

Below 2 hours, the step of cleaning is not complete, i.e. the solid phase still contains coal and heavy tar (*vide infra*). Above 4 hours, the cleaning is not improved anymore leading to a waste of time and therefore a useless increase of the cost.

According to an aspect of the invention, the step of cleaning removes all or part of the coal and the heavy tar from said solid phase.

According to an aspect of the invention, the step of cleaning removes all or part of the coal and the heavy tar on the surface of said catalyst.

According to an aspect of the invention, the step of cleaning gives a first group of by-products containing or consisting of CO, $CO_2$, $O_2$, $H_2$, light alkanes, especially $CH_4$, and alkenes.

A part of the CO is indirectly coming from the reaction between the carbon of the coal and heavy tar and the oxygen from the air (*vide supra*). The $CO_2$ is resulting from the non-condensable gas obtained after the pyrolysis and $O_2$ is a by-product obtained by the air used as reactant. $H_2$, light alkanes, especially $CH_4$, and alkenes are produced by the hydrotreatment itself.

According to an aspect of the invention, the surface of the catalyst comprises, after said step of cleaning, a content in coal and heavy tar less than 1%, especially 0 %.

According to an aspect of the invention, the step of cleaning is followed by a step of separating said catalyst from said ashes.

According to an aspect of the invention, the step of separating is carried out using a magnet.

According to an advantageous aspect of the invention, the step of separating said catalyst from said ashes comprises a step of using a conveyor belt running over at least two rollers,
a first of said at least two rollers being located near the collection site of said solid phase,
a second of said at least two rollers being

in the vicinity of a first container provided with aspiration means and
over a second container, said second of at least two rollers being subjected to a magnetic field,
the solid phase being transported from said collection site to the part of the conveyor belt located on said second roller,
the ashes are collected into the first container by the aspiration means and the catalyst fall into said second container when reaching the part of the conveyor belt located at a distance from the said second of at least two rollers at which the magnetic field applied to said second of at least two rollers is too weak to retain the catalyst to the belt.

A "conveyor belt" stands for a belt able to transport the mixture of catalyst and ashes produced by the cleaning step.

By "roller" is meant a rolling mean to allow the translation movement of the conveyor belt. The conveyor belt is therefore forming a tightened loop around at least two rollers, as any classical conveyor belt.

The "collection site" refers to the trough from where the mixture of catalyst and ashes reaches the conveyor belt.

The "aspiration means" refers to a ventilation able to aspire the ashes.

By "magnetic field" is meant a vector field exerted on magnetic particles. A force exerted on the magnetic particles is resulting from the interaction of the vector field and the particles, as it is well known.

According to an aspect of the invention, the step of separating enables the separation of all or part of the ashes from the catalyst.

According to an aspect of the invention, the step of separating enables the elimination of all or part of the ashes present with the catalyst, a part of said ashes being possibly present on the surface of said catalyst.

According to an aspect of the invention, the step of separating enables the elimination of most of the ashes which have, before separation, a weight in the order of 10 wt % of those of catalyst.

According to an aspect of the invention, after the step of separating, the catalyst is present either with ashes, the weight of which is less than 10 wt % of the mass of the catalyst, especially less than 5 wt % of the weight of the catalyst, preferably with no ashes.

Because the catalyst has been oxidized during the step of cleaning of the solid phase, this catalyst needs to be re-activated to allow its recycling. Therefore, a reduction step has to be carried out by subjecting this catalyst to a hydrogen pressure from 10 to 60 bars, especially from 30 bars to 50 bars, particularly 40 bars, at a temperature less than or equal to 500 °C, especially 475 to 500 °C, preferably 475 to 485 °C, for a period of time less than or equal to 3 hours, especially from 1 to 3 h. This step can be either subsequent to the separating step, before recycling the catalyst,

or simultaneous to the hydrotreatment process. Indeed the conditions to re-activate the catalyst by its reduction are similar to the hydrotreatment step conditions. This reduction step simultaneous to the hydrotreatment step is preferred in an industrial continuous process.

According to an aspect of the invention, the step of cooling of the gaseous phase leads to

- a hydrophilic liquid phase,
- a hydrophobic liquid phase and
- non-condensable gases.

In an aspect of the invention, the two liquid phases are not miscible and are separated by decantation.

According to an aspect of the invention, the hydrophilic liquid phase contains water and about 2% of organic solvents such as ethanol, methanol, formic acid and acetic acid.

According to an aspect of the invention, the hydrophobic liquid phase contains organic compounds, especially aromatic compounds, particularly aromatic compounds comprising one or two phenyl rings, optionally substituted with linear or branched alkyl chains.

According to an aspect of the invention, the hydrophobic liquid phase is the liquid biofuel.

According to an aspect of the invention, the non-condensable gases contain or consist of CO, $CO_2$, $H_2$, $CH_4$, light alkanes and alkenes, and a saturated pressure of various components including water at the condensation temperature.

According to an aspect of the invention, the non-condensable gases and the hydrophilic liquid phase are heated to a temperature of about 450 ° C to give a second group of by-products containing or consisting of acetic acid, formic acid, ethanol, methanol, CO, $CO_2$, $CH_4$, $H_2$ and water vapour.

This step is working using an exchanger and an exchanger is working with a temperature drop. Because in the previous step the gases are at 500 °C but the following step involves a temperature of 900 °C, a drop of 50 °C is chosen as a good compromise for economical reasons.

According to an aspect of the invention, the first group of by-products is mixed with the second group of by-products to give a third group of by-products containing or consisting of CO, $CO_2$, $O_2$, $H_2$, light alkanes, especially $CH_4$, and alkenes, acetic acid, formic acid, ethanol, methanol, and water vapour.

According to an aspect of the invention, the third group of by-products is heated to a temperature of about 900 °C and passed through a catalytic bed to undergo a step of steamconversion to give hydrogen contained in a gaseous mixture.

The steamconversion step forms hydrogen by reducing $H_2O$ with the reducing components present in the third group of by-product.

According to an aspect of the invention, after said step of steamconversion, hydrogen is separated from the gaseous mixture to give a gaseous mixture depleted from hydrogen, which is cooled to give water and gaseous $CO_2$ and CO as by products.

The partial pressure of CO should be low, close to zero bars.

In the invention, the separation of the hydrogen is enabled by a classic molecular filter: the gaseous mixture at about 900 °C resulting from the steamconversion step passes through a solid on which the $H_2$ is adsorbed. $H_2$ is afterward desorbed when the hydrogen pressure is lowered.

The involved system being working in a continuous manner for an industrial production, it allows the recycling of the catalyst and the hydrogen for another hydrotreatment process.

According to an aspect of the invention, the hydrogen separated from the gaseous mixture is used for said hydrotreatment reaction.

Therefore, the process according to the present invention comprises at least the following steps:

- a step of contacting between said substrate and said heterogeneous solid catalyst, and leading to a solid phase and a gaseous phase;
- a step of cooling of said gaseous phase, and leading to the production of a hydrophilic liquid phase, a hydrophobic liquid phase and non-condensable gases;
- a step of cleaning of said solid phase to remove all or part of coal and heavy tar from the solid phase to produce
    - a solid phase containing said catalyst and said ashes and
    - a first group of by-products containing or consisting of CO, $CO_2$, $O_2$, $H_2$, light alkanes, especially $CH_4$, and alkenes;
- a step of separating of said catalyst and said ashes;
- a step of heating said non-condensable gases and said hydrophilic to give a second group of by-products containing

or consisting of acetic acid, formic acid, ethanol, methanol, CO, $CO_2$, $CH_4$, $H_2$ and water vapor;

- a step of mixing said first group of by-products with said second group of by-products to give a third group of by products containing or consisting of CO, $CO_2$, $O_2$, acetic acid, formic acid, ethanol, methanol, $CH_4$, $H_2$ and water vapor;
- a step of steamconversion of said third group of by-products to give hydrogen contained in a gaseous mixture;
- reusing the catalyst in a new hydrotreatment process.

According to a particular aspect of the invention, the process comprises at least the following steps:

- a step of contacting between about 90% of lignocellulosic biomass and about 10% of said heterogeneous solid catalyst, especially in a reactor heated at 500 ° C, and leading to a solid phase and a gaseous phase,
- a step of cooling of said gas phase, and leading to the production of a hydrophilic liquid phase, a hydrophobic liquid phase and non-condensable gases;
- a step of cleaning of said solid phase to remove all or part of coal and heavy tar from the solid phase to produce
    - a solid phase containing said catalyst and said ashes
    - a first group of by-products containing or consisting of CO, $CO_2$, $O_2$, $H_2$, light alkanes, especially $CH_4$, and alkenes;
- a step of separating said catalyst and said ashes;
- a step of heating said non-condensable gases and said hydrophilic to give a second group of by-products containing or consisting of acetic acid, formic acid, ethanol, methanol, CO, $CO_2$, $CH_4$ , $H_2$ and water vapor;
- a step of mixing said first group of by-products with said second group of by-products to give a third group of by products containing or consisting of CO, $CO_2$, $O_2$, acetic acid, formic acid, ethanol, methanol, $CH_4$, $H_2$ and water vapor;
- a step of steamconversion of said third group of by-products to give hydrogen contained in a gaseous mixture;
- the reintroduction of a catalyst in a new step of contacting with said substrate in order to start a new hydrotreatment cycle.

The step of contacting the lignocellulosic biomass and the catalyst at a temperature about 500 °C is carried out under a pressure of hydrogen.

According to an aspect of the invention, the process is carried out at a pressure of hydrogen of 10 to 60 bars, especially 30 bars to 50 bars, preferably 40 bars.

In a batch reaction, a hydrogen pressure between 30 bars to 50 bars, particularly 40 bars, is necessary to start the hydrotreatment process. Below 30 bars, the catalytic activity is low and the resulting reaction is slower, while above 50 bars the reactor is more costly without any improvement in the reaction speed and the risk of explosion is increased by the higher pressure.

However, when the hydrotreatment is carried out in a continuous fashion, which is industrially the case, a pressure of hydrogen from 10 to 60 bars is acceptable since some hydrogen is produced during the process (*vide infra*). Below 10 bars the catalytic activity is low and the resulting reaction is slower, while above 60 bars the reactor is more costly without any improvement in the reaction speed and the risk of explosion is increased by the higher pressure.

According to an aspect of the invention, the ashes have a size in the order of microns, especially about or under 20$\mu$m.

According to an aspect of the invention, the ratio between the size of the catalyst and the size of the ashes is from about 10 to about 1000.

According to an aspect of the invention, the substrate transformation is carried out in one step.

According to an aspect of the invention, the process is carried out at a temperature less than or equal to 500 ° C, especially 475 ° C to 500 ° C, preferably from 475 ° C to 485 ° C.

Below 475 °C, the yield of the produced biofuel decreases drastically while a temperature above 500 °C does not influence the yield and is too costly in energy to be competitive in an industrial process. In the range of 475 °C to 500 °C, preferably from 475 °C to 485 °C, the yield of biofuel production stays constant

According to an aspect of the invention, the process is carried out at a temperature less than or equal to 500 ° C, especially 475 ° C to 500 ° C, preferably from 475 ° C to 485 ° C, for a period of time less than or equal to 3 hours, especially from 1 to 3 hours.

The reaction time less or equal to about 3 hours, especially from 1 to 3 hours, allows reaching a higher yield than with a longer reaction time.

According to an aspect of the invention, the process leads to a liquid biofuel whose oxygen content is less than 5wt %, especially 4 wt %, preferably 3 wt %.

This low oxygen content in the biofuel corresponds to a high grade biofuel which do not need any further stabilization before its use.

According to an aspect of the invention, the process has a yield of at least 30 wt % to 35 wt %, especially at least 32 wt % to 35 wt %.

The yield corresponds to the ratio between the weight of the obtained biofuel and the initial weight of dried lignocellulosic biomass (*vide supra*). Therefore, to evaluate this yield, the amount of physisorbed water on the substrate is not taken into account

Therefore, according to an aspect to the invention the transformation of the substrate is performed in one step, is carried out at a temperature less than or equal to 500 ° C, especially from 475 ° C to 500 ° C, preferably from 475 ° C to 485 ° C, for a period of time less than or equal to 3 hours, especially from 1 to 3 hours, leads to a liquid biofuel whose oxygen content is less than 5wt % , particularly 4 wt %, preferably 3 wt %, is carried out at a pressure of 10 bars to 60 bars, especially from 30 bars to 50 bars, preferably 40 bars, and has a yield of at least 30 wt % to 35 wt %, particularly about 32 wt % to 35 wt %.

According to an aspect of the invention, the catalyst allows a production of at least 30 wt % to 35 wt %, especially about 32 wt % to 35 wt % of biofuel.

These obtained yields are surprisingly higher than those obtained in the literature while using alumina or zeolites supported catalysts. Indeed, because the specific area of $Fe_3O_4$ is inferior to the specific area of alumina or zeolites (*vide infra,* Example 12) a lower yield was expected when using a $Fe_3O_4$ containing catalyst according to the present invention.

According to an aspect of the invention, the catalyst allows a production of at least 30 wt % to 35 wt %, especially about 32 wt % to 35 wt % of biofuel after 1000 recyclings.

Surprisingly, the catalyst described in the invention is more robust than the usual alumina or zeolites supported Mo-Ni catalysts known in the previous art. This robustness allows an increase of its recycling ability.

The present invention also relates to a heterogeneous catalyst of formula $M1_kM2_l@(M_xFe_{3-x}O_4/M'_yO_z)$, where

- "@" means " supported ";
- M1 is at least one transition metal of group VB, VIB or VIII, especially V, Nb, W, Mo, Ru;
- M2 is at least one transition metal of group IB, IIB or VIII, especially Cu, Zn, Ni, Co;
- M is chosen among a transition metal of group IB, IIB, VIIIB, especially Fe, Ni, Co, Zn, Cu;
- $M'_yO_z$ is optional with M' chosen among a transition metal of group IVB, VB, VIB, VIIB, VIII, IB, IIIA and IVA, especially Al, Si, Ce, Nb, Zn;
- x is a real number comprised between 0 to 1;
- y is a real number comprised between 0 to 3;
- z is a real number comprised between 0 to 5;
- k ranges from 0.1 to 1 mol% ;
- 1 ranges from 0.05 to 0.5 mol%.

x is either 0 or 1; y is 0, 1, 2 or 3 and z is 0, 1, 2, 3, 4 or 5.

The expression "mol%" refers to the total amount of mole of the catalyst.

According to an advantageous aspect of the invention, $M_xFe_{3-x}O_4/M'_yO_z$ has a core/shell structure.

According to another aspect of the invention, the magnetic carrier is of formula $M_xFe_{3-x}O_4-M'_yO_z$ or of formula $M'_yO_z-M_xFe_{3-x}O_4$.

"-" means "supported".

In an advantageous aspect of the invention, the $M_xFe_{3-x}O_4$ is on the surface of $M'_yO_z$.

In another advantageous aspect of the invention, the $M_xFe_{3-x}O_4$ is at the core of $M'_yO_z$.

In a preferred aspect, the magnetic carrier $M_xFe_{3-x}O_4/M'_yO_z$ having a core/shell structure is $Fe_3O_4-Al_2O_3$ or $Al_2O_3-Fe_3O_4$.

According to an aspect of the present invention, the catalyst has the formula $M1_kM2_l@(M_xFe_{3-x}O_4-M'_yO_z)$ or the formula $M1_kM2_1@(M'_yO_z-M_xFe_{3-x}O_4)$.

According to a particular aspect of the invention, the catalyst has the formula $Mo_kCo_l@(M_xFe_{3-x}O_4-M'_yO_z)$ or the formula $Mo_kCo_1@(M'_yO_z-M_xFe_{3-x}O_4)$.

According to another particular aspect of the present invention, the catalyst has the formula $Mo_kNi_l@(M_xFe_{3-x}O_4-M'_yO_z)$ or formula $Mo_kNi_l@(M'_yO_z-M_xFe_{3-x}O_4)$.

According to another particular aspect of the present invention, the catalyst has the formula $Mo_k$-$Co_l@Fe_3O_4-Al_2O_3$

According to another particular aspect of the present invention, the catalyst has the formula $Mo_k$-$Co_l@Al_2O_3-Fe_3O_4$.

According to another particular aspect of the present invention, the catalyst has the formula

$Mo_kNi_l@Fe_3O_4-Al_2O_3$

According to another particular aspect of the present invention, the catalyst has the formula $Mo_kNi_l@Al_2O_3-Fe_3O_4$.

According to another particular aspect of the present invention, the catalyst has the formula $Mo_kNi_l@Fe_3O_4$, especially wherein the proportion of Mo is 10 wt% and the proportion of Ni is 4 wt%.

According to another particular aspect of the present invention, the catalyst has the formula $Mo_kNi_l@Fe_3O_4$, especially wherein the proportion of Mo is 7 wt% and the proportion of Ni is 2 wt%.

DESCRIPTION OF THE FIGURES

- figure 1 is a general scheme describing the procedure used for the preparation of the magnetic $Fe_3O_4$ particles: a) is a scheme of the reaction apparatus, b) represents the washing and drying step at 60 °C and c) shows the calcination step at 500 °C.
- figure 2 is the size distribution pattern of the $Fe_3O_4$ particles obtained according to Example 3: a) at 25 °C, b) at 40 °C, c) at 60 °C and d) at 80 °C.
- figure 3 is a SEM picture of the $Fe_3O_4$ particles obtained at 60 °C according to Example 3.
- figure 4 is a comparison between SEM pictures of the $Fe_3O_4$ particles obtained a) at 60 °C and b) at 25 °C according to Example 3.
- figure 5 is the size distribution pattern of the $Fe_3O_4$ particles obtained using different surfactants according to Example 4: a) with 6 g of CTAB, b) with 6 g of $P_{123}$, c) with 12 g of CTAB, d) without surfactant, e) with 6 g of citric acid and f) with 6 g of PVA.
- figure 6 is a comparison between SEM pictures of the $Fe_3O_4$ particles obtained using different surfactants according to Example 4: a) with CTAB, b) with $P_{123}$, c) without surfactant, d) with citric acid and e) with PVA.
- figure 7 is the size distribution pattern of the $Fe_3O_4$ particles obtained with different amounts of CTAB according to Example 5: a) with 6 g, b) with 12 g and c) with 18 g.
- figure 8 is the SEM pictures of the $Fe_3O_4$ particles obtained with different amounts of CTAB according to Example 5: a) with 12 g, b) with 6 g and c) with 18 g.
- figure 9 is the size distribution pattern of the $Fe_3O_4$ particles obtained with different reductants according to Example 6: a) with KOH, b) with $NaBH_4$ and c) with $NH_3$.
- figure 10 is the SEM pictures of the $Fe_3O_4$ particles obtained with different reductants according to Example 6: a) with KOH, b) with $NaBH_4$ and c) with $NH_3$.
- figure 11 is the size distribution pattern of the $Fe_3O_4$ particles obtained with different concentrations of KOH as reductant according to Example 7: a) 2.5 M, b) 3.75 M and c) 5 M.
- figure 12 is the SEM pictures of the $Fe_3O_4$ particles obtained with different concentrations of KOH as reductant according to Example 7: a) 5 M, b) 2.5 M and c) 3.75 M.
- figure 13 is the size distribution pattern of the $Fe_3O_4$ particles obtained with different amounts of $Fe^{3+}/Fe^{2+}$ according to Example 8: a) 12 g / 4.5 g, b) 16 g / 6 g and c) 8 g / 3 g.
- figure 14 is the SEM pictures of the $Fe_3O_4$ particles obtained with different amounts of $Fe^{3+}/Fe^{2+}$ according to Example 8: a) 8 g / 3 g, b) 12 g / 4.5 g and c) 16 g / 6 g.
- figure 15 is the size distribution pattern of the $Fe_3O_4$ particles obtained with different volumes of $H_2O$ according to Example 9: a) 120 mL and b) 80 mL.
- figure 16 is a general scheme of the calcination and reduction reactor. 1) Represents the calcination at 500 °C under a dry air flux and 2) represents the reduction under an hydrogen flux at 500 °C.
- figure 17 is the TEM picture of the $Mo_{0.28}Ni_{0.21}@Fe_3O_4$ particles, i.e. catalyst 1, according to Example 10.
- figure 18 is the TEM picture of the $Mo_{0.19}Ni_{0.18}@FeO_4$ particles, i.e. catalyst 2, according to Example 11.
- figure 19 is the size distribution pattern of the $Fe_3O_4-Al_2O_3$ particles obtained according to Example 12: a) $Al_2O_3$ particles alone, b) $Fe_3O_4-Al_2O_3$ ($Fe^{3+}/Fe^{2+}$ 2 g / 0.76 g), c) $Fe_3O_4-Al_2O_3$ ($Fe^{3+}/Fe^{2+}$ 4 g / 1.52 g) and d) $Fe_3O_4-Al_2O_3$ ($Fe^{3+}/Fe^{2+}$ 6 g / 2.28 g).
- figure 20 is an example of a SEM picture of the $Fe_3O_4-Al_2O_3$ particles obtained according to Example 12.
- figure 21 is the TEM picture of the $Mo_{0.28}Ni_{0.21}@Fe_3O_4-Al_2O_3$ particles, i.e. catalyst 3, according to Example 13.
- figure 22 is the TEM picture of the $Mo_{0.19}Ni_{0.18}@Fe_3O_4-Al_2O_3$ particles, i.e. catalyst 4, according to Example 14.
- figure 23 is the size distribution pattern of the $Al_2O_3-Fe_3O_4$ particles obtained according to Examples 15 to 17: a) $Al_2O_3-Fe_3O_4$ ($Al(NO_3)_3,9H_2O$; 5.41 g; Example 17), b) $Al_2O_3-Fe_3O_4$ ($Al(NO_3)_3,9H_2O$; 9.35 g; Example 17) and c) $Al_2O_3-Fe_3O_4$ ($Al(OCHCH_3CH_3)_3$; 5.14 g; Example 16).
- figure 24 is the SEM pictures of the $Al_2O_3-Fe_3O_4$ particles synthesized according to Examples 15 to 17.
- figure 25 is the electron microscopy pictures of the $Al_2O_3-Fe_3O_4$ particles obtained according to Examples 15 to 17

by a) SEM and b) TEM.

- figure 26 is the TEM picture of the $Mo_{0.28}Ni_{0.21}@Al_2O_3-Fe_3O_4$ particles, i.e. catalyst 5, according to Example 21.
- figure 27 is the TEM picture of the $Mo_{0.19}Ni_{0.18}@Al_2O_3-Fe_3O_4$ particles, i.e. catalyst 6, according to Example 22.
- figure 28 is a schematic representation of the different organic phase yields obtained after each catalyst regeneration (catalyst 1) according to Example 24.
- figure 29 is a comparison between the chromatograms of the different organic phases obtained after five catalytic cycles (catalyst 1) according to Example 24. The identification of the numbers on the chromatograms is given in Table 11.
- figure 30 is a schematic representation of the different organic phase yields obtained at different temperature (catalyst 1) according to Example 25.
- figure 31 is a schematic representation of the different organic phase yields obtained after each catalyst regeneration (catalyst 2) according to Example 26.
- figure 32 is a comparison between the chromatograms of the different organic phases obtained after three catalytic cycles (catalyst 2) according to Example 26. The identification of the numbers on the chromatograms is given in Table 13.
- figure 33 is a schematic representation of the different organic phase yields obtained after different reaction time (catalyst 3) according to Example 27.
- figure 34 is a comparison between the chromatograms of the different organic phases obtained after different reaction time (catalyst 3) according to Example 27. The identification of the numbers on the chromatograms is given in Table 16.
- figure 35 is a comparison between the chromatograms of the different organic phases obtained after three catalytic cycles (catalyst 4) according to Example 28. The identification of the numbers on the chromatograms is given in Table 19.
- figure 36 is a chromatogram of the organic phase obtained after a catalytic cycle (catalyst 5) according to Example 29. The identification of the numbers on the chromatograms is given in Table 20.
- figure 37 is a schematic representation of the different organic phase yields obtained after a catalyst regeneration (catalyst 6) according to Example 30.
- figure 38 is a comparison between the chromatograms of the different organic phase obtained after two catalytic cycle (catalyst 6) according to Example 30. The identification of the numbers on the chromatograms is given in Table 22.
- figure 39 is a longitudinal section of the device for the separation of the particles, comprising a charging zone (1), a mechanical tension (2), a V-bock (3) to separate the catalyst from the ashes, a container (4) for the aspired ashes, a container (5) for the cleaned catalyst and an aspiration (6).
- figure 40 is a transversal section of the device for the separation of the particles showing a three-phase gear train with a tension of 220/380 Volts - 50 Hz (9). The mean for the separation of the particles comprises a PVC belt with an unloading bracket (11).
- figure 41 is a top view of the device for the separation of the particles comprising a sheet of metal (7) to close the apparatus and a lateral protection (8).
- figure 42 is a perspective view of the device for the separation of the particles, showing a three-phase gear train with a tension of 220/380 Volts - 50 Hz (9). The mean for the separation of the particles is assembled on four adjustable feet (10) and comprises a PVC belt (11) with an unloading bracket.
- figure 43 is a schematic view of A) the device for the separation of the particles comprising a container (1) for the ashes composed of a filter (2) to collect the ashes and an aspiration (3), this container being located near a magnetized roller (4) supporting a conveyor belt (5) with the help of a second roller (6). The solid phase arrived on the conveyor belt via an inclined plane (11), the ashes (7) are aspired through the container (1) and the cleaned catalyst (10) is received by a container (9) through an inclined plane (8). B) View of the system along the AA' axes showing the U-form conveyor belt (12) adapted on supporting rollers (13). C) View of the system along the BB' axes showing the magnet (14), the magnetized roller axes (15) and the magnetic field lines (16).
- figure 44 is a scheme describing two different configurations of the catalytic reactor system used for the catalytic transformation of biomass into biofuel, according to Example 31. A is a representation of the catalyst which is separated by B a porous sintered plate from C the substrate. The gaseous phase resulting from the reaction is condensed in D the cold trap. P refers to a manometer and T to a thermometer.
- figure 45 is a schematic representation of the yields of the different phases, resulting from the biomass conversion, obtained with the two different configurations of the catalytic reactor system according to Example 31.
- figure 46 is a comparison between the chromatograms of the organic phases obtained with the two different configurations of the catalytic reactor system according to Example 31. The identification of the numbers on the chromatograms is given in Table 23.

Examples 1 to 23: Catalysts preparation

Chemical Products Used

$FeCl_3(H_2O)_6$; $FeCl_2(H_2O)_4$; KOH; CTAB; $P_{123}$; PVA; $HOC(COOH)(CH_2COOH)_2$; $NaBH_4$; $NH_3$; $Al_2O_3$; $Al(NO_3)_3,9H_2O$; $Al(OCHCH_3CH_3)_3$; $H_2SO_4$; $Ni(C_5H_7O_2)_2$; $(NH_4)_6Mo_7O_{24},4H_2O$ ; $NiBr_2$ ; $MoO_2Cl_2$.

**Examples 1 and 2: Synthesis of magnetic $Fe_3O_4$ particles**

**Example 1**

In a 250 mL three-neck round-bottom flask, 6 g of CTAB (cetyltrimethyl ammonium bromide), 6 g of $FeCl_3(H_2O)_6$ and 2.25 g $FeCl_2(H_2O)_4$ are suspended in 100 mL degassed $H_2O$, under Argon. This suspension is heated at 60 °C under stirring. 40 mL of a 5 M KOH degassed solution is next added dropwise. The mixture is then stirred for 2 hours at 60 °C under an argon flux. The resulted black solid is obtained by centrifugal process, washed 6 times with demineralized water and 2 times with acetone. The product is dried in a 80 °C oven and the dry solid is grinded and then calcined in a muffle furnace working at 500°C during 3 h. (figure 1).

**Example 2**

In a 2000 mL two-neck round-bottom flask, 6 g of CTAB, 12 g of $FeCl_3(H_2O)_6$ and 4,5 g of $FeCl_2(H_2O)_4$ are suspended in 120 mL degassed demineralized water, under argon. This suspension is heated to 60 °C under mechanical stirring until complete dissolution, and then 80 mL of a degassed KOH (5 M) solution is added dropwise. The resulted mixture is stirred for further 2 hours at 60 °C under an argon flux. A black solid is obtained by a centrifugal process separation and washed 6 times with demineralized water and 2 times with acetone. The recovered black product is dried in an oven at 80°C. The dry solid is grinded and calcined in a muffle furnace at 500°C during 4 h. (yield = 100 %).

**Examples 3 to 9: Optimization of the magnetite support synthesis parameters**

Several procedures could be used to prepare ferromagnetic (nano)-particles such as microemulsion, sol-gel methodologies and hydrothermal, sonochemistry, hydrolysis and thermolysis of precursors. The co-precipitation methodology is among the simplest and the most used in literature to achieve magnetic particles synthesis. Magnetic iron oxide particles ($Fe_3O_4$) are often prepared from a mixture of iron II and iron III oxide, in an alkaline aqueous media following the reaction Eq. 1.

$$2\,Fe^{3+} + Fe^{2+} + 8\,OH^- \rightarrow Fe_3O_4 + 4\,H_2O \qquad (Eq1)$$

Because of its colloidal nature, magnetic (nano)-particles synthesis and stabilization remain a complex process. In fact, a variation of experimental conditions is responsible for the size, the crystallographic structure and the specific surface area of the particles.

The first aim of this work is to optimize the experimental conditions, including temperature, time, relative concentrations, and the nature of surfactant as well as the type of base. All this parameters could play a role in forming magnetic oxide particles stable under air and under hydrogen at high temperature. Moreover, these particles should have a large specific area to be used as a support for heterogeneous catalysis.

The **Example 2** procedure is followed to optimize the synthesis parameters of the magnetite.

The studied parameters are the following:

- **Example 3: Influence of the temperature:** four samples of magnetite are synthesized following the procedure **(Example 2)** by varying the reaction temperature (25 ; 40 ; 60 ; 80 °C).
- **Example 4: Surfactant:** surfactants studied are CTAB, $P_{123}$, PVA and citric acid. One sample is realized without any surfactant.
- **Example 5: Quantity of CTAB:** two samples are realized in this study: one with a 6 g CTAB weight and the second with 18 g of CTAB.
- **Example 6: Nature of reductant:** three syntheses are realized varying the nature of reductant: $NaBH_4$, $NH_3$ and KOH.
- **Example 7: KOH concentration:** KOH concentration is calculated to be in large excess in first procedure. Testing

higher concentration is thus a loss of time and money. Two other concentrations will be tested: 2.5 and 3.75 M.

- **Example 8: Iron quantity:** different iron amount have been also tested. In one attempt, tested quantities are: 8g of $FeCl_3(H_2O)_6$ and 3g of $FeCl_2(H_2O)_4$. ; 16 g of $FeCl_3(H_2O)_6$ and 8 g of $FeCl_2(H_2O)_4$.
- **Example 9: Dilution:** the last factor studied is the water volume. 80mL instead of 120 mL is used for the first sample and 160mL for the second.

**Example 3: Influence of temperature**

For studying the influence of temperature, four samples are prepared at four different temperatures (25, 40, 60, 80 °C). The obtained particles are characterized by microscopy and BET; granulometry is also performed.

The yield of all synthesis is 100%. For the sample at 60 °C, all attempts formed magnetite particles. The table 1 shows that the specific surface area presents a maximum around 60 °C. Indeed, it increases from 43 $m^2/g$ at 25 °C to 73 $m^2/g$ at 60 °C. Then, this decreases by 7 $m^2/g$ when the temperature rises to 80 °C.

**Table 1:** Influence of the temperature on the yield, surface area and magnetization of iron oxide particles.

| Temperature (°C) | Weight (g) | Specific area ($m^2/g$) | Magnetism |
|---|---|---|---|
| 25 | 2.76 | 43 | Yes |
| 40 | 2.75 | 64 | Yes |
| 60 | 2.75 | 73 | Yes |
| 80 | 2.74 | 66 | Yes |

The granulometry analysis indicates that two size distributions coexist in this type of sample. The first is observed at 204 μm and the other is centered near 1760 μm (Figure 2). All samples show these distributions with a variation in their ratio. With an increase of the temperature, the small particles to large particles ratio decreases. Indeed, the increase of temperature increases thermal motion, which favors particles agglomeration.

Samples are also characterized by scanning electronic microscopy (SEM). The images of the particles obtained at 60 °C are presented in Figure 3. These pictures show a relatively homogeneous particle size distribution despite the presence of some large particles. This is in agreement with the granulometry measurement. Other magnification views allow the observation of a roughness of the compounds surface which may be responsible of the increase of the surface area. With similar size, a particle with more asperity will have a higher specific area.

The samples performed at 40 and 80 °C present a similar aspect. This is however not the case for the sample prepared at 25 °C. The micrograph showed in Figure 4-b) indicates a lower asperity degree of the particles.

All analyses realized showed that the temperature does not have a great influence on the particle size distribution. Nevertheless, the ratio between small and large particles is changing with the temperature. In addition, a clear influence has been observed on the specific surface area. The temperature that gives the highest surface area is 60 °C (73.5 $m^2/g$). The room temperature sample presents a very low specific area compared to the others. 60 °C will be chosen for further attempts to synthesize magnetite particles.

**Example 4: Influence of the nature of surfactant**

Five different surfactants have been tested in order to screen their impact on the structure, size and surface area of magnetite particles (CTAB, $P_{123}$, PVA, citric acid, and no surfactant). These surfactants are chosen since they are commonly used in the literature. The obtained particles, using 6g of surfactant, are also characterized through granulometry, microscopy and adsorption desorption at 77 K.

The obtained yields are around 100 % except the one with citric acid (Table 2). Each experiment yielded magnetic particles. As yield and magnetism are not sufficient to clearly distinguish between samples, therefore their surface area are measured. The lowest BET is observed with PVA (11 $m^2/g$). The highest is found with citric acid (105 $m^2/g$).

**Table 2:** Summary of the characteristics of the particles resulting from the surfactant influence experiment.

| Surfactant | Weight (g) | Specific area ($m^2/g$) | Magnetism |
|---|---|---|---|
| CTAB | 2.75 | 73 | Yes |
| $P_{123}$ | 2.65 | 73 | Yes |
| Without | 2.71 | 73 | Yes |
| Citric Acid | 2.33 | 105 | Yes |

(continued)

| Surfactant | Weight (g) | Specific area ($m^2/g$) | Magnetism |
|---|---|---|---|
| PVA | 2.89 | 11 | Yes |

The granulometry analyses show a great dependency between the surfactant in use and the particle size distribution (Figure 5). Some samples (CTAB, without surfactant, citric acid) show two size distributions. While another aspect of interest in our study is to obtain monodisperse distribution, the polydisperse samples obtained without surfactant and with $P_{123}$ are ruled out.

SEM pictures (Figure 6) show also different size and shape particles in function of the used surfactant. This analysis is in well agreement with the granulometry analysis. For instance, larger particles are formed without surfactant which is quite obvious on Figure 6-e).

The first thing that could be deduced is that in most cases, surfactant allows achieving particles with correct specific area (except with PVA). To choose the best one, other parameters have to be studied. Concerning the size distribution, $P_{123}$ and without surfactant samples are not convincing. Citric acid seems better since it allows performing high specific area particles. Other samples are realized to confirm this but they are not coherent. CTAB is thus selected as surfactant for other syntheses since it is reproducible.

**Example 5: Influence of surfactant quantity (CTAB)**

To optimize the synthesis protocol, three different quantities of CTAB are tested: 6 g, 12 g and 18 g. Samples are also characterized through granulometry, microscopy and adsorption desorption at 77 K.

The magnetism of the particles seems independent to the surfactant quantity presence in the media (Table 3). However, the area is influenced by the CTAB weight. More CTAB is inserted, more specific area decreases. Nevertheless, such a decrease of surfactant quantity leads to a considerable reduction of the yield.

**Table 3:** Summary of the characteristics of the particles resulting from the influence of the surfactant quantity experiment.

| Weight CTAB (g) | Weight (g) | Specific area ($m^2/g$) | Magnetism |
|---|---|---|---|
| 6 | 2.75 | 105 | Yes |
| 12 | 5.41 | 73 | Yes |
| 18 | 5.40 | 70 | Yes |

The granulometry analyses (Figure 7) of the different magnetite samples show a two-distribution pattern. A lower concentration decreases the difference existing between these two populations while a higher CTAB concentration enhances the phenomenon.

SEM pictures (Figure 8) differ depending on the sample. Larger particles are observed when CTAB weight is high. Large particles are also observed with decreasing CTAB quantity but in a less important way.

All these analyses show that use of surfactant in too large quantity is a mistake since it decreases the specific area and influences also the size of the resulting particles. Note that a too low quantity presents a very low specific area as the one observed without surfactant. It exists clearly an optimum of CTAB quantity which is around 6 g, i.e a mass concentration of 50 $g.L^{-1}$.

**Example 6: Influence of the nature of reductant**

Always with the aim to synthesize particles with the highest specific area while keeping a good particles size distribution, the influence of the nature of reductant is tested. Three reductants are studied: KOH, $NaBH_4$ and $NH_3$.

A large difference is observed between the particles weights recovered at the end of the reaction (Table 4). Only KOH can be used to form magnetic particles. Moreover, other reductants do not form particles with sufficient specific area to be interesting.

**Table 4:** Summary table of the characteristics of the particles resulting from the reductant influence experiment.

| Base or reducer | Weight (g) | Specific area ($m^2/g$) | Magnetism |
|---|---|---|---|
| KOH | 5.41 | 73 | Yes |
| $NH_3$ | 2.38 | 18 | No |

(continued)

| Base or reducer | Weight (g) | Specific area ($m^2/g$) | Magnetism |
|---|---|---|---|
| $NaBH_4$ | 3.39 | 61 | No |

The size distribution varies a lot between the samples as shown in Figure 9. $NaBH_4$ and $NH_3$ do not allow the synthesis of monodisperse particles.

The SEM pictures (Figure 10) show that $NaBH_4$ allows obtaining very small particles which seem friable. Particles with ammoniac addition appear to have a larger mean size than the one obtained with KOH.

Only KOH give interesting results. Indeed, it combines high specific area with magnetic particles. It will be used for further attempts.

**Example 7: Influence of the concentration of reductant**

As the reductant is determined, now it is important to assess which concentration is the most efficient. Three different KOH solutions are prepared: 2.5 M, 3.75 M and 5 M.

These particles are magnetic in each case. The maximum of the specific area is reached with a 3.75 M concentration. It gives also the largest yield (Table 5), the worst sample being obtained with the 2.5 M solution.

**Table 5:** Summary of the characteristics of the particles resulting from the KOH concentration influence experiment.

| [KOH] (M) | Weight (g) | Specific area ($m^2/g$) | Magnetism |
|---|---|---|---|
| 2.5 | 5.35 | 62 | Yes |
| 3.75 | 5.78 | 80 | Yes |
| 5.0 | 5.41 | 73 | Yes |

The particle size distribution of the different attempts is shown in Figure 11. The shape is similar in each case while the ratio between large and small particles is changing.

According Figure 12, larger particles are obtained with a higher concentration. In the case of low concentration, the sample seems to be more uniform.

All these analyses reveal that the KOH concentration has an effect on the size of particles, as well as on the specific area. A lower concentration (around 3.75 M) leads to an increase of the specific area.

**Example 8: Influence of iron quantities**

The iron quantities should be optimized. According to the literature, the best Fe (III) / Fe (II) molar ratio for magnetite is 2 / 1. This ratio will be used for further experiments. The tested iron quantities are [$FeCl_3(H_2O)_6$ (g) / $FeCl_2(H_2O)_4$ (g)] = 8/3; 12/4.5 and 16/6.

This parameter seems to have a small impact on the specific area, Table 6. Nonetheless, it could be noted that this surface is increasing when less iron is used.

**Table 6:** Summary of the characteristics of the particles resulting from the iron III / iron II amount variation experiment.

| Weight $Fe^{3+}$(g)/ Weight $Fe^{2+}$ (g) | Weight (g) | Specific area ($m^2/g$) | Magnetism |
|---|---|---|---|
| 8/3 | 5.78 | 79 | Yes |
| 12/4.5 | 5.41 | 73 | Yes |
| 16/6 | 7.33 | 74 | Yes |

The iron quantities in the media have a great impact on the size distribution (Figure 13). A low iron quantity yields a 304 $\mu$m mean particle size. This distribution is preferred since only one population is observed. Increasing the iron quantities leads to the formation of a new peak (1765 $\mu$m) while the smaller mean size decreases to 204 $\mu$m. By another increase of the iron amount, the second population mixed with the first one.

The sample with the highest iron quantity is the most uniform on dispersion of particles (Figure 14). The less homogeneous corresponds to the one with two populations.

Using a lower iron quantity appears to be an alternative for increasing specific area. This sample presents a true monodisperse population since only one population is seen (granulometry and SEM), even if its mean size is higher

(304 μm).

**Example 9: Influence of dilution**

The last parameter studied is the water volume added initially to the reaction mixture. Three different volumes are consequently tested: 80, 120 and 180 mL. In all of these experiments, the quantity for preparing the base at 5 M stays the same: 80mL.

As shown in Table 7, an increase of the specific area is observed with an increase of the water volume. All particles obtained are magnetic and the yields stay high in each case.

**Table 7:** Summary of the characteristics of the particles resulting from the influence of water quantity experiment.

| $H_2O$ volume (mL) | Weight (g) | Specific area ($m^2/g$) | Magnetism |
|---|---|---|---|
| 80 | 5.37 | 67 | Yes |
| 120 | 5.41 | 73 | Yes |
| 160 | 5.69 | 96 | Yes |

In the case of the lowest $H_2O$ volume, a population of 318 μm mean size is observed which is larger than the particles obtained when more $H_2O$ is added. The formation of particles larger than 2880 μm is inherent to this sample (Figure 15).

According to these results, increasing the water volume increases the specific area of the particles. The rise of the water amount affects the concentration of iron precursors in the particles and leads to a decrease of the particle size and thus an increase of the surface area.

**Example 10: $Mo_{0.28}Ni_{0.21}$@$Fe_3O_4$ catalyst preparation by impregnation in water (Catalyst 1)**

3 g of $Fe_3O_4$ (prepared according to Example 2) and 10 mL of water are inserted in a 100 mL round-bottom flask. 650 mg of ammonium heptamolybdate tetrahydrate ($(NH_4)_6Mo_7O_{24}\cdot 4H_2O$) and 700 mg of nickel(II) acetylacetonate are added. The mixture is mechanically stirred at room temperature during 12 h. The resulting red powder, obtained after water evaporation, is dried at 80 °C during 6 h. The product is then calcined at 500 °C during 3 h and reduced under a hydrogen flux at 500 °C during 3 h (Figure 16). Finally, the product is characterized by TEM (Transmission Electron Microscopy; Figure 17) and BET (surface area = 65 $m^2/g$).

**Example 11: $Mo_{0.19}Ni_{0.18}$@$Fe_3O_4$ catalyst preparation by surface organometallic chemistry grafting (Catalyst 2)**

Calcined $Fe_3O_4$ is dehydroxylated at 200 °C. 3 g of this residue, 20 ml of dry pentane, 500 mg of $MoO_2Cl_2$ and 500 mg of $NiBr_2$ are inserted in a round-bottom flask under inert atmosphere. The mixture is stirred during 6 h. The product is then washed three times with 30 mL of dry pentane in order to remove excess of non-reacted metallic precursor. The resulting powder is dried at 80 °C under a dry air flux. The catalyst is then calcined 3 h under a dry air flux at 500 °C and later reduced for 3 h under a hydrogen flux at 500 °C. The final product is characterized by TEM (Figure 18) and BET (Surface area = 68 $m^2/g$).

**Example 12: $Fe_3O_4$-$Al_2O_3$ core-shell preparation**

In a 2000 mL two-neck round-bottom flask, 20 mL of degassed demineralized water are inserted. 2 g of $Al_2O_2$, 4 g of CTAB, 1 g of $FeCl_3(H_2O)_6$ and 0.38 g of $FeCl_2(H_2O)_4$ are added. This suspension is heated to 60 °C under mechanical stirring until complete dissolution. 40 mL of a 5 M degassed KOH aqueous solution is added dropwise. The mixture is stirred for 2 hours at 60°C under Argon flux. The resulting solid is isolated by centrifugal process, washed 6 times with demineralized water and 2 times with acetone. The powder is then dried in an 80 °C oven. The dry solid is next calcined in a muffle furnace working at 500°C during 4 h. The sample is named BN02A.

The procedure is repeated with doubling the two iron quantities and the resulted sample is named BN02B. A BET comparison analysis on these two compounds containing alumina is presented in table 8.

**Table 8**: Summary of the characteristics of the $Fe_3O_4$-$Al_2O_3$ particles resulting from the synthesis by $Fe_3O_4$ coating on $Al_2O_3$

| | Temperature (°C) | Weight (g) | Specific area ($m^2/g$) | Acid washing | Magnetic |
|---|---|---|---|---|---|
| Alumina | \ | \ | 155 | \ | \ |
| BN02A | 60 | 1.94 | 148 | yes | Low |
| BN02B | 60 | 2.57 | 135 | no | Yes |
| $Fe_3O_4$ | 60 | 2.7 | 73 | \ | Yes |

One can deduce from these results that, more iron is added, more the specific area decreases, which is in agreement with what we expect. Despite this, the specific area stay quite high compared to the attempts with only the magnetite particles as shown in Table 8.

Three supplementary syntheses are performed, modifying the iron quantity used. The procedure is similar to the previous one. Iron quantity tested are 2 g of $FeCl_3(H_2O)_6$ and 0.76 g of $FeCl_2(H_2O)_4$ for the first attempt; 4 g of $FeCl_3(H_2O)_6$ and 1.52 g of $FeCl_2(H_2O)_4$ for the second and finally 6 g of $FeCl_3(H_2O)_6$ and 2.28 g of $FeCl_2(H_2O)_4$ for the third one (table 9). The specific area is decreasing while the iron amount is increasing.

This is easily understood since the particles are covered with a material with lower specific area. All samples are magnetic.

**Table 9:** Summary of the results obtained with grafting magnetite on alumina

| Weight $Fe^{3+}$(g)/$Fe^{2+}$(g) | Weight (g) | Specific area ($m^2/g$) | Magnetism |
|---|---|---|---|
| 1/0.38 | 1.95 | 148 | Yes |
| 2/0.76 | 4.26 | 135 | Yes |
| 4/1.52 | 4.87 | 131 | Yes |
| 6/2.28 | 5.92 | 127 | Yes |

Size distributions are similar between all samples (Figure 19). One population is present at 27 $\mu$m. However, another population (198 $\mu$m) is growing since the iron quantity is increased. Rising iron quantity leads to a higher monodispersity.

On SEM analysis (Figure 20), spherical particles are observed. This is explained by the alumina particles shape which is already spherical. It is the first time that such kind of shape is observed in our attempts.

The specific area of each sample is important but tends to shrink when magnetite quantity increases. One sample is reproduced to make further characterizations. Specific area is identical to the first one and thus implies a good reproducibility of the procedure. All products formed are magnetic. According to its size distributions, the sample with 2 g of $Fe^{3+}$ and 0.76 g of $Fe^{2+}$ is selected as the best support performed by this procedure.

These supports will be further functionalized with Mo and Ni by two different ways (aqueous solution impregnation and area organometallic chemistry grafting approach).

**Example 13: $Mo_{0.28}Ni_{0.21}$@$Fe_3O_4$-$Al_2O_3$ catalysts preparation by impregnation in water (Catalyst 3)**

3 g of core-shell $Fe_3O_4$-$Al_2O_3$ and 5 mL of water are inserted in a round-bottom flask. Under stirring at room temperature, 650 mg of ammonium heptamolybdate tetrahydrate ($(NH_4)_6Mo_7O_{24}\cdot 4H_2O$) and 700 mg of nickel(II) acetylacetonate are added. The mixture is stirred until water evaporation and then dried at 80 °C during 6 h. The product is next calcined at 500 °C under dry air during 3 h, and then reduced under a hydrogen flux at 500 °C during 3 h (Figure 16). Finally, the product is characterized by TEM (Figure 21) and BET (specific area).

**Example 14: $Mo_{0.19}Ni_{0.18}$@$Fe_3O_4$-$Al_2O_3$ catalysts preparation by surface organometallic chemistry grafting (Catalyst 4)**

Calcined core-shell $Fe_3O_4$-$Al_2O_3$ is dehydroxylated at 200 °C. 3 g of this residue, 20 mL of dry pentane, 500 mg of $MoO_2Cl_2$ and 500 mg of $NiBr_2$ are inserted in a flask under inert atmosphere. The mixture is stirred during 6 h. The product is then washed three times with 30 mL of dry pentane in order to remove the excess of physisorbed metallic precursor. Material resulted is dried and a small air quantity is inserted. The compound is then calcined 3 h under a dry air flux at 500 °C and after reduced 3 h under a hydrogen flux at 500 °C. The final product is characterized by TEM

(Figure 22) and BET.

**Examples 15 to 20: $Al_2O_3$-$Fe_3O_4$ core-shell preparation**

The aim of this synthesis is to prepare $Fe_3O_4$ core / $Al_2O_3$ shell structure. Two methods are foreseen: the first one including the synthesis of magnetite particles in a precedent step following the described procedure (example 2). Then the resulted magnetic iron oxide particles are coated in aqueous solution with alumina (2 steps). The second way involves the synthesis of magnetite particles and their coating by alumina *in situ,* before their isolation from the reaction medium (1 step).

Several methods are tested for synthesizing magnetite core and alumina shell. After the set-up of an experimental procedure, several parameters are tested as surfactant nature, quantity, temperature, solvent used in order to optimize the synthesis.

**Examples 15 to 17: Alumina coating in two steps**

This synthesis in two steps is realized as follow: in the first time, magnetite particles are synthesized as described in Example 2. Then, after isolation, alumina is added to cover the magnetite particles.

**Synthesis**

**Example 15**

In a 2000 mL two-neck round-bottom flask under an argon flux, 6 g of $P_{123}$ is dissolved in 20 g of butanol. 1 g of $Fe_3O_4$ particles is added followed by a vigorous mechanical stirring to disperse well the magnetite particles. 5.19 g of aluminum isopropoxide are inserted. The mixture is stirred then 6 hours, under argon. 0.8 mL of water mixed with 8 g of butanol are added to the mixture and stirred overnight. The mixture is then dried in an oven at 80 °C to remove the residual solvents. The resulting solid is grinded and then calcined 4 hours at 500 °C in a muffle furnace.

**Example 16**

In a 2000 mL two-neck round-bottom flask under an argon flux, 6 g of CTAB are dissolved in 20 g of butanol. 1 g of $Fe_3O_4$ particles is added followed by a vigorous mechanical stirring to disperse correctly the magnetite particles. 5.19 g of aluminum isopropoxide are inserted. A 50 °C heating is applied few minutes to facilitate the dissolution of the surfactant and the aluminum precursor. The solution is then stirred for 6 hours. 0.8 mL of water mixed with 8 g of butanol are added to the mixture and stirred overnight. The mixture is then dried at 80 °C in an oven to remove the residual solvents. The resulting solid is grinded and then calcined 4 hours at 500 °C in a muffle furnace.

**Example 17**

In a 2000 mL two-neck round-bottom flask under an argon flux, 6 g of CTAB is dissolved in 50 g of demineralized water. 1 g of $Fe_3O_4$ particles is added followed by a vigorous mechanical stirring to help the dispersion of the magnetite particles. 9.35 g or 5.41 g of nonahydrated aluminum nitrate are then added and the mixture is stirred for 1 h. A 50 °C heating is used few minutes to facilitate the dissolution of the surfactant and the aluminum precursor. The flask is then opened to evaporate water leading to a highly viscous solution. $NN_3$ is steamed overnight through the reaction mixture by connecting an $NN_3$ containing flask to synthesize an $Al(OH)_3$ film. The mixture is then dried in an oven at 80 °C. The resulting solid is then calcined 4 hours at 500 °C in a muffle furnace.

**Characterization**

Five samples are synthesized following the three aforementioned procedures. The results obtained are given in Table 10. In general, a low yield and a high specific area are observed. Changing experimental parameters allow performing magnetic particles. Only the fourth attempt is interesting since it owns a high specific area and a magnetic character.

**Table 10:** Summary of the characteristics of the particles resulting from the attempts realized by the alumina grafting on magnetite particles

| Temperature of the $Fe_3O_4$ synthesis (°C) | Weight of $Al_2O_3$-$Fe_3O_4$ (g) | Specific area ($m^2/g$) | Magnetism | Surfactant | Aluminum precursor [amount (g)] | Solvent |
|---|---|---|---|---|---|---|
| 70 | 1.32 | 379 | No | $P_{123}$ | $Al(OCHCH_3CH_3)_3$ [5.15] | Butanol |
| 70 | 1.84 | 327 | No | $P_{123}$ | $Al(OCHCH_3CH_3)_3$ [10.28] | Butanol |
| 50 | 2.31 | 223 | Yes | CTAB | $Al(OCHCH_3CH_3)_3$ [15.42] | $H_2O$ |
| 80 | 1.55 | 295 | Yes | CTAB | $Al(NO_3)_3$,$9H_2O$ [5.41] | $H_2O$ |
| 80 | 2.10 | 186 | Yes | CTAB | $Al(NO_3)_3$,$9H_2O$ [9.35] | $H_2O$ |

When the amount of Aluminum precursor ($Al(OCHCH_3CH_3)_3$ or $Al(NO_3)_3$,$9H_2O$) increases, the surface area decreases despite the type of surfactant in use: $P_{123}$ (Table 10 lines 1 and 2) or CTAB (Table 10 lines 4 and 5).

There is a large disparity between the samples of this survey as demonstrated by Figure 23. Example 17 possesses a homogeneous size distribution centered on a 40 $\mu$m size (Figure 23-(a,b); Table 10, lines 4-5).

Figure 24 is an example of alumina plated on magnetite particles seen by SEM analysis. The deposit seems to be uniform in this picture. As a consequence of the higher alumina roughness, an increase of the specific area of the final product is achieved.

On Figure 25 (A), the sample shows a good homogeneity (the alumina is present on the form of stick). The particles seem smaller, in agreement with the results of the granulometry analysis. On Figure 25 (B), the particles show a fibrous shape.

Several observations are made from these results. The size of the particles is generally larger than the particles of magnetite without alumina. Alumina have a high specific area (155 $m^2/g$), and grafting this on the magnetite particles allows a considerable increase of the magnetite specific area. Modifying the surfactant and the solvent allow the synthesis of magnetic particles. Varying alumina precursor enable the synthesis of monodisperse particles, the particle size being increased by the increase of $Al(NO_3)_3$,$9H_2O$ quantity in the mixture. This last condition parameter is consequently selected for synthesizing the catalyst.

**Examples 18 to 20: $Fe_3O_4$ core / $Al_2O_3$ shell synthesis in one step**

An experiment allowing to investigate the precipitation limit of $Al(OH)_3$ is realized. For pH around 10 and above, the precipitate quantity of $Al(OH)_3$ begin to decrease, because of the $[Al(OH)_4]^-$ ion formation. With a pH below 7, the $Al(OH)_3$ stay in solution and $Fe_3O_4$ can react to form $Fe_2O_3$. As a consequence, the pH will be fixed to 9 for the synthesis of the $Fe_3O_4$ core / $Al_2O_3$ shell particles.

**Example 18: Alumina addition after 2 hours and the pH adjustement**

In a 2000 mL two-neck round-bottom flask, 120 mL of demineralized water degassed under an argon flux, 12 g of CTAB, 12 g of $FeCl_3(H_2O)_6$ and 4.5 g of $FeCl_2(H_2O)_4$ are inserted. This suspension is heated to 60 °C under mechanical stirring until complete dissolution. 80 mL of a 5 M KOH degassed solution is next added dropwise. The mixture is stirred then 2 hours at 60 °C under Argon. The pH is monitored and adjusted to 9 by adding $H_2SO_4$ or KOH. $Al(NO_3)_3(H_2O)_9$ is added (51.4 g) and the mixture is stirred for 30 minutes. The resulting solid is obtained by a centrifugal process and washed 6 times with demineralized water and next 2 times with acetone. The product is next dried in a 80°C oven. The dry solid is grinded and calcined in a muffle furnace working at 500°C during 4 h.

**Example 19: Alumina addition at the beginning of the reaction**

In a 2000 mL two-neck round-bottom flask, 120 mL of demineralized water degassed under an argon flux, 12 g of CTAB, 12 g of $FeCl_3(H_2O)_6$, 4.5 g of $FeCl_2(H_2O)_4$ and 51.4 g of $Al(NO_3)_3(H_2O)_9$ are inserted. This suspension is heated to 60 °C under mechanical stirring until complete dissolution of the reactants. 80 mL of a KOH (5 M) degassed solution is then added dropwise. Afterwards the solution is stirred for further 2 hours at 60 °C under Argon. Before the

centrifugal process separation, the pH is monitored and adjusted to 9. The resulting solid is obtained by a centrifugal process and washed 6 times with demineralized water and 2 times with acetone. The solid product is dried in an oven at 80°C. The dry solid is grinded and calcined in a muffle furnace at 500°C during 4 h.

**Example 20: Alumina addition after 2 hours and before the pH adjustement**

In a 2000 mL two-neck round-bottom flask, 120 mL of demineralized water degassed under an argon flux, 12 g of CTAB, 12 g of $FeCl_3(H_2O)_6$ and 4.5 g of $FeCl_2(H_2O)_4$ are inserted. This suspension is heated to 60 °C under mechanical stirring until complete dissolution of the reactants. 80 mL of a KOH (5 M) degassed solution is then added dropwise. The mixture is stirred for further 2 hours at 60 °C under an argon flux. $Al(NO_3)_3(H_2O)_9$ is added (51.4 g) and stirred for 30 minutes. The pH is monitored and adjusted to 9. The resulted solid is recovered by a centrifugal process separation and washed 6 times with demineralized water and next 2 times with acetone. The product is dried in an oven at 80°C. The dry solid is grinded and calcined in a muffle furnace at 500°C during 4 h.

**Example 21: $Mo_{0.28}Ni_{0.21}$@$Al_2O_3$-$Fe_3O_4$ catalysts preparation by impregnation in water (Catalyst 5)**

3 g of core-shell $Al_2O_3$-$Fe_3O_4$ (synthesized in a precedent step according to Example 16) and 5 mL of water are inserted in a round-bottom flask. Under stirring at room temperature, 650 mg of ammonium heptamolybdatetetrahydrate ($(NH_4)_6Mo_7O_{24}{\cdot}4H_2O$) and 700 mg of nickel(II) acetylacetonate are added. The mixture is stirred until water evaporation and then dried at 80 °c during 6 h. The product is calcined at 500 °C under dry air during 3 h, and then reduced under a hydrogen flux at 500 °C during 3 h (Figure 16). Finally, the product is characterized by TEM (Figure 26) and BET (specific area).

**Example 22: $Mo_{0.19}Ni_{0.18}$@$Al_2O_3$-$Fe_3O_4$ catalysts preparation by surface organometallic chemistry grafting (Catalyst 6)**

Calcined core-shell $Al_2O_3$-$Fe_3O_4$ is deshydroxylated at 200 °C. 3 g of this residue, 20 mL of dry pentane, 500 mg of $MoO_2Cl_2$ and 500 mg of $NiBr_2$ are added in a flask under inert atmosphere. The mixture is stirred during 6 h. The product is then washed three times with 30 mL of dry pentane in order to remove the excess of physisorbed metallic precursor. The resulting material is dried and a small air quantity is inserted. Compound is then calcined 3 h under dry an air flux at 500 °C and later reduced over 3 h under a hydrogen flux at 500 °C. The final product is characterized by TEM (Figure 27) and BET.

**Example 23: Synthesis of $NiFe_2O_4$ particles**

The experimental approaches followed is similar to the one used for the magnetite synthesis. In this experiment iron chloride II is replaced by nickel(II) acetylacetonate. After nickel addition, ocher color is observed. KOH is then added leading to the formation of black solid. Particles are afterwards separated by mean of centrifugal process. The product is washed and dried in an oven at 80 °C. It is then calcined in a muffle furnace at 500°C during 4 h.

**Catalytic activity tests (one step catalysis)**

**Examples 24 and 25: Catalytic performances of catalyst 1 in the hydro-conversion of pine wood**

10 g of the pine wood powder was mechanically mixed with 1.5 g of bimetallic catalyst 1, 15 wt. % ($Mo_{0.28}Ni_{0.21}$@$Fe_3O_4$), the mixture was then inserted into a batch reactor from Paar Instrumentation (capacity: 300 mL) made of stainless steel. The batch reactor was installed and heated under vacuum (~$10^{-2}$ mbar) at 60 °C for 30 min under a stirring of 500 rounds/min. Then, 40 bars of hydrogen are inserted in the reactor before heating at 470°C (5°C/min); at 470°C a pressure of 100-110 bars inside the reactor was reached. After 3 h at 470 °C, the liquid phase product was collected under vacuum to a specific cooled trap placed into liquid nitrogen (-195 °C). The organic phase (bio-oil) was separated by decantation at low temperature (-10 °C).

**Example 24: Recycling of the catalyst 1**

The study of the catalyst recycling by recovering the insoluble solid after each test was performed. The solid phase contains mainly the catalyst, salt and coke. The recycling procedure, according to a batch reaction, consists on first burning the carbon under continuous flow of oxygen at 500 °C for 2 h, followed by a two times washing with water, the magnetic particles of catalyst being separated from the carbon residues with a magnet. The resulting cleaned catalyst

particles are dried at 100 °C. At the end, the catalyst was reduced at 500 °C under hydrogen for 3 h. According to a reaction performed in a continuous fashion, the separating step will be carried out using an air flux and a device for the separation of particles such as the device described on figures 39 to 43. The recycled catalyst was tested under the same conditions (temperature = 470 °C, hydrogen pressure = 40 bars, and time = 3 h). Eight cycles were performed under those conditions, following the same recycling procedure after each cycle and the yields of organic fraction are constantly around 35 wt% as highlighted in figure 28.

The water content of the organic phase was determined by the Karl-Fischer method. The organic phase was analyzed by GC-MS and by elemental analyses of C, H, N, and O. The reaction was moreover carried out two times using another catalyst batch and similar results were obtained. The results are therefore reproducible.

The chemical components constituting the organic fraction are identified by mean of GC-MS analyses (Figure 29 and Table 11). The major compounds are phenol derivatives highly deoxygenated, originated from the lignin conversion.

**Table 11:** The organic products attributed to numbers represented in different GC-MS chromatograms (figure 29)

| | | | | | | |
|---|---|---|---|---|---|---|
| **1** | **2** | **3** | **4** | **5** | **6** | **7** |
| 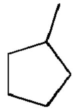 | 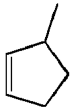 | 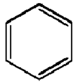 | 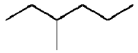 | 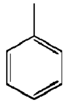 | 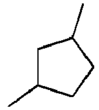 | 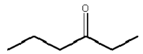 |
| **8** | **9** | **10** | **11** | **12** | **13** | **14** |
| 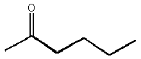 | $C_8H_{18}$ | 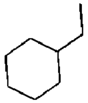 | 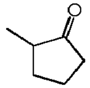 | 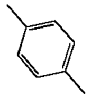 | 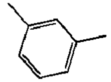 | 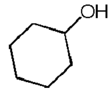 |
| **15** | **16** | **17** | **18** | **19** | **20** | **21** |
| $C_9H_{20}$ | 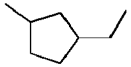 | 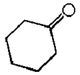 | 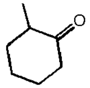 | 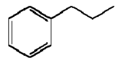 | 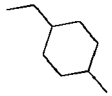 | 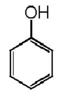 |
| **22** | **23** | **24** | **25** | **26** | **27** | **28** |
| 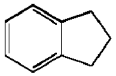 | 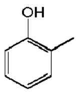 | 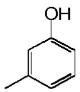 | $C_{11}H_{24}$ | 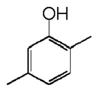 | 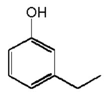 | 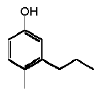 |
| **29** | **30** | **31** | **32** | **33** | **34** | **35** |
| 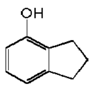 | 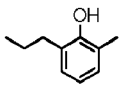 | 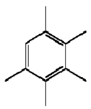 | $C_{16}H_{34}$ | $C_{17}H_{36}$ | $C_{18}H_{38}$ | 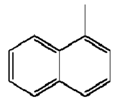 |
| **36** | **37** | **38** | **39** | **40** | **41** | **42** |
| 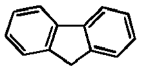 | 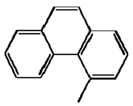 | 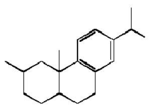 | 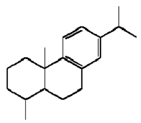 | 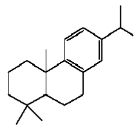 | 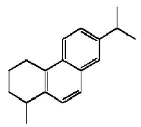 | 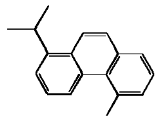 |

The composition of the organic phases as well as the amount of carbon still present in the aqueous fraction obtained by the catalytic tests are summarized in table 12. As shown, the amount of oxygen is very low (< 5 wt%). Note that some carbon is still detected in the aqueous phase.

**Table 12:** Weight composition of the liquid phases for the catalysts 1 determined by elemental analysis

| Cycles | organic phase C / O / H / N (wt. %) | % of water in organic phase | Carbon in aqueous phase (wt. %) |
|---|---|---|---|
| 1 | 82.5 / 4.5 / 12 / 1 | 0.4 | 3 |
| 2 | 82 / 4.4 / 13 / 0.6 | 0.5 | 3.5 |
| 3 | 83/ 4.3 / 12/ 0.7 | 0.3 | 2.8 |
| 4 | 82.5 / 3.9 / 13 / 0.6 | 0.3 | 2.5 |
| 5 | 82/ 4.2 / 13/ 0.8 | 0.4 | 3.4 |
| 6 | 82.8 / 4.5 / 12.1 / 0.6 | 0.6 | 3.1 |
| 7 | 82.4 / 5.1 / 11.6 / 0.9 | 0.5 | 2.8 |
| 8 | 82.1/ 4.6 / 12.6/ 0.7 | 0.7 | 2.9 |

**Example 25: Influence of the temperature on the catalytic conversion of pine wood in presence of catalyst 1**

**Temperature** = **400°C:** 10 g of the pine wood powder was mechanically mixed with 1.5 g of bimetallic catalyst 15 wt. % ($Mo_{0.28}Ni_{0.21}@Fe_3O_4$) and the mixture was inserted into a batch reactor from Paar instrumentation (capacity: 300 mL) made of stainless steel.

The batch reactor was installed and heated under vacuum (~mbar) at 60 °C for 30 min under a stirring of 500 rounds/min. Then, 40 bars of hydrogen are inserted in the reactor, before heating at 400 °C (5°C/min); at 400 °C a pressure of 80-90 bars inside the reactor was reached.

After 3 hours at 400 °C, the liquid phase product was collected under vacuum to a specific trap placed into liquid nitrogen (-195 °C). The organic phase (bio-oil) was separated by freezing the aqueous phase at -30 °C.

The water content of the bio-oil was determined by the Karl-Fischer method. The organic phase was analyzed by GC-MS and by elemental analysis of C, H, N, and O.

The yield of the organic phase is about 15 wt. % (Figure 30).

**Temperature** = **450°C:** 10 g of the pine wood powder was mechanically mixed with 1.5 g of bimetallic catalyst 15 wt. % ($Mo_{0.28}Ni_{0.21}@Fe_3O_4$) and the mixture was inserted into a batch reactor from Paar instrumentation (capacity: 300 mL) made of stainless steel.

The batch reactor was installed and heated under vacuum (~mbar) at 60 °C for 30 min under a stirring of 500 rounds/min. Then, 40 bars of hydrogen are inserted in the reactor, before heating at 450 °C (5°C/min); at 450 °C the pressure inside the reactor reached 90-100 bars.

After 3 h at 450 °C, the liquid phase product was collected under vacuum to a specific trap placed into liquid nitrogen (-195 °C). The organic phase (bio-oil) was separated by freezing the aqueous phase at -30 °C.

The water content of the bio-oil was determined by the Karl-Fischer method. The organic phase was analyzed by GC-MS and by elemental analysis of C, H, N, and O.

The yield of the organic phase is about 26 wt. % (Figure 30).

**Example 26: Catalytic performances of catalyst 2 in the hydro-conversion of pine wood** 10 g of the pine wood powder was mechanically mixed with 1.5 g of catalyst 2 ($Mo_{0.19}Ni_{0.18}@Fe_3O_4$) and the mixture was inserted into a batch reactor from Paar instrumentation (capacity: 300 mL) made of stainless steel.

The batch reactor was installed and heated under vacuum (~mbar) at 60 °C for 30 min under a stirring of 500 rounds/min. Then, 40 bars of hydrogen are inserted in the reactor, before heating at 470 °C (5°C/min); at 470 °C the pressure inside the reactor reached 100-110 bars. After 3 h at 470 °C, the liquid phase product was collected under vacuum to a specific trap placed into liquid nitrogen (-195 °C). The organic phase (bio-oil) was separated by freezing the aqueous phase at -30 °C with a yield of 35 %.

**Recycling of the catalyst 2**

The study of the catalyst recycling by recovering the insoluble solid after each test was performed. The solid phase contains mainly the catalyst, salt and coke.

The recycling procedure consists on first burning the carbon under continuous flow of oxygen at 500 °C for 2 h, followed by a two-times washing with water and then a drying at 100 °C. At the end, the catalyst was reduced at 500 °C under hydrogen for 3 h. The catalyst is separated from the carbon residue by a magnet. The recycled catalyst was tested under the same conditions (temperature = 470 °C, hydrogen pressure = 40 bars, and time = 3 h). Three cycles were performed under those conditions, following the same recycling procedure after each cycle and the yields of the organic fractions are highlighted in figure 31.

The organic phase was characterized by GC-MS and by elemental analysis of C, H, N, and O. The figure 32 showed the comparison of the GC-MS chromatograms of the obtained organic phases.

**Table 13:** The organic products attributed to numbers represented in different GC-MS chromatograms (Figure 32)

| 1 | 2 | 3 | 4 | 5 | 6 | 7 |
|---|---|---|---|---|---|---|
| 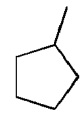 | 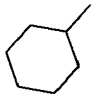 | 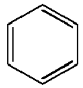 | 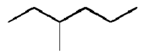 | 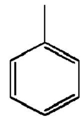 | 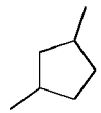 | 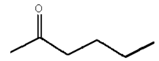 |
| **8** | **9** | **10** | **11** | **12** | **13** | **14** |
| $C_8H_{18}$ | 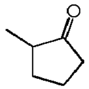 | 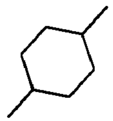 | 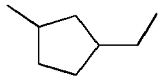 | 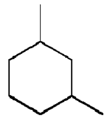 | 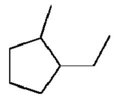 | 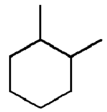 |
| **15** | **16** | **17** | **18** | **19** | **20** | **21** |
| 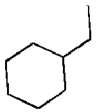 | 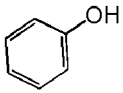 | 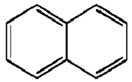 | 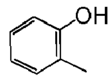 | 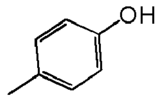 | 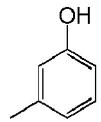 | $C_{11}H_{24}$ |
| **22** | **23** | **24** | **25** | **26** | **27** | **28** |
| 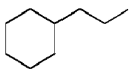 | 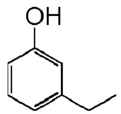 | 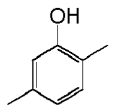 | 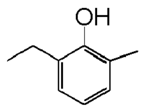 | 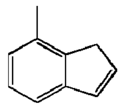 | 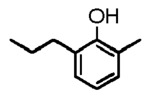 | 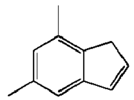 |
| **29** | **30** | **31** | **32** | **33** | **34** | **35** |
| 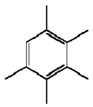 | 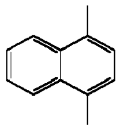 | $C_{16}H_{34}$ | $C_{17}H_{36}$ | $C_{18}H_{38}$ | 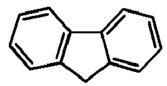 | 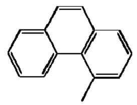 |
| **36** | **37** | **38** | **39** | **40** | | |
| 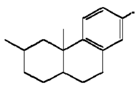 | 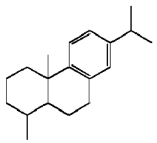 | 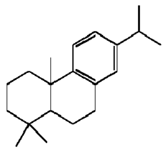 | 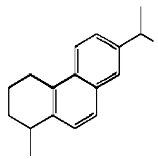 | 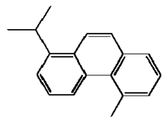 | | |

The elemental content of C, H, O and N of the organic fractions for each cycle are determined. The composition of organic phases as well as the amount of carbon still present in the aqueous fraction obtained for the catalytic tests are summarized in table 14.

**Table 14:** Weight composition of the liquid phases for the catalysts 2 determined by elemental analysis

| Cycles | organic phase C / O / H / N (wt. %) | Carbon in aqueous phase (wt. %) |
|---|---|---|
| 1 | 81.9 / 5.1 / 12.2 / 0.8 | 2.8 |
| 2 | 82.9 / 5 / 11.5 / 0.6 | 3.2 |
| 3 | 82.0 / 5.3 / 12.0/ 0.7 | 2.8 |

**Example 27: Effect of the time reaction on the catalytic conversion of pine wood in presence of catalyst 3**

**Time of reaction = 1 h**

10 g of the pine wood powder was mechanically mixed with 1.5 g of the magnetic catalyst 3 ($Mo_{0.28}Ni_{0.21}@Fe_3O_4-Al_2O_3$) and the mixture was inserted into a batch reactor from Paar instrumentation (capacity: 300 mL) made of stainless steel.

The batch reactor was installed and heated under vacuum (~mbar) at 60 °C for 30 min under a stirring of 500 rounds/min. Then, 40 bars of hydrogen are inserted in the reactor, before heating at 470 °C (5°C/min); at 470 °C the pressure inside the reactor reached 100-110 bars.

After 1 hour at 470 °C, the liquid phase product was collected under vacuum to a specific trap placed into liquid nitrogen (-195 °C). The organic phase (bio-oil) was separated by freezing the aqueous phase at -30 °C.

The yield of the organic phase is about 33 wt. % (Figure 33).

**Time of reaction = 3 h**

10 g of the pine wood powder was mechanically mixed with 1.5 g of the magnetic catalyst 3 ($Mo_{0.28}Ni_{0.21}@Fe_3O_4-Al_2O_3$) and the mixture was inserted into a batch reactor from Paar instrumentation (capacity: 300 mL) made of stainless steel.

The batch reactor was installed and heated under vacuum (~mbar) at 60 °C for 30 min under a stirring of 500 rounds/min. Then, 40 bars of hydrogen are inserted in the reactor, before heating at 470 °C (5°C/min); at 470 °C the pressure inside the reactor reached 100-110 bars. After 3 hours at 470 °C, the liquid phase product was collected under vacuum to a specific trap placed into liquid nitrogen (-195 °C). The organic phase (bio-oil) was separated by freezing the aqueous phase at -30 °C.

The yield of the organic phase is about 35 wt. % (Figure 33).

**Time of reaction = 5 h**

10 g of the pine wood powder was mechanically mixed with 1.5 g of the magnetic catalyst catalysts 3 ($Mo_{0.28}Ni_{0.21}@Fe_3O_4-Al_2O_3$) and the mixture was inserted into a batch reactor from Paar instrumentation (capacity: 300 mL) made of stainless steel.

The batch reactor was installed and heated under vacuum (~mbar) at 60 °C for 30 min under a stirring of 500 rounds/min. Then, 40 bars of hydrogen are inserted in the reactor, before heating at 470 °C (5°C/min); at 470 °C the pressure inside the reactor reached 100-110 bars. After 5 hours at 470 °C, the liquid phase product was collected under vacuum to a specific trap placed into liquid nitrogen (-195 °C). The organic phase (bio-oil) was separated by freezing the aqueous phase at -30 °C.

The yield of the organic phase is about 32 wt. % (Figure 33).

The elemental content of C, H, O and N of the organic fractions and the GC-MS analyses (Figure 34; Table 16) for each cycle are determined. The composition of organic phases as well as the amount of carbon still present in the aqueous fraction obtained for the catalytic tests are summarized in table 15.

**Table 15:** Weight composition of the liquid phases for the catalyst 3 determined by elemental analysis

| Temps (h) | organic phase C / O / H / N (wt. %) | Carbon in aqueous phase (wt. %) |
|---|---|---|
| 1 | 81.9 / 5.4 / 12.0 / 0.7 | - |
| 3 | 83.0 / 3.9 / 12.5 / 0.6 | 2.2 |
| 5 | - | - |

**Table 16:** The organic products attributed to numbers represented in different GC-MS chromatograms (Figure 34)

| | | | | | | |
|---|---|---|---|---|---|---|
| **1** | **2** | **3** | **4** | **5** | **6** | **7** |
| 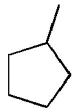 | 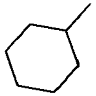 | 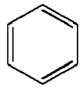 | 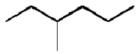 | 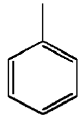 | 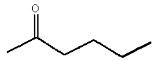 | 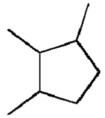 |
| **8** | **9** | **10** | **11** | **12** | **13** | **14** |
| $C_8H_{18}$ | 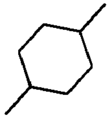 | 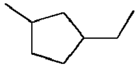 | 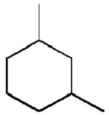 | 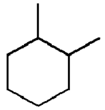 | 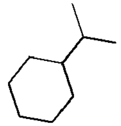 | 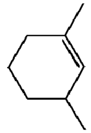 |
| **15** | **16** | **17** | **18** | **19** | **20** | **21** |
| 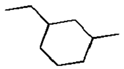 | 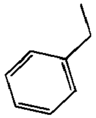 | 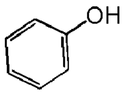 | 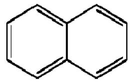 | 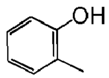 | 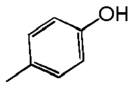 | 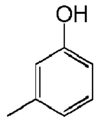 |
| **22** | **23** | **24** | **25** | **26** | **27** | **28** |
| $C_{11}H_{24}$ | 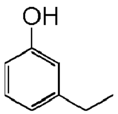 | 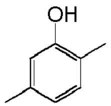 | 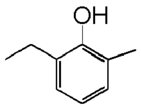 | 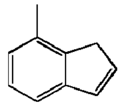 | 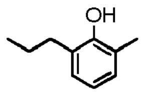 | 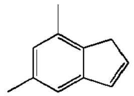 |
| **29** | **30** | **31** | **32** | **33** | **34** | **35** |
| 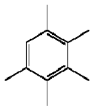 | 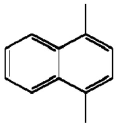 | 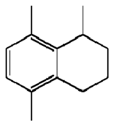 | 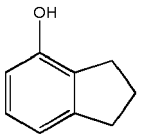 | $C_{16}H_{34}$ | $C_{17}H_{36}$ | $C_{18}H_{38}$ |
| **36** | **37** | **38** | **39** | **40** | **41** | **42** |
| 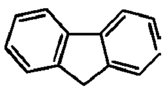 | 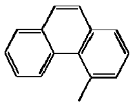 | 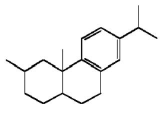 | 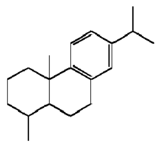 | 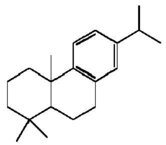 | 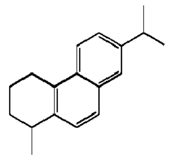 | 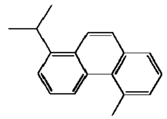 |

**Example 28: Catalytic performances of catalyst 4 in the hydro-conversion of pine wood** 10 g of the pine wood powder was mechanically mixed with 1.5 g of catalyst 4 ($Mo_{0.19}Ni_{0.18}@Fe_3O_4-Al_2O_3$) and the mixture was inserted into a batch reactor from Paar instrumentation (capacity: 300 mL) made of stainless steel.

The batch reactor was installed and heated under vacuum (~mbar) at 60 °C for 30 min under a stirring of 500 rounds/min. Then, 40 bars of hydrogen are inserted in the reactor, before heating at 470 °C (5°C/min); at 470 °C the pressure inside the reactor reached 100-110 bars. After 3 h at 470 °C, the liquid phase product was collected under vacuum to a specific trap placed into liquid nitrogen (-195 °C). The organic phase (bio-oil) was separated by freezing the aqueous phase at -30 °C with a yield of 31 %.

**Recycling of the catalyst 4 without washing**

The study of the catalyst recycling by recovering the insoluble solid after each test was performed. The solid phase contains mainly the catalyst, salt and coke.

The recycling procedure consists on first burning the carbon under continuous flow of oxygen at 500 °C for 2 h directly followed by the reduction at 500 °C under hydrogen for 3 h. The recycled catalyst was tested under the same conditions (temperature = 470 °C, hydrogen pressure = 40 bars, and time = 3 h). Three cycles were performed under those conditions, following the same recycling procedure after each cycle and the yields of organic fraction are highlighted in table 17. Without extraction, the yield decrease from 35 wt% to 29 wt% after three cycles. The separation and the removal of ashes are necessary.

**Table 17:** Yield of the organic phase of the conversion of pine wood

| Cycles | Aqueous liquid phase (wt %) | Organic liquid phase (wt %) |
|---|---|---|
| 1 | 33 | 31 |
| 2 | 32 | 30 |
| 3 | 32 | 29 |

The elemental content of C, H, O and N of the organic fractions and the GC-MS analyses (Figure 35; Table 19) for each cycle have been determined. The composition of organic phases as well as the amount of carbon still present in the aqueous fraction obtained for the catalytic tests are summarized in table 18.

**Table 18:** Weight composition of the liquid phases for the catalysts 4 determined by elemental analysis

| Cycles | organic phase C / O / H / N (wt. %) | Carbon in aqueous phase (wt. %) |
|---|---|---|
| 1 | 84.0 / 3.0 / 12.4 / 0.6 | 2.6 |
| 2 | 83.2 / 3.6 / 12.5 / 0.7 | 2.2 |
| 3 | - | - |

**Table 19:** The organic products attributed to numbers represented in different GC-MS chromatograms (Figure 35)

| | | | | | | |
|---|---|---|---|---|---|---|
| **1** | **2** | **3** | **4** | **5** | **6** | **7** |
| 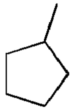 | 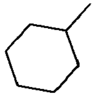 | 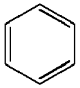 | 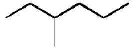 | 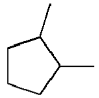 | $C_7H_{16}$ | 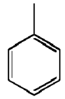 |
| **8** | **9** | **10** | **11** | **12** | **13** | **14** |
| 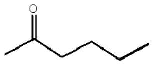 | 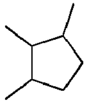 | $C_8H_{18}$ | 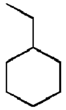 | 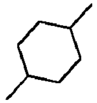 | 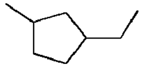 | 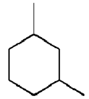 |
| **15** | **16** | **17** | **18** | **19** | **20** | **21** |
| 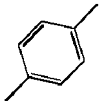 | $C_{10}H_{22}$ | 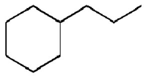 | 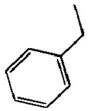 | 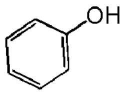 | 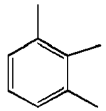 | 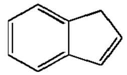 |
| **22** | **23** | **24** | **25** | **26** | **27** | **28** |
| 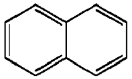 | 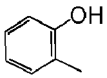 | 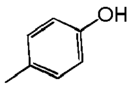 | 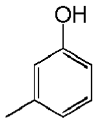 | $C_{11}H_{24}$ | 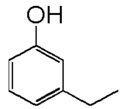 | 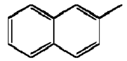 |
| **29** | **30** | **31** | **32** | **33** | **34** | **35** |
| $C_{12}H_{26}$ | 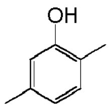 | 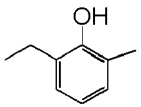 | 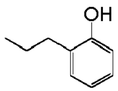 | 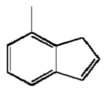 | 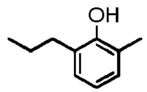 | 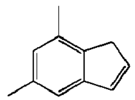 |
| **36** | **37** | **38** | **39** | **40** | **41** | **42** |
| 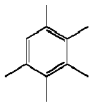 | 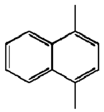 | 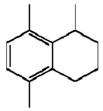 | 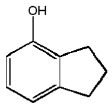 | $C_{16}H_{34}$ | $C_{17}H_{36}$ | $C_{18}H_{38}$ |

(continued)

| 43 | 44 | 45 | 46 | 47 | 48 | 49 |
|---|---|---|---|---|---|---|
| $C_{20}H_{42}$ | 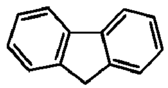 | 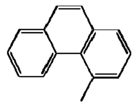 | 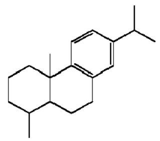 | 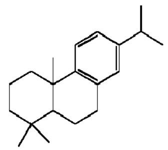 | 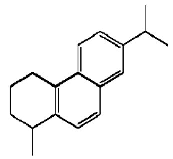 | 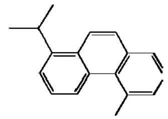 |

**Example 29: Catalytic performances of catalyst 5 in the hydro-conversion of pine wood** 10 g of the pine wood powder was mechanically mixed with 1.5 g of catalyst 5 ($Mo_{0.28}Ni_{0.21}@Al_2O_3-Fe_3O_4$), the mixture was next inserted into a batch reactor from Paar instrumentation (capacity: 300 mL) made of stainless steel. The batch reactor was installed and heated under vacuum (~mbar) at 60 °C for 30 min under a stirring of 500 rounds/min. Then, 40 bars of hydrogen are inserted in the reactor, before heating at 470 °C (5°C/min); at 470 °C the pressure inside the reactor reached 100-110 bars. After 3 h at 470 °C, the liquid phase product was collected under vacuum to a specific trap placed into liquid nitrogen (-195 °C). The organic phase (bio-oil) was separated by freezing the aqueous phase at -30 °C. 32 wt. % and 33 wt. % of organic phase and aqueous phase have been obtained respectively. The water content of the organic phase was determined by the Karl-Fischer method. The organic phase was analyzed by GC-MS (Figure 36; Table 20) and by elemental analyses of C, O, H and N.

**Table 20:** The organic products attributed to numbers represented in the GC-MS chromatogram (Figure 36)

| | | | | | | |
|---|---|---|---|---|---|---|
| **1** | **2** | **3** | **4** | **5** | **6** | **7** |
| 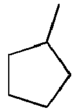 | 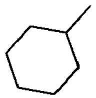 | 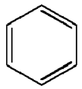 | 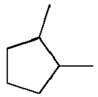 | $C_7H_{16}$ | 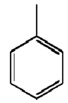 | 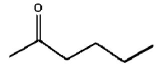 |
| **8** | **9** | **10** | **11** | **12** | **13** | **14** |
| $C_8H_{18}$ | 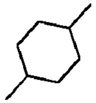 | 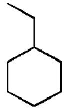 | 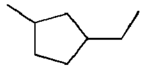 | 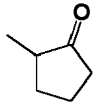 | 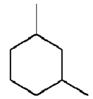 | 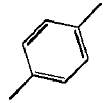 |
| **15** | **16** | **17** | **18** | **19** | **20** | **21** |
| 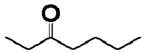 | $C_9H_{20}$ | 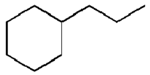 | 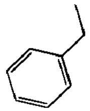 | 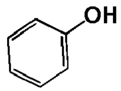 | $C_{10}H_{22}$ | 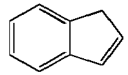 |
| **22** | **23** | **24** | **25** | **26** | **27** | **28** |
| 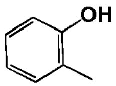 | 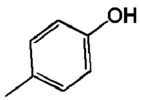 | 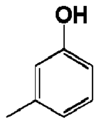 | $C_{11}H_{24}$ | 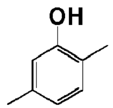 | 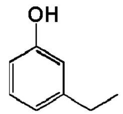 | 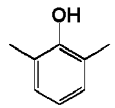 |
| **29** | **30** | **31** | **32** | **33** | **34** | **35** |
| $C_{12}H_{26}$ | 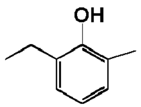 | 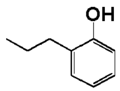 | 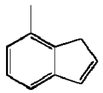 | 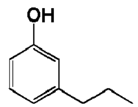 | 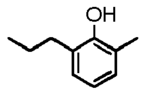 | 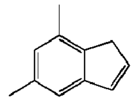 |
| **36** | **37** | **38** | **39** | **40** | **41** | **42** |
| 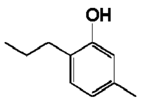 | 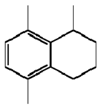 | 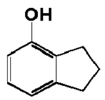 | $C_{15}H_{32}$ | $C_{16}H_{34}$ | $C_{17}H_{36}$ | $C_{18}H_{38}$ |

(continued)

| 43 | 44 | 45 | 46 | 47 | 48 | 49 |
|---|---|---|---|---|---|---|
| $C_{20}H_{42}$ | 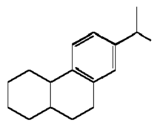 | 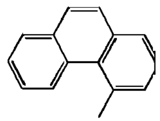 | 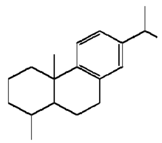 | 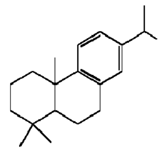 | 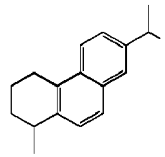 | 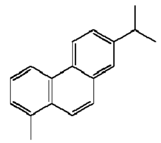 |

**Example 30: Catalytic performances of catalyst 6 in the hydro-conversion of pine wood** 10 g of the pine wood powder was mechanically mixed with 1.5 g of catalyst 6 ($Mo_{0.19}Ni_{0.18}$@$Al_2O_3$-$Fe_3O_4$), the mixture was next inserted into a batch reactor from Paar instrumentation (capacity: 300 mL) made of stainless steel.

The batch reactor was installed and heated under vacuum (~mbar) at 60 °C for 30 min under a stirring of 500 rounds/min. Then, 40 bars for the hydrogen are inserted in the reactor, before heating at 470 °C (5°C/min). The temperature was maintained at 470 °C for 3 hours; at 470 °C the pressure inside the reactor was reached 100-110 bars.

After 3 h at 470 °C, the liquid phase product was collected under vacuum to a specific trap placed into liquid nitrogen (-195 °C). The organic phase (bio-oil) was separated by freezing the aqueous phase at -30 °C to reach a yield of 33 %.

**Recycling of the catalyst 6**

The study of the catalyst recycling by recovering the insoluble solid after each test was performed. The solid phase contains mainly the catalyst, salt and coke.

The recycling procedure consists on first burning the carbon under continuous flow of oxygen at 500 °C for 2 h, followed by a two-times washing with water and then a drying at 100 °C. At the end, the catalyst was reduced at 500 °C under hydrogen for 3 h. The catalyst is separated from the carbon residue by a magnet. The recycled catalyst was tested under the same conditions (temperature = 470 °C, hydrogen pressure = 40 bars, and time = 3 h). Two cycles were performed under those conditions, following the same recycling procedure after each cycle and the yields of organic fraction are highlighted in Figure 37.

The organic phase was analyzed by GC-MS (Figure 38; Table 22) and by elemental analyses of C, O, H and N (Table 21).

**Table 21:** Weight composition of the liquid phases for the catalysts 6 determined by elemental analysis

| **Cycles** | **organic phase C / O / H / N (wt. %)** | **Carbon in aqueous Phase (wt. %)** |
|---|---|---|
| 1 | 83.8/3.1 / 12.6 / 0.5 | 2.2 |
| 2 | - | - |

**Table 22:** The organic products attributed to numbers represented in different GC-MS chromatograms (Figure 38)

| | | | | | | |
|---|---|---|---|---|---|---|
| 1 | 2 | 3 | 4 | 5 | 6 | 7 |
| 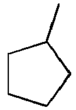 | 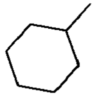 | 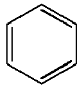 | 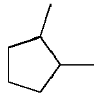 | 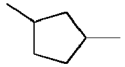 | 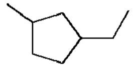 | $C_8H_{18}$ |
| 8 | 9 | 10 | 11 | 12 | 13 | 14 |
| 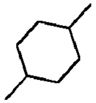 | 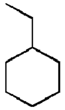 | 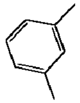 | 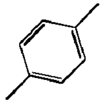 | 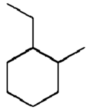 | 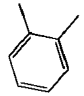 | $C_9H_{20}$ |
| 15 | 16 | 17 | 18 | 19 | 20 | 21 |
| 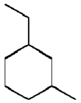 | 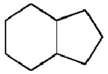 | 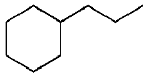 | 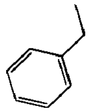 | 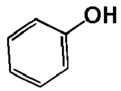 | $C_{10}H_{22}$ | 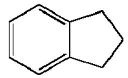 |
| 22 | 23 | 24 | 25 | 26 | 27 | 28 |
| 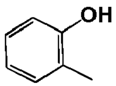 | 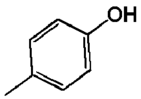 | 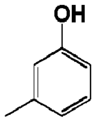 | $C_{11}H_{24}$ | 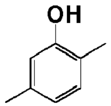 | 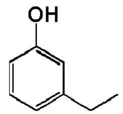 | 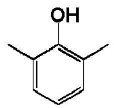 |
| 29 | 30 | 31 | 32 | 33 | 34 | 35 |
| 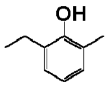 | 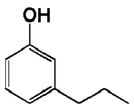 | 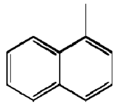 | 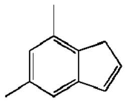 | 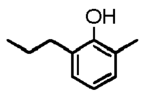 | 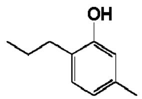 | 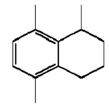 |
| 36 | 37 | 38 | 39 | 40 | 41 | 42 |
| 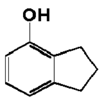 | $C_{15}H_{32}$ | $C_{16}H_{34}$ | 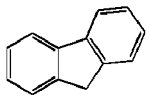 | $C_{18}H_{38}$ | $C_{20}H_{42}$ | 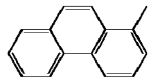 |

(continued)

| 43 | 44 | 45 | 46 | 47 | 48 | 49 |
|---|---|---|---|---|---|---|
| 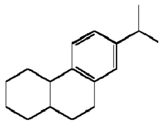 | 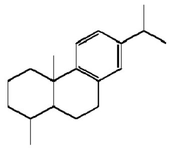 | 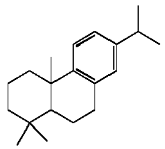 | 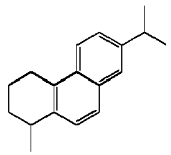 | 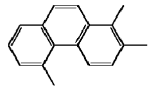 | 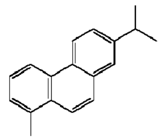 | 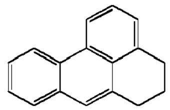 |

**Catalytic activity tests (two steps catalysis)**

**Example 31:**

**Catalytic evaluation: the catalyst is separated from the substrate**

The thermo catalytic transformation of biomass into biofuel was conducted using a batch reactor in two different configurations as shown in Figure 44. Into a stainless steel autoclave (capacity: 300 mL, T° (max.) 550°C and P (max.) ~ 140 bars), equipped with a porous sintered plate which allows separation of the catalysts from the biomass, the catalyst and the substrate are inserted. Two different arrangements are considered:

i) the catalyst material (1 g) is introduced in the bottom side of the porous sintered plate then 10 g of substrate are introduced in the upper part of the porous sintered plate (Configuration 1 on Figure 44). The batch reactor was installed and flushed with hydrogen before introducing a 40 bars hydrogen pressure into the reactor at room temperature. The mixture is then heated at 500 °C (3 °C/min) for 3 h. The volatiles produced by the biomass pyrolysis pass through the porous sintered plate and undergo hydrodeoxygenation and hydrogenation reactions over the catalyst.
ii) the substrate biomass (10 g) is introduced in the lower part (bottom side) of the reactor which is separated by the porous sintered plate from 1 g of the catalyst placed on the upper section of the porous sintered plate (Configuration 2 on Figure 44). The batch reactor was installed and flushed with hydrogen before introducing a 40 bars pressure of hydrogen into the reactor at room temperature. The mixture is then heated at 500 °C (3 °C/min) for 3 h.. In this configuration, the gas produced by the pyrolysis crosses the porous sintered plate and the catalyst and undergoes the catalytic reactions.

**Catalytic activities results:**

The catalytic activities of the multifunctional magnetic catalysts ($Mo_{0.28}Ni_{0.21}@Fe_3O_4$, catalyst 1) have been evaluated in hydro-conversion of biomass into biofuel using the reactor presented above. After each hydrotreatment and cooling steps, four fractions (a non-condensable gas phase, two liquid phases (organic and aqueous) and a solid phase (coke)) are obtained. The two liquid phases were condensed in a cold trap placed in liquid nitrogen under vacuum and the organic phase (bio-oil) was separated from the aqueous fraction by decantation. The solid residue left in the reactor consisted mainly of coke while the catalyst separated by the porous sintered plate is recovered. The amount of coke was weighted and the laws of conservation of matter allowed estimating the proportion of the gas phase. The resulted yields obtained according to both configurations are depicted in Figure 45.

The assessment of the catalyst performances is mainly based on the comparison of the yield of organic fractions and their oxygen content. The amount of the gas phase constituted of CO, $CO_2$ as well as some light alkane and alkenes ($CH_4$, $C_2H_6$, $C_2H_4$...) is shown in Figure 46 and the identification is summarized in Table 23.

**Table 23: Identification of the signals of the chromatograms represented in Figure 46**

| 1 | 2 | 3 | 4 | 5 | 6 | 7 | 8 | 9 |
|---|---|---|---|---|---|---|---|---|
| CO | $CO_2$ | 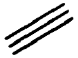 | $C_2H_6$ | 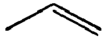 | $C_3H_8$ | 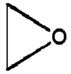 | n-$C_4H_{10}$ | 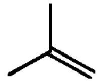 |
| **10** | **11** | **12** | **13** | **14** | **15** | **16** | **17** | **18** |
| 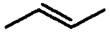 | iso-$C_4H_{10}$ | 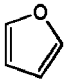 | 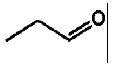 | 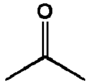 | 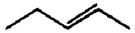 | 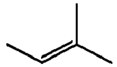 | 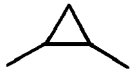 | 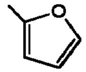 |
| **19** | **20** | | | | | | | |
| 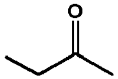 | 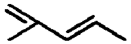 | | | | | | | |

Around 63 wt% of the biomass is converted into gas, and liquids (aqueous and organic), regardless of the reactor configuration. Indeed only 7 and 8 wt% of organics (biofuels) are obtained from the hydroconversion of lignocellulose biomass in configuration 1 and configuration 2 respectively. This low biofuel production may be explained by a delay time (from few seconds to tens of seconds) between the pyrolysis gases production and their contact with the catalyst, leading to an undesirable side reaction producing heavy tar. This heavy tar is too much stable to react precluding its transformation into biofuel. Therefore, it seems that the catalyst has to be in contact with the biomass to increase the wood conversion (up to 90 wt%) and also to enable the hydrotreatment process of the gas derived from the biomass pyrolysis through hydrogenation hydrogenolyses, decarbonylation of acids, esters, aldehydes, and unsaturated double bounds intermediates.

## Claims

1. Use of a heterogeneous solid catalyst comprising or consisting of a metal complex linked by covalent bonds and / or by Van der Waals type interactions on a magnetic carrier for the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel,
said substrate being preferably chosen among lignocellulosic biomass, coal, in particular coal powder, lignin, lignite or heavy oil, particularly lignocellulosic biomass.

2. Use of a heterogeneous solid catalyst according to claim 1, in which the pyrolysis of a substrate and the hydrotreatment reaction of gas derived from the pyrolysis of a substrate are carried out by the simultaneous mixing of hydrogen with the substrate in the presence of the catalyst, leading to a solid phase and to a gaseous phase, said gaseous phase leading by a step of cooling to the production of a liquid phase formed of liquid biofuel.

3. Use of a heterogeneous catalyst according to claim 1, wherein said catalyst is of formula $M1_kM2_1@(M_xFe_{3-x}O_4/M'_yO_z)$, where

    - "@" means " supported ";
    - M1 is at least one transition metal of group VB, VIB or VIII, especially V, Nb, W, Mo, Ru;
    - M2 is at least one transition metal of group IB, IIB or VIII, especially Cu, Zn, Ni, Co;
    - M is chosen among a transition metal of group IB, IIB, VIIIB, especially Fe, Ni, Co , Zn, Cu;
    - $M'_yO_z$ is optional with M' chosen among a transition metal of group IVB, VB, VIB, VIIB, VIII, IB, IIIA and IVA, especially Al, Si, Ce, Nb, Zn;
    - x is a real number comprised between 0 to 1;
    - y is a real number comprised between 0 to 3;
    - z is a real number comprised between 0 to 5;
    - k ranges from 0.1 to 1 mol%;
    - 1 ranges from 0.05 to 0.5 mol%,

    the said catalyst being preferably a catalyst of the formula $Mo_kCo_1@(M_xFe_{3-x}O_4-M'_yO_z)$ or a catalyst of formula $Mo_kCo_1@(M'_yO_z-M_xFe_{3-x}O_4)$ or a catalyst of formula $Mo_kNi_1@(M_xFe_{3-x}O_4-M'_yO_z)$ or a catalyst of formula $Mo_kNi_1@(M'_yO_z-M_xFe_{3-x}O_4)$,
    the said catalyst being more preferably a catalyst of formula $Mo_kCo_1@Fe_3O_4-Al_2O_3$, a catalyst of formula $Mo_kCo_1@Al_2O_3-Fe_3O_4$, a catalyst of formula $Mo_kNi_1@Fe_3O_4-Al_2O_3$ or a catalyst of formula $Mo_kNi_1@Al_2O_3-Fe_3O_4$.

4. Use of a heterogeneous catalyst according to claim 2, wherein said gaseous phase is separated from said solid phase before the step of cooling of said gaseous phase, said step of cooling of the gaseous phase leading preferably to

    - a hydrophilic liquid phase,
    - a hydrophobic liquid phase and
    - non-condensable gases;

    the said hydrophobic liquid phase being preferably the liquid biofuel.

5. Use of a heterogeneous catalyst according to claim 4, wherein said solid phase is subjected to a step of cleaning following said separation of said gaseous phase from said solid phase, said step of cleaning is preferably carried

out at a temperature of about 400 ° C to 500 ° C, especially 500 ° C, in the presence of air, or $O_2$ and $CO_2$, or $H_2O$ under atmospheric pressure, and is preferably carried out for a period of time from 2 hours to 6 hours, especially from 2 hours to 4 hours, preferably of 3 hours
said step of cleaning giving particularly a first group of by-products containing or consisting of CO, $CO_2$, $O_2$, $H_2$, light alkanes, especially $CH_4$, and alkenes.

**6.** Use of a heterogeneous catalyst according to claim 5, wherein said step of cleaning is followed by a step of separating said catalyst from said ashes.

**7.** Use of a heterogeneous catalyst according to claim 4, wherein the non-condensable gases and the hydrophilic liquid phase are heated to a temperature of about 450 ° C to give a second group of by-products containing or consisting of acetic acid, formic acid, ethanol, methanol, CO, $CO_2$, $CH_4$, $H_2$ and water vapor.

**8.** Use of a heterogeneous catalyst according to claim 2, wherein the first group of by-products according to claim 5 is mixed with the second group of by-products according to claim 7 to give a third group of by-products containing or consisting of CO, $CO_2$, $O_2$, acetic acid, formic acid, ethanol, methanol, light alkanes, especially $CH_4$, alkenes, $H_2$ and water vapor,
said third group of by-products being particularly heated to a temperature of about 900 ° C and passed through a catalytic bed to undergo a step of steamconversion to give hydrogen contained in a gaseous mixture.

**9.** A hydrotreatment process of a substrate in the presence of a pressurized hydrogen atmosphere, comprising at least one step of contacting said substrate with a heterogeneous solid catalyst comprising or consisting of a metal complex linked by covalent bonds and / or by Van der Waals type interactions on a magnetic carrier, said step of contacting leading to a solid phase and a gaseous phase which leads by a step of cooling to the production of a liquid phase formed of liquid biofuel.

**10.** A hydrotreatment process of a substrate according to claim 9, wherein said catalyst is of formula $M1_kM2_1@(M_xFe_{3-x}O_4/M'_yO_z)$, where

- "@" means " supported ";
- M1 is at least one transition metal of group VB, VIB or VIII, especially V, Nb, W, Mo, Ru;
- M2 is at least one transition metal of group IB, IIB or VIII, especially Cu, Zn, Ni, Co;
- M is chosen among a transition metal group of IB, IIB, VIIIB, especially Fe, Ni, Co, Zn, Cu;
- $M'_yO_z$ is optional with M' chosen among a transition metal of group IVB, VB, VIB, VIIB, VIII, IB, IIIA and IVA, especially Al, Si , Ce, Nb, Zn;
- x is a real number comprised between 0 to 1;
- y is a real number comprised between 0 to 3;
- z is a real number comprised between 0 to 5;
- k varies from 0.1 to 1 mol% ;
- 1 varies from 0.05 to 0.5 mol%;

the said catalyst being preferably a catalyst having the formula $Mo_kCo_1@(M_xFe_{3-x}O_4-M'_yO_z)$ or the formula $Mo_kCo_1@(M'_yO_z-M_xFe_{3-x}O_4)$, or the formula $Mo_kNi_1@(M_xFe_{3-x}O_4-M'_yO_z)$ or the formula $Mo_kNi_1@(M'_yO_z-M_xFe_{3-x}O_4)$
the said catalyst having more preferably the formula $Mo_kCo_1@Fe_3O_4-Al_2O_3$, or the formula $Mo_kCo_1@Al_2O_3-Fe_3O_4$, or the formula $Mo_kNi_1@Fe_3O_4-Al_2O_3$, or the formula $Mo_kNi_1@Al_2O_3-Fe_3O_4$.

**11.** A hydrotreatment process of a substrate according to claim 9, wherein said gaseous phase is separated from said solid phase before the step of cooling of said gaseous phase.

**12.** A hydrotreatment process of a substrate according to claim 11, wherein said solid phase is subjected to a step of cleaning following said separation of said gaseous phase from said solid phase.

**13.** A hydrotreatment process of a substrate according to claim 12, wherein said step of cleaning is followed by a step of separating said catalyst from said ashes.

**14.** A hydrotreatment process of a substrate according to claim 13, wherein said step of separating said catalyst from said ashes:

- is carried out using a magnet, or
- comprises a step of using a conveyor belt running over at least two rollers,
a first of said at least two rollers being located near the collection site of said solid phase,
a second of said at least two rollers being

in the vicinity of a first container provided with aspiration means and
over a second container, said second of at least two rollers being subjected to a magnetic field,

the solid phase being transported from said collection site to the part of the conveyor belt located on said second roller, the ashes are collected into the first container by the aspiration means and the catalyst fall into said second container when reaching the part of the conveyor belt located at a distance from the said second of at least two rollers at which the magnetic field applied to said second of at least two rollers is too weak to retain the catalyst to the belt.

**15.** A hydrotreatment process of a substrate according to claim 9, wherein process comprising at least the following steps:

- a step of contacting between said substrate and said heterogeneous solid catalyst, and leading to a solid phase and a gaseous phase;
- a step of cooling of said gaseous phase, and leading to the production of a hydrophilic liquid phase, a hydrophobic liquid phase and non-condensable gases;
- a step of cleaning of said solid phase to remove all or part of coal and heavy tar from the solid phase to produce

  - a solid phase containing said catalyst and said ashes and
  - a first group of by-products containing or consisting of CO, $CO_2$, $O_2$, $H_2$, light alkanes, especially $CH_4$, and alkenes;

- a step of separating of said catalyst and said ashes;
- a step of heating said non-condensable gases and said hydrophilic to give a second group of by-products containing or consisting of acetic acid, formic acid, ethanol, methanol, CO, $CO_2$, $CH_4$, $H_2$ and water vapor;
- a step of mixing said first group of by-products with said second group of by-products to give a third group of by products containing or consisting of CO, $CO_2$, $O_2$, acetic acid, formic acid, ethanol, methanol, $CH_4$, $H_2$ and water vapor;
- a step of steamconversion of said third group of by-products to give hydrogen contained in a gaseous mixture;
- reusing the catalyst in a new hydrotreatment process.

**16.** Heterogeneous catalyst of formula $M1_kM2_1@(M_xFe_{3-x}O_4/M'_yO_z)$, where

- "@" means " supported ";
- M1 is at least one transition metal of group VB, VIB or VIII, especially V, Nb, W, Mo, Ru;
- M2 is at least one transition metal of group IB, IIB or VIII, especially Cu, Zn, Ni, Co;
- M is chosen among a transition metal of group IB, IIB, VIIIB, especially Fe, Ni, Co, Zn, Cu;
- $M'_yO_z$ is optional with M' chosen among a transition metal of group IVB, VB, VIB, VIIB, VIII, IB, IIIA and IVA, especially Al, Si, Ce, Nb, Zn;
- x is a real number comprised between 0 to 1;
- y is a real number comprised between 0 to 3;
- z is a real number comprised between 0 to 5;
- k ranges from 0.1 to 1 mol% ;
- 1 ranges from 0.05 to 0.5 mol%;

the said catalyst being preferably a catalyst having the formula $Mo_kCo_1@(M_xFe_{3-x}O_4-M'_yO_z)$ or the formula $Mo_kCo_1@(M'_yO_z-M_xFe_{3-x}O_4)$, or the formula $Mo_kNi_1@(M_xFe_{3-x}O_4-M'_yO_z)$ or formula $Mo_kNi_1@(M'_yO_z-M_xFe_{3-x}O_4)$ the said catalyst having more preferably the formula $Mo_kCo_1@Fe_3O_4-Al_2O_3$, or the formula $Mo_kCo_1@Al_2O_3-Fe_3O_4$, or the formula $Mo_kNi_1@Fe_3O_4-Al_2O_3$, or the formula $Mo_kNi_1@Al_2O_3-Fe_3O_4$.

# FIGURES

Figure 1

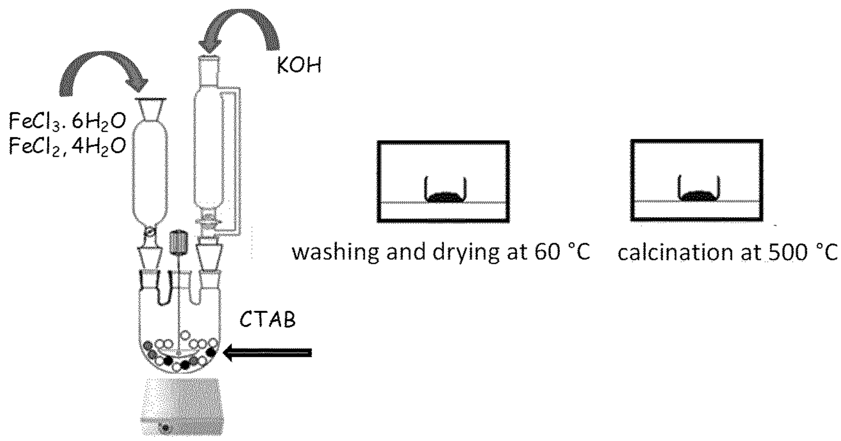


a b c

Figure 2

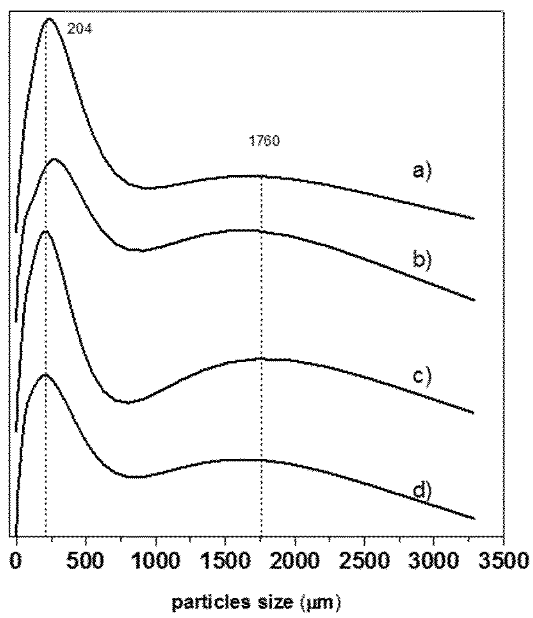

Figure 3

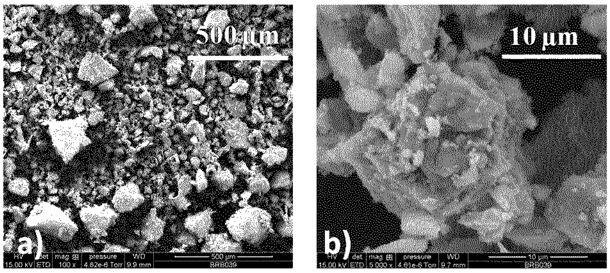


Figure 4

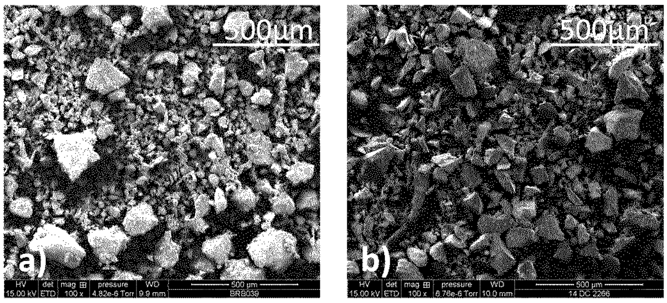


Figure 5

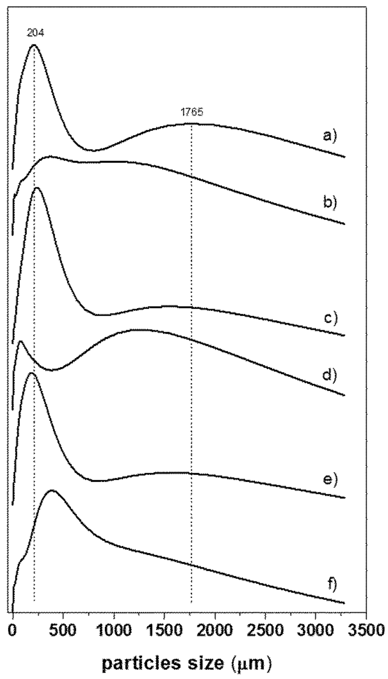

Figure 6

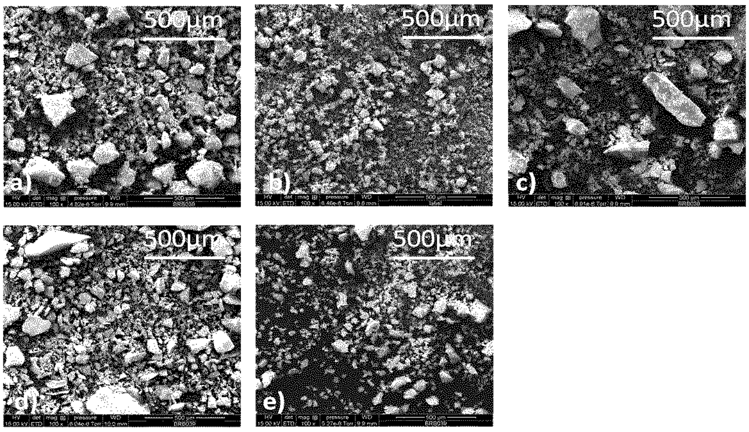


Figure 7

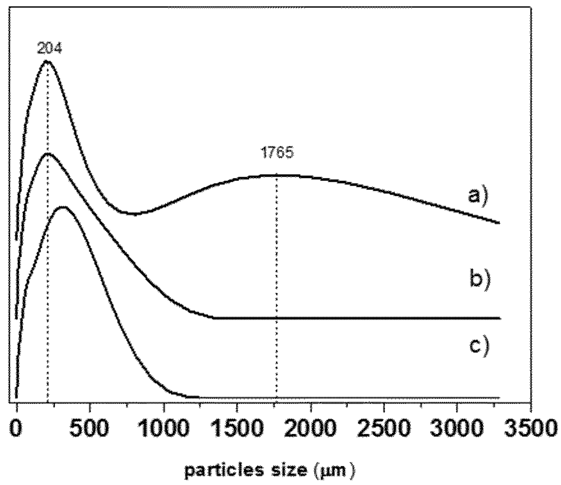


Figure 8

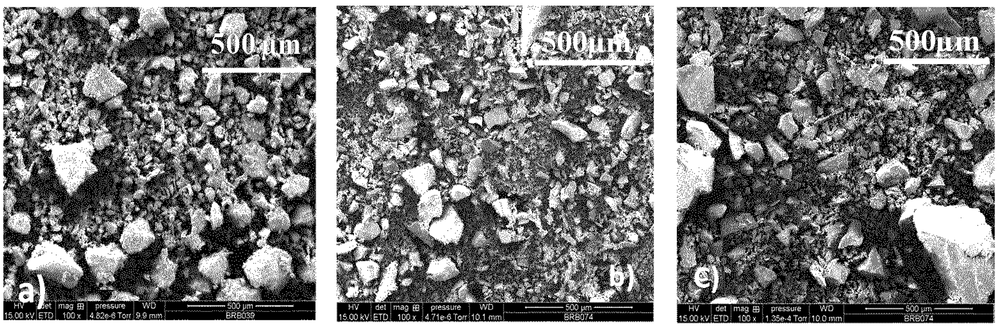

Figure 9

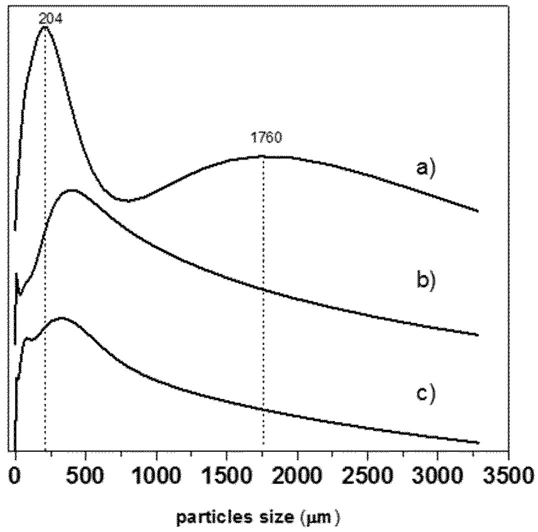


Figure 10

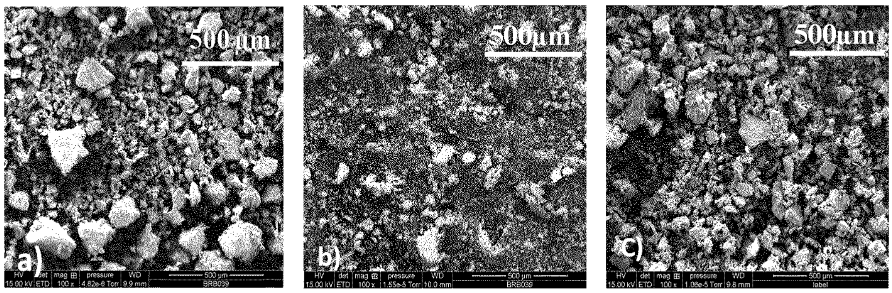


Figure 11

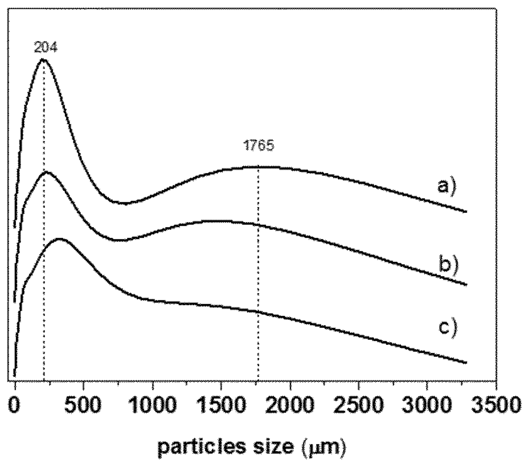

Figure 12

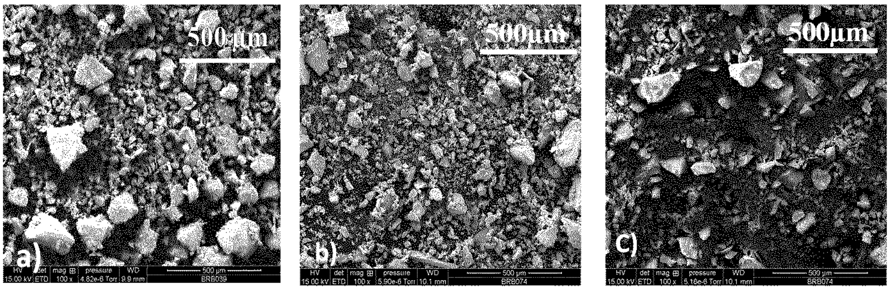


Figure 13

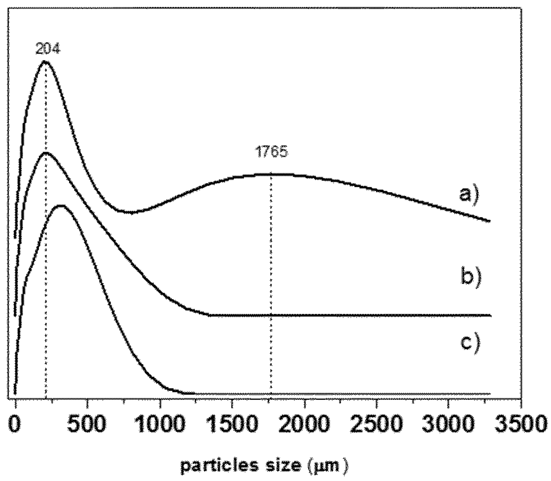


Figure 14

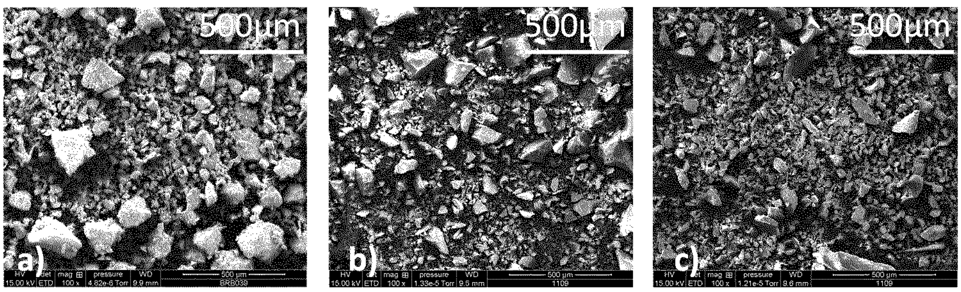

Figure 15

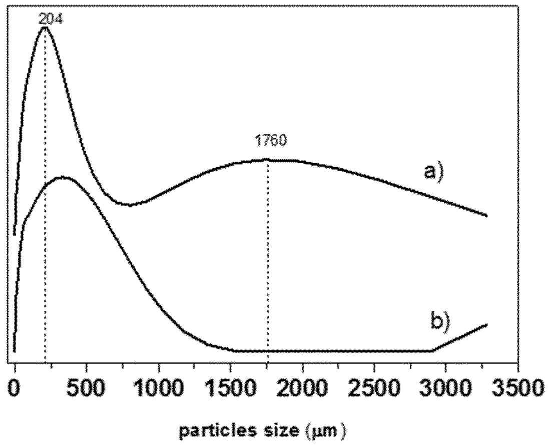


Figure 16

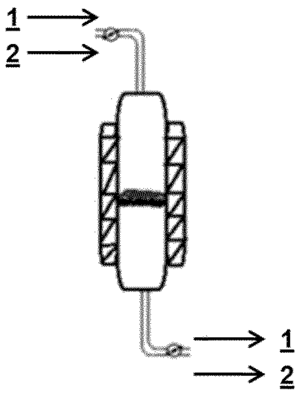


Figure 17

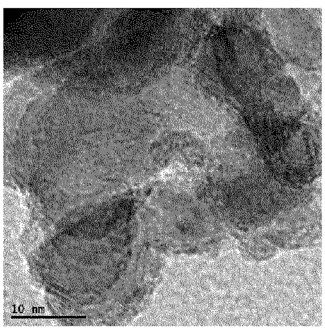

Figure 18

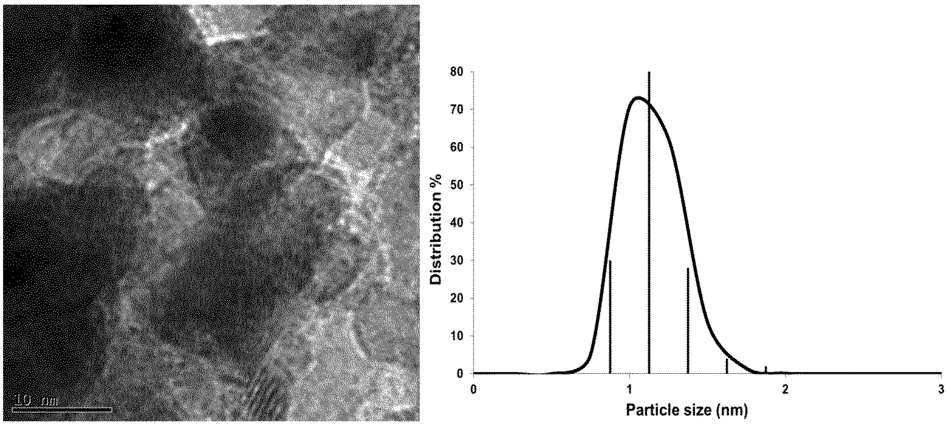


Figure 19

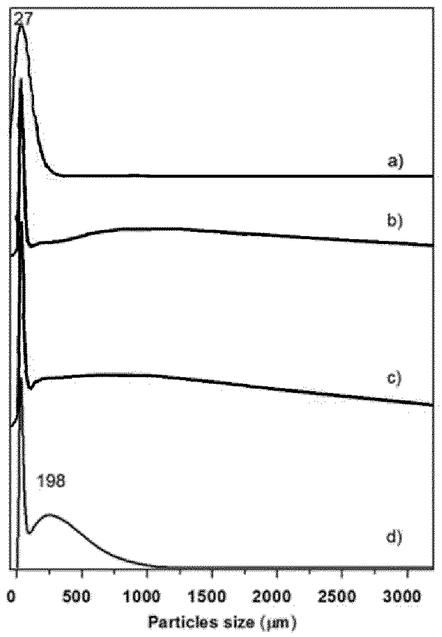


Figure 20

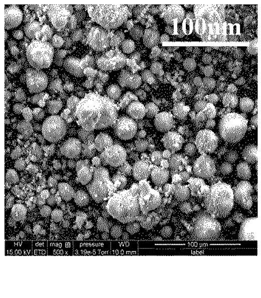

Figure 21

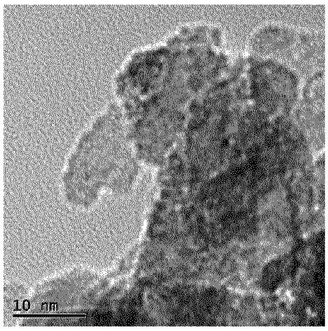


Figure 22

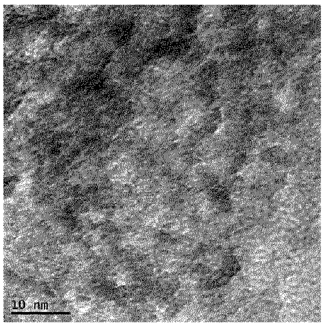


Figure 23

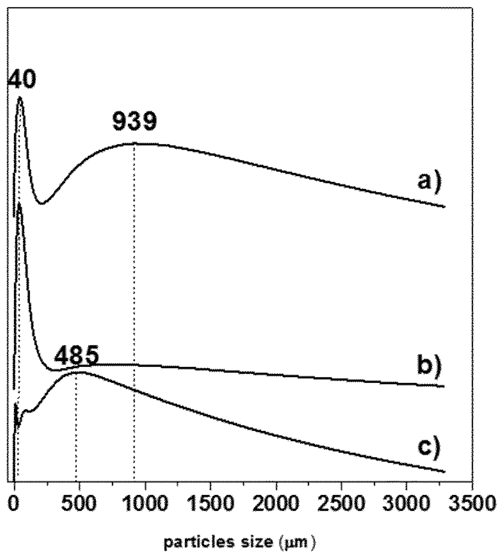

Figure 24

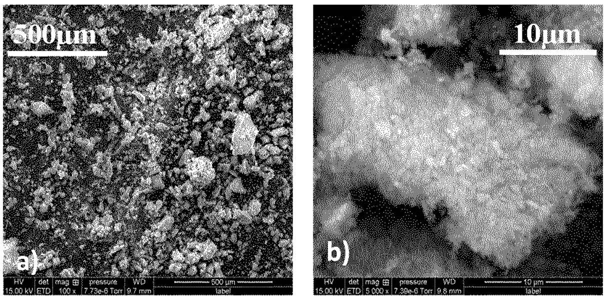


Figure 25

(A) (B)

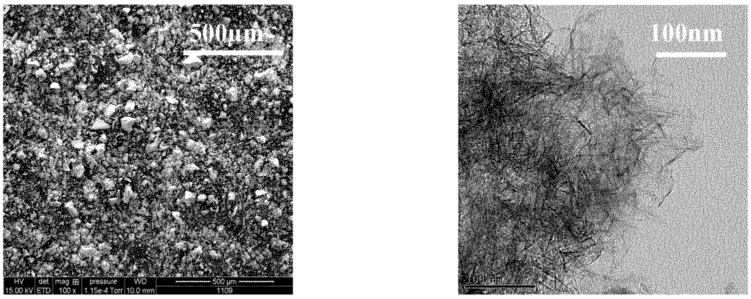


Figure 26

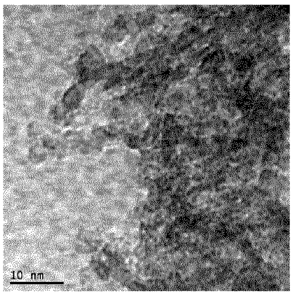


Figure 27

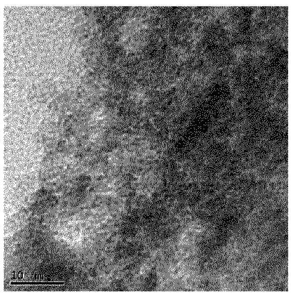

Figure 28

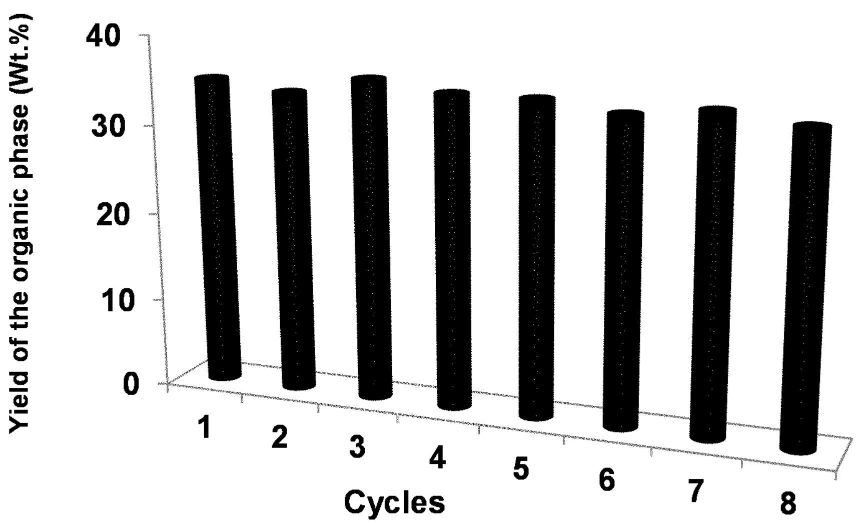


Figure 29

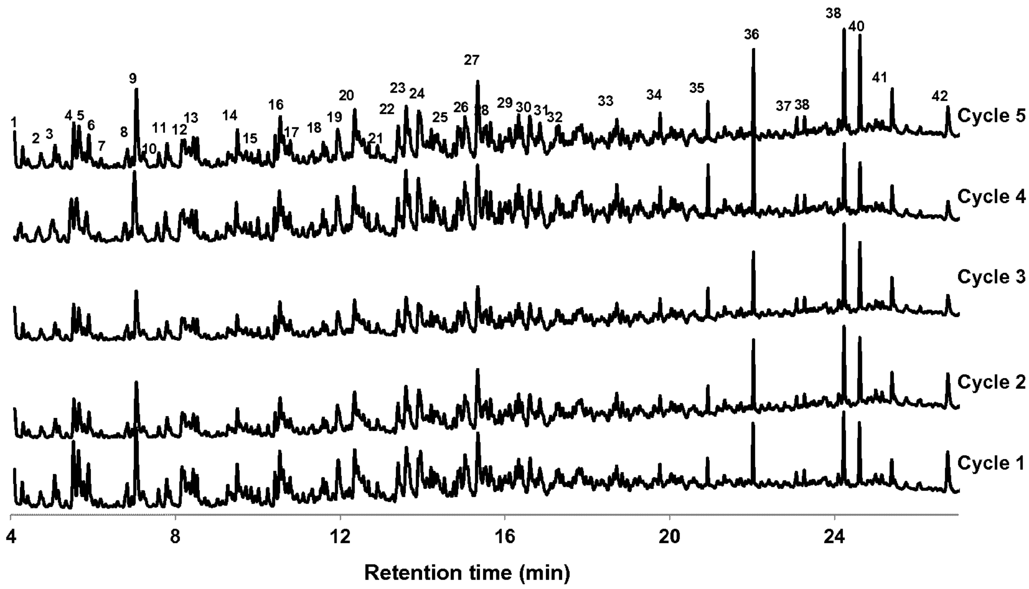


Figure 30

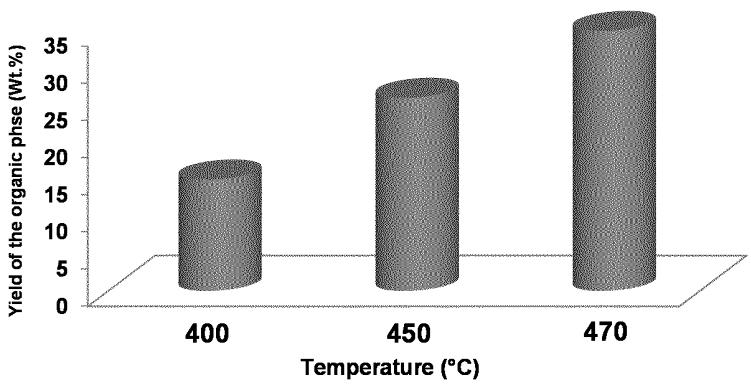

Figure 31

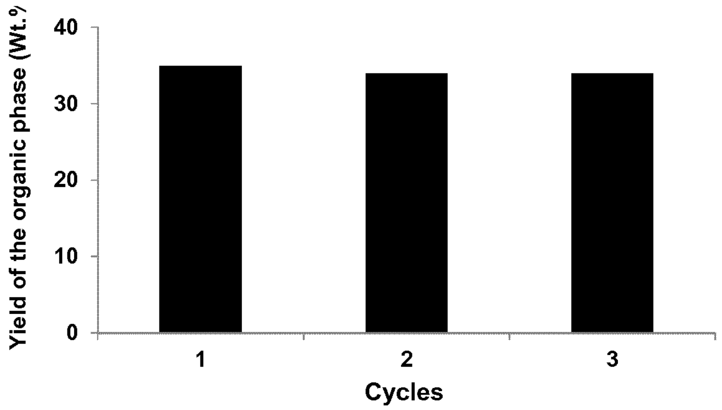


Figure 32

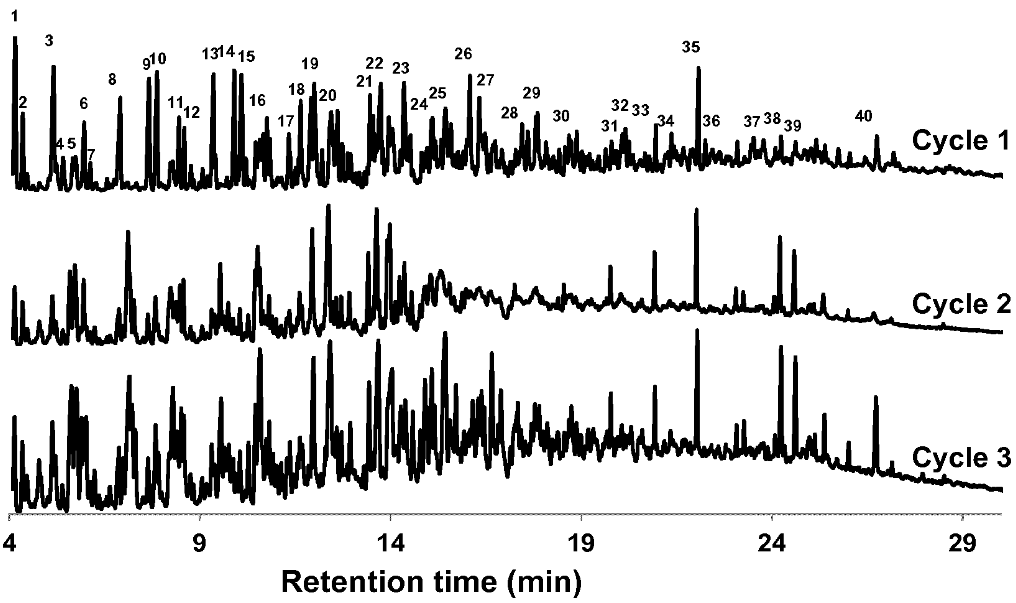


Figure 33

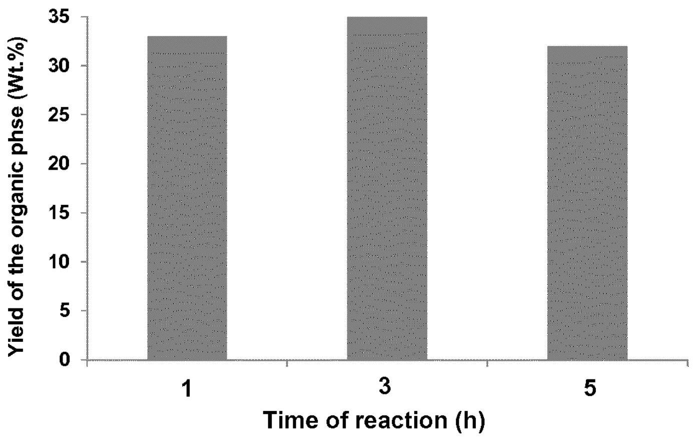

Figure 34

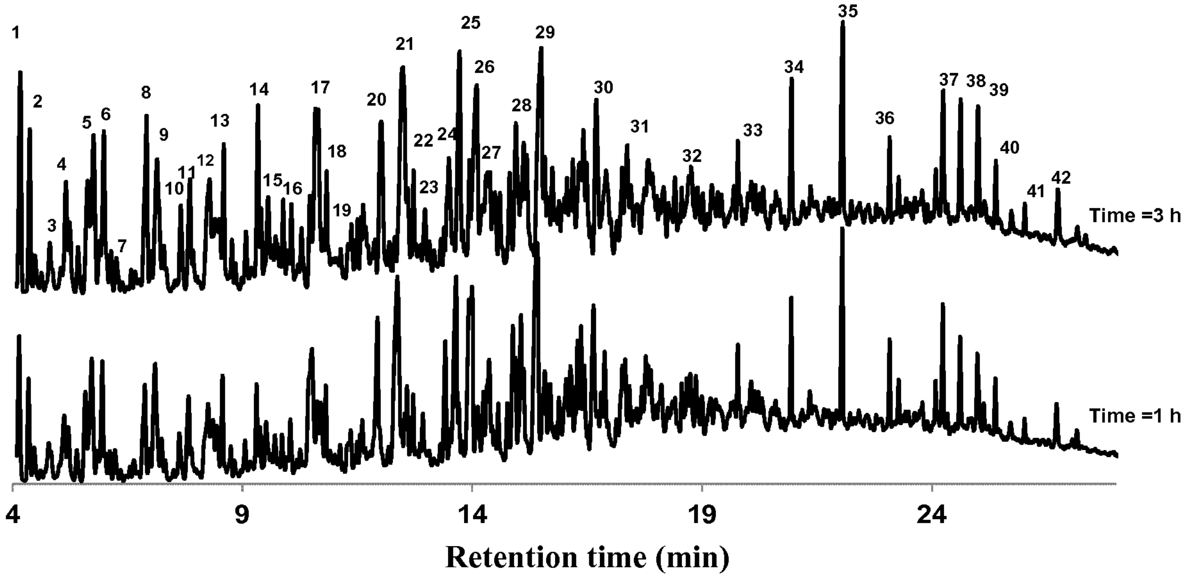


Figure 35

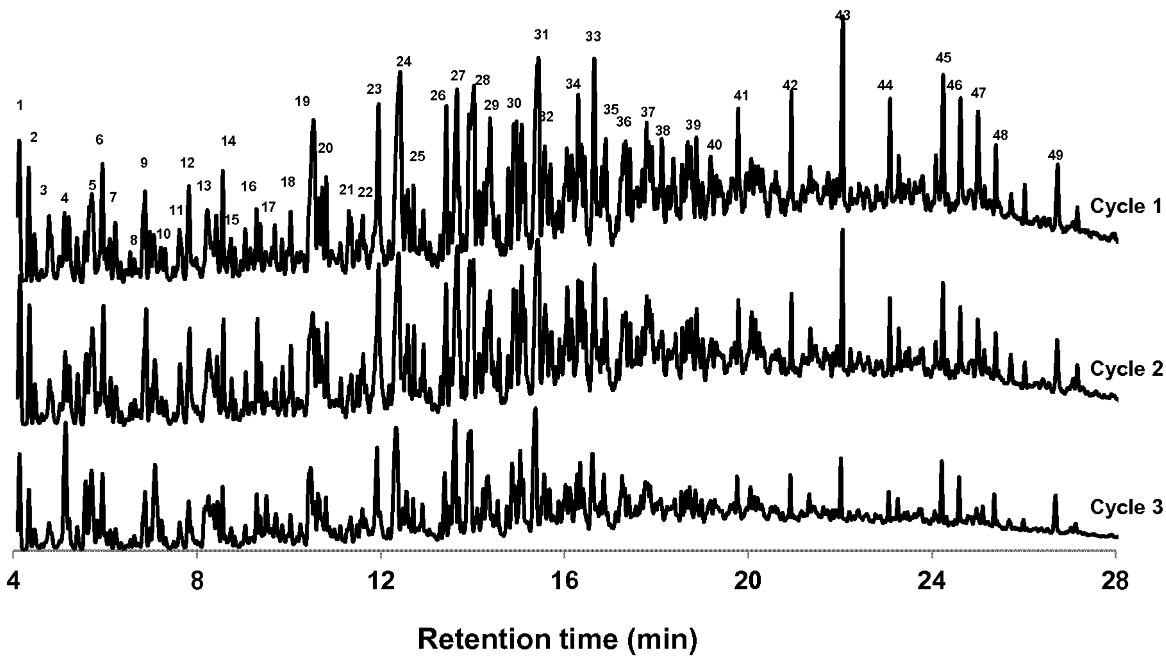

Figure 36

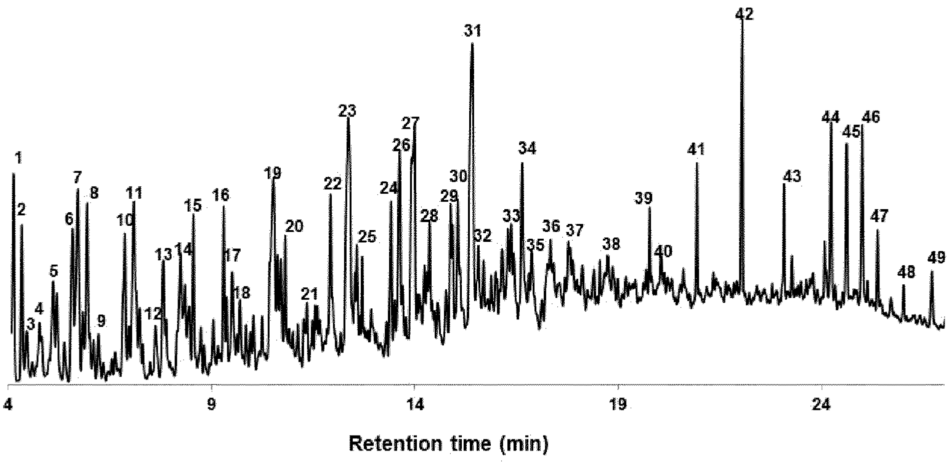


Figure 37

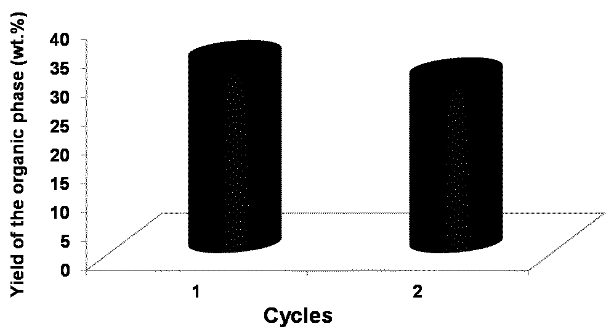


Figure 38

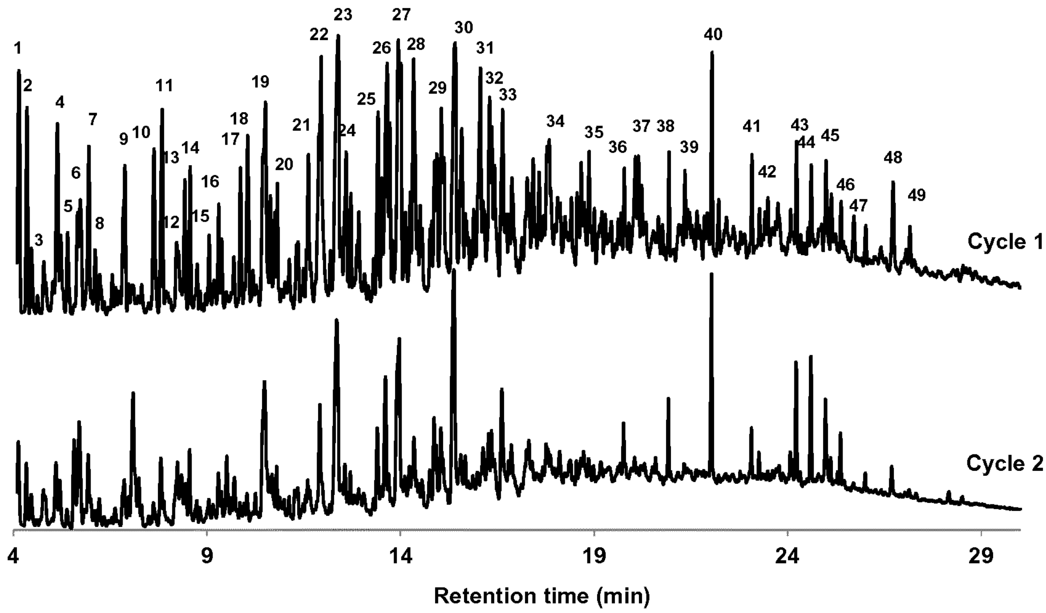

Figure 39

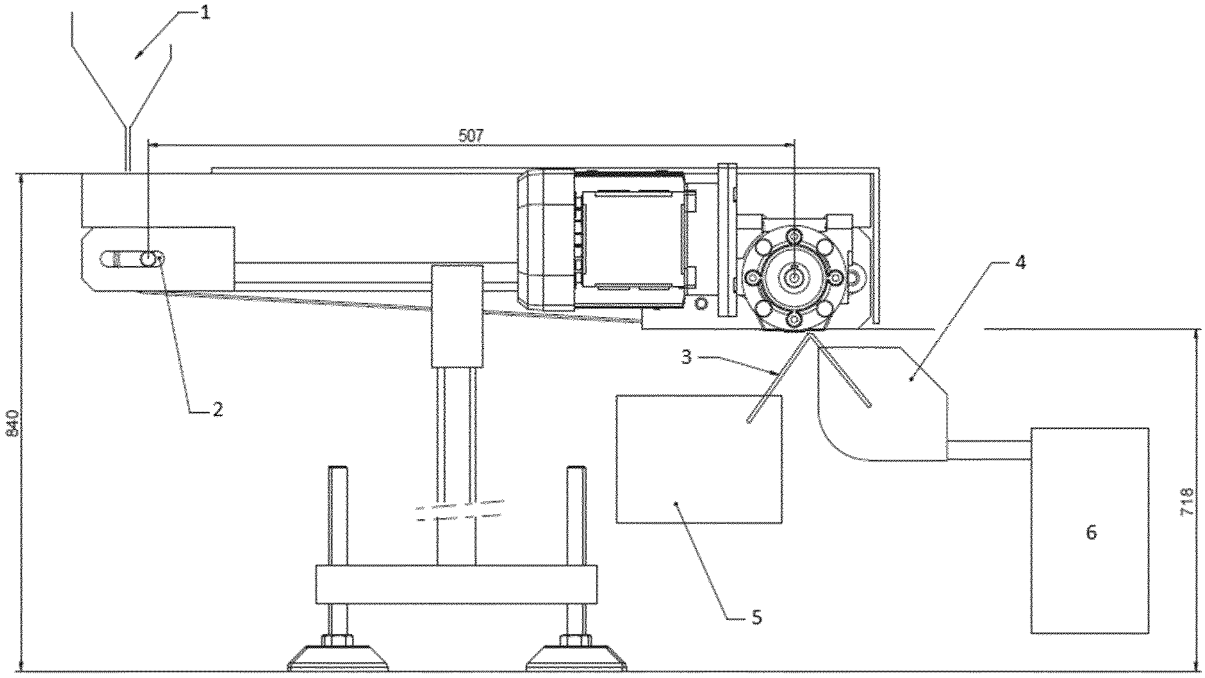


Figure 40

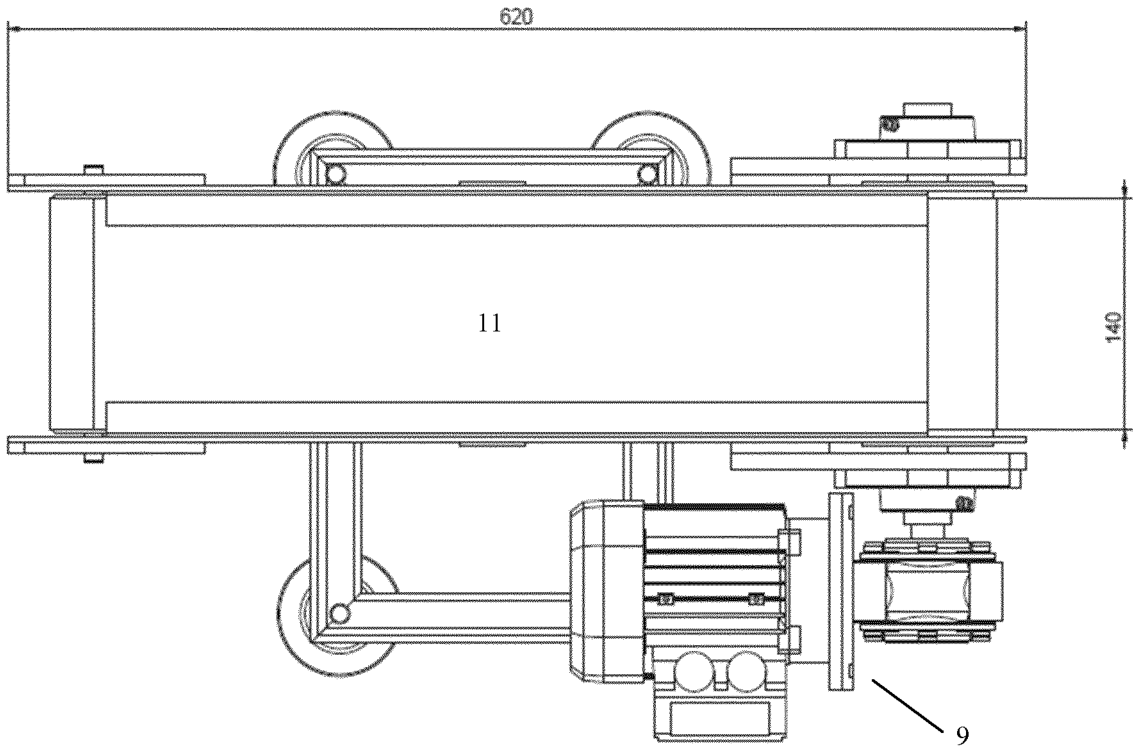

Figure 41

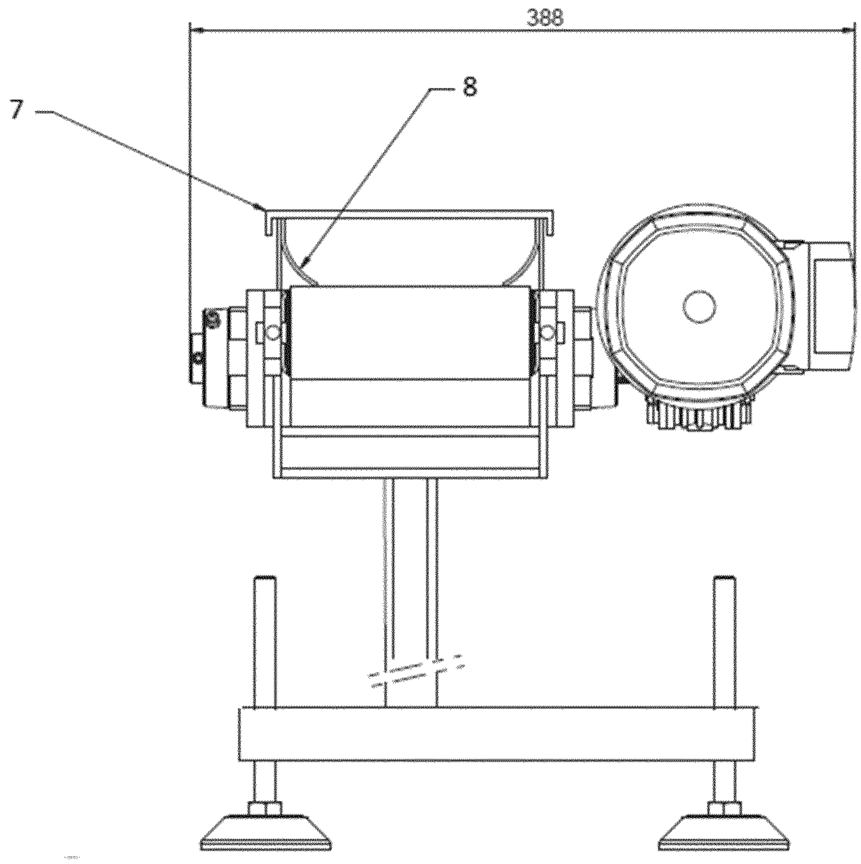


Figure 42

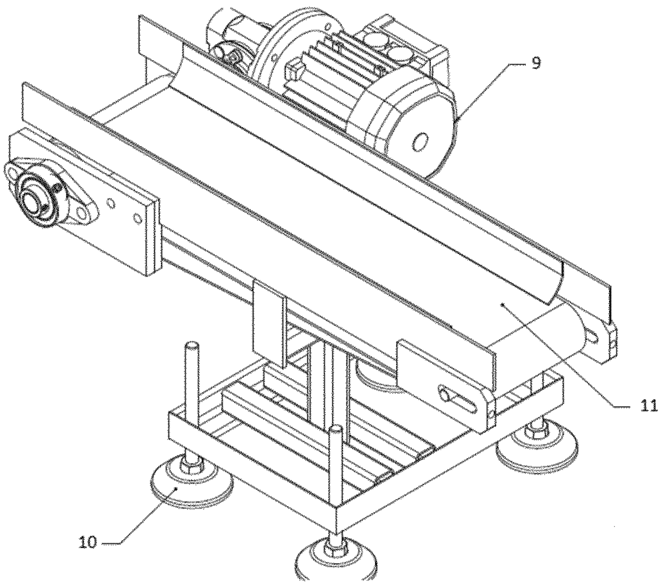

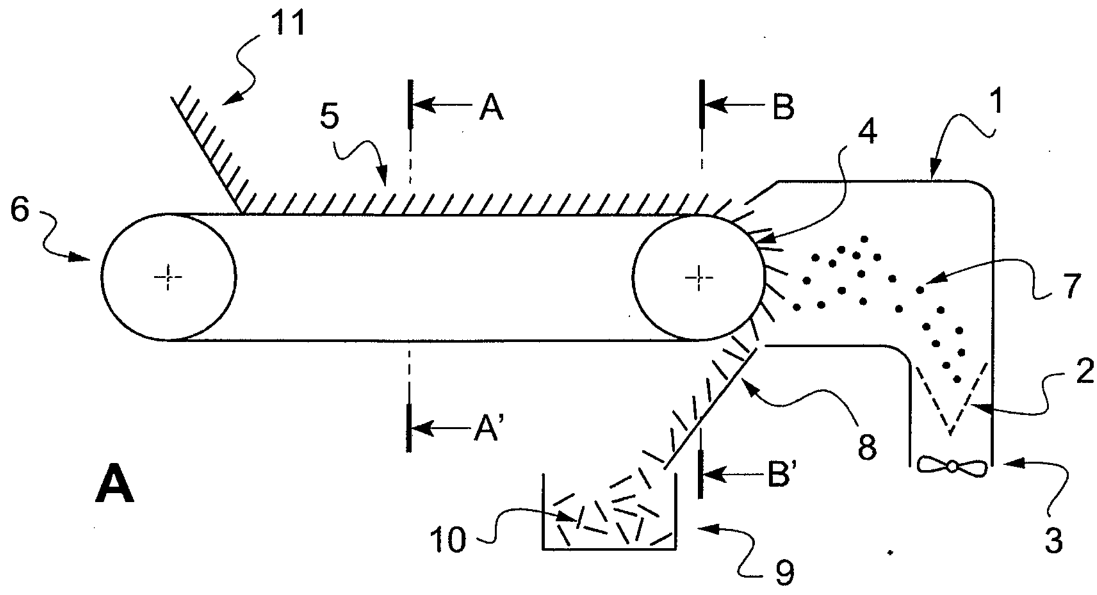


**A**

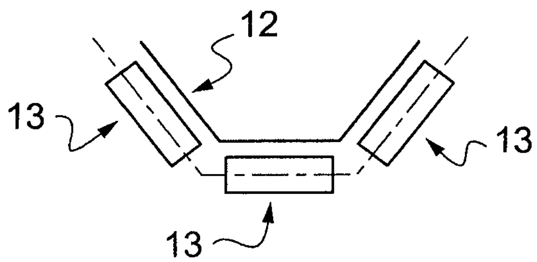


**B**

Coupe A-A'

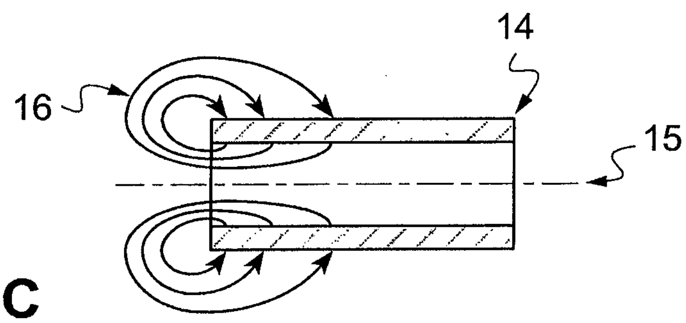


**C**

Coupe B-B'

Figure 44

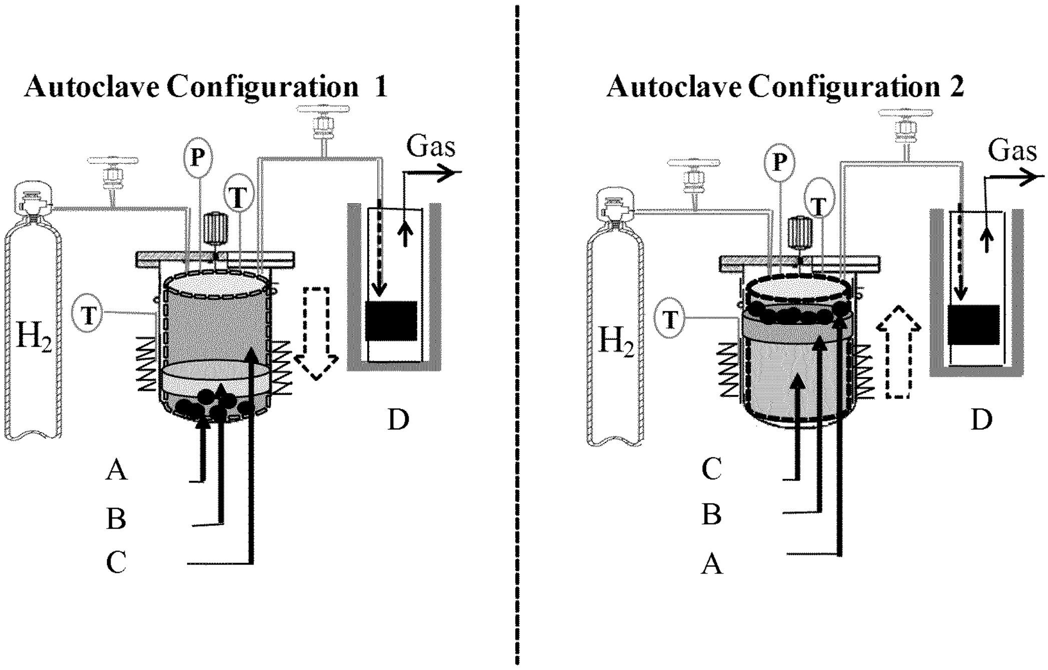


Figure 45

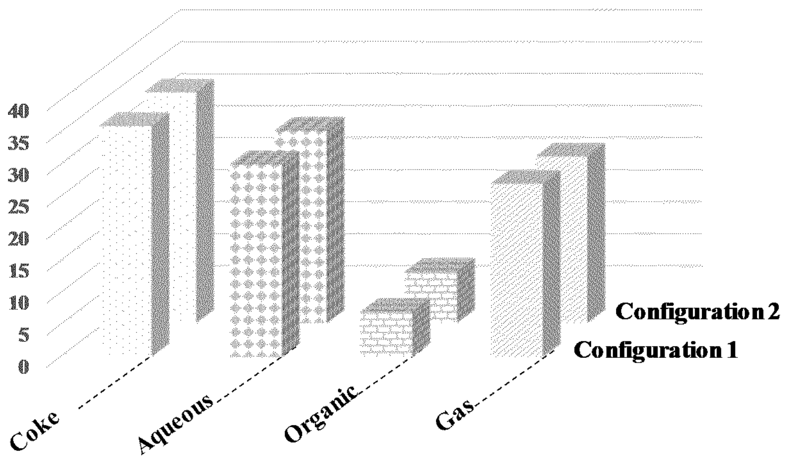

Figure 46

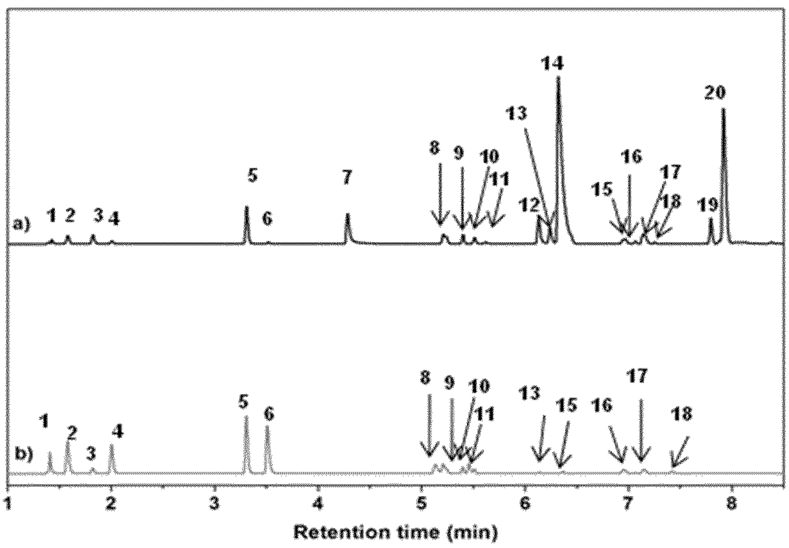
a)
b)
1
2
3
4
5
6
7
8
9
10
11
12
13
14
15
16
17
18
19
20
Retention time (min)
1
2
3
4
5
6
7
8

Europäisches Patentamt
European Patent Office
Office européen des brevets

# EUROPEAN SEARCH REPORT

Application Number
EP 15 30 6358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br><br><br><br><br><br>A | VINOD KUMAR VENKATAKRISHNAN ET AL: "Oxygen removal from intact biomass to produce liquid fuel range hydrocarbons via fast-hydropyrolysis and vapor-phase catalytic hydrodeoxygenation", GREEN CHEMISTRY, vol. 17, no. 1, 1 January 2015 (2015-01-01), pages 178-183, XP055254624, GB ISSN: 1463-9262, DOI: 10.1039/C4GC01746C<br>* pages 178-180; table 1 *<br>----- | 1-8<br><br><br><br><br><br><br><br><br><br><br>9-16 | INV.<br>C10G1/06<br>B01J23/881<br>B01J23/883<br>C10G45/04<br>C10G49/02<br>C10G3/00<br>B01J35/00 |
| A | MARTIN LINCK ET AL: "Integrated biomass hydropyrolysis and hydrotreating: a brief review", WILEY INTERDISCIPLINARY REVIEWS: ENERGY AND ENVIRONMENT, vol. 3, no. 6, 8 April 2014 (2014-04-08), pages 575-581, XP055254604, US ISSN: 2041-8396, DOI: 10.1002/wene.119<br>* page 578; figure 1 *<br>----- | 1-16 | TECHNICAL FIELDS SEARCHED (IPC)<br>C10G<br>B01J |
| X<br><br>A | US 2014/100395 A1 (FELIX LARRY G [US] ET AL) 10 April 2014 (2014-04-10)<br>* paragraphs [0007], [0009], [0010], [0012], [0018], [0052], [0055], [0058] *<br>----- | 9-15<br><br>1-8,16 | |
| A | US 2015/065764 A1 (DAUDIN ANTOINE [FR] ET AL) 5 March 2015 (2015-03-05)<br>* paragraphs [0001], [0064] *<br>-----<br>-/-- | 1-16 | |

The present search report has been drawn up for all claims

| Place of search | Date of completion of the search | Examiner |
|---|---|---|
| The Hague | 1 June 2016 | Chau, Thoi Dai |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 15 30 6358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ERIC C.D. TAN ET AL: "Direct production of gasoline and diesel fuels from biomass via integrated hydropyrolysis and hydroconversion process-A techno-economic analysis", ENVIRONMENTAL PROGRESS & SUSTAINABLE ENERGY, vol. 33, no. 2, 31 July 2014 (2014-07-31), pages 609-617, XP055254612, US ISSN: 1944-7442, DOI: 10.1002/ep.11791 * page 610; figure 1 * ----- | 1-16 | |
| A | BHAVYA BALAGURUMURTHY ET AL: "Hydropyrolysis of lignocellulosic biomass: state of the art review", BIOMASS CONVERSION AND BIOREFINERY, vol. 4, no. 1, 1 March 2014 (2014-03-01), pages 67-75, XP055254626, Berlin/Heidelberg ISSN: 2190-6815, DOI: 10.1007/s13399-013-0086-2 * page 1792 - page 1815 * ----- | 1-16 | TECHNICAL FIELDS SEARCHED (IPC) |
| A | US 2011/015454 A1 (HANKS PATRICK L [US]) 20 January 2011 (2011-01-20) * paragraphs [0010], [0035], [0046] * ----- | 1-16 | |
| X | US 2014/221193 A1 (LEE JOONG BEOM [KR] ET AL) 7 August 2014 (2014-08-07) | 16 | |
| A | * paragraphs [0001], [0055], [0058] * ----- | 1-15 | |
| X | US 2007/180760 A1 (ZHOU BING [US] ET AL) 9 August 2007 (2007-08-09) | 16 | |
| A | * paragraphs [0012], [0013], [0019] * ----- | 1-15 | |
| | -/-- | | |

The present search report has been drawn up for all claims

2

| Place of search | Date of completion of the search | Examiner |
|---|---|---|
| The Hague | 1 June 2016 | Chau, Thoi Dai |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 15 30 6358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 5 929 260 A (KORMANN CLAUDIUS [DE] ET AL) 27 July 1999 (1999-07-27)<br>* column 1, line 6 - line 11 *<br>* column 2, line 25 - line 41 *<br>* column 2, line 46 - line 48 *<br>* column 3, line 35 - line 39 *<br>* column 4, line 1 - line 11 *<br>----- | 16<br>1-15 | |
| A | US 2 264 756 A (JOHNSTON JR WILLIAM D) 2 December 1941 (1941-12-02)<br>* page 1, column 1, line 1 - line 3 *<br>----- | 1-16 | |
| A | US 2013/224823 A1 (RUF FRIEDRICH [DE] ET AL) 29 August 2013 (2013-08-29)<br>* paragraphs [0049] - [0053] *<br>----- | 1-16 | |

TECHNICAL FIELDS SEARCHED (IPC)

The present search report has been drawn up for all claims

2

| Place of search | Date of completion of the search | Examiner |
|---|---|---|
| The Hague | 1 June 2016 | Chau, Thoi Dai |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

Application Number

EP 15 30 6358

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 15 30 6358

The Search Division considers that the present European patent application does not comply with the requirements of unity of invention and relates to several inventions or groups of inventions, namely:

1. claims: 1-8

Use of a heterogeneous solid catalyst comprising or consisting of a metal complex linked by covalent bonds and/or by Van der Waals type interactions on a magnetic carrier for the implementation of a hydrotreatment reaction of gas derived from the pyrolysis of a substrate, the said hydrotreatment reaction being carried out with hydrogen and with said gas in the presence of said catalyst and leading to a gaseous phase, said gaseous phase leading by a step of cooling to the production of a liquid phase formed of liquid biofuel, said substrate being preferably chosen among lignocellulosic biomass, coal, in particular coal powder, lignin, lignite or heavy oil, particularly lignocellulosic biomass

---

2. claims: 9-15

A hydrotreatment process of a substrate in the presence of a pressurized hydrogen atmosphere, comprising at least one step of contacting said substrate with a heterogeneous solid catalyst comprising or consisting of a metal complex linked by covalent bonds and/or by Van der Waals type interactions on a magnetic carrier, said step of contacting leading to a solid phase and a gaseous phase which leads by a step of cooling to the production of a liquid phase formed of liquid biofuel

---

3. claim: 16

Heterogeneous catalyst of formula M1k M2l@(MxFe3-xO4/M'yOz )

---

## ANNEX TO THE EUROPEAN SEARCH REPORT ON EUROPEAN PATENT APPLICATION NO. EP 15 30 6358

This annex lists the patent family members relating to the patent documents cited in the above-mentioned European search report. The members are as contained in the European Patent Office EDP file on
The European Patent Office is in no way liable for these particulars which are merely given for the purpose of information.

01-06-2016

| Patent document cited in search report | Publication date | Patent family member(s) | Publication date |
|---|---|---|---|
| US 2014100395 A1 | 10-04-2014 | AU 2013327484 A1 | 30-04-2015 |
| | | CA 2887334 A1 | 10-04-2014 |
| | | CN 104822806 A | 05-08-2015 |
| | | EP 2904073 A1 | 12-08-2015 |
| | | JP 2015530476 A | 15-10-2015 |
| | | KR 20150058482 A | 28-05-2015 |
| | | US 2014100395 A1 | 10-04-2014 |
| | | WO 2014055527 A1 | 10-04-2014 |
| US 2015065764 A1 | 05-03-2015 | AR 090304 A1 | 05-11-2014 |
| | | AU 2013234159 A1 | 16-10-2014 |
| | | CA 2863900 A1 | 19-09-2013 |
| | | CN 104411802 A | 11-03-2015 |
| | | CO 7101237 A2 | 31-10-2014 |
| | | EP 2825617 A1 | 21-01-2015 |
| | | FR 2987842 A1 | 13-09-2013 |
| | | US 2015065764 A1 | 05-03-2015 |
| | | WO 2013135986 A1 | 19-09-2013 |
| US 2011015454 A1 | 20-01-2011 | AU 2010273344 A1 | 09-02-2012 |
| | | CA 2767828 A1 | 20-01-2011 |
| | | CN 102471698 A | 23-05-2012 |
| | | EP 2454344 A2 | 23-05-2012 |
| | | JP 2012533655 A | 27-12-2012 |
| | | SG 177561 A1 | 29-03-2012 |
| | | US 2011015454 A1 | 20-01-2011 |
| | | WO 2011008920 A2 | 20-01-2011 |
| US 2014221193 A1 | 07-08-2014 | AU 2012317149 A1 | 03-04-2014 |
| | | CN 103826743 A | 28-05-2014 |
| | | KR 20130035639 A | 09-04-2013 |
| | | US 2014221193 A1 | 07-08-2014 |
| | | WO 2013047978 A1 | 04-04-2013 |
| US 2007180760 A1 | 09-08-2007 | NONE | |
| US 5929260 A | 27-07-1999 | DE 4339139 A1 | 24-05-1995 |
| | | EP 0729389 A1 | 04-09-1996 |
| | | JP H09504991 A | 20-05-1997 |
| | | US 5929260 A | 27-07-1999 |
| | | WO 9513874 A1 | 26-05-1995 |
| US 2264756 A | 02-12-1941 | NONE | |
| US 2013224823 A1 | 29-08-2013 | CN 103097515 A | 08-05-2013 |
| | | DE 102010034083 A1 | 16-02-2012 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 15 30 6358

This annex lists the patent family members relating to the patent documents cited in the above-mentioned European search report. The members are as contained in the European Patent Office EDP file on
The European Patent Office is in no way liable for these particulars which are merely given for the purpose of information.

01-06-2016

| Patent document cited in search report | Publication date | Patent family member(s) | Publication date |
|---|---|---|---|
| | | EP 2603577 A1 | 19-06-2013 |
| | | US 2013224823 A1 | 29-08-2013 |
| | | WO 2012020121 A1 | 16-02-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **G. CENTI ; P. LANZAFAME ; S. PERATHONER.** *Catal. Today,* 2011, vol. 167, 14-30
- **H. DE LASA ; E. SALAICES ; J. MAZUMDER ; R. LUCKY.** *Chem. Rev.,* 2011, vol. 111, 5404-5433
- **F. MELLIGAN ; K. DUSSAN ; R. AUCCAISE ; E.H. NOVOTNY ; J.J. LEAHY ; M.H.B. HAYES ; W. KWAPINSKI.** *Bioresour. Technol.,* 2012, vol. 108, 258-263
- **K. MURATA ; Y.Y. LIU ; M. INABA ; I. TAKAHARA.** *J. Anal. Appl. Pyrolysis,* 2012, vol. 94, 75-82
- **G. CENTI ; P. LANZAFAME ; S. PERATHONER.** *Catal. Today.,* 2011, vol. 167, 14-30
- **P. BASU.** Biomass Gasification and Pyrrolysis, Pratical design and theory. Elsevier, 2010
- **F.F. MIN ; M.X. ZHANG ; Y. ZHANG ; Y. CAO ; W.P. PAN.** *J. Anal. Appl. Pyrolysis,* 2011, vol. 92, 250-257
- **D.A. FORT ; R.C. REMSING ; R.P. SWATLOSKI ; P. MOYNA ; G. MOYNA ; R.D. ROGERS.** *Green Chem.,* 2007, vol. 9, 63-69
- **Y.-C. LIN ; G.W. HUBER.** *Energy Environ. Sci.,* 2009, vol. 2, 68-80
- **R. RINALDI ; F. SCHÜTH.** *Energy Environ. Sci.,* 2009, vol. 2, 610-626
- **D. SHEN ; R. XIAO ; S. GU ; K. LUO.** *RSC Adv.,* 2012, vol. 1, 1641-1660
- **Y. WANG ; I. NKURIKIYIMFURA ; Z. PAN.** *Chem. Eng. Commun.,* 2015, vol. 202, 616-621
- **E. ALSBOU ; B. HELLEUR.** *Energy Fuels,* 2014, vol. 28, 3224-3235
- **K. CROMBIE ; O. MASEK.** *Bioresour. Technol.,* 2014, vol. 162, 148-156
- **Q. DANG ; C. YU ; Z. LUO.** *Fuel.,* 2014, vol. 131, 36-42
- **D.A. RUDDY ; J.A. SCHAIDLE ; J.R. FERRELL, III ; J. WANG ; L. MOENS ; J.E. HENSLEY.** *Green Chem.,* 2014, vol. 16, 454-490
- **W. AL MAKSOUD ; C. LARABI ; A. GARRON ; K.C. SZETO ; J.J. WALTER ; C.C. SANTINI.** *Green Chem.,* 2014, vol. 16, 3031-3038
- **C. LARABI ; W.A. MAKSOUD ; K.C. SZETO ; A. GARRON ; P.P. ARQUILLIERE ; J.J. WALTER ; C.C. SANTINI.** *Appl. Catal. A,* 2015, vol. 495, 162-172